# EUROPEAN PATENT APPLICATION

(11) **EP 4 044 671 A1**
(43) Date of publication of application: **17.08.2022**
(21) Application number: 20883830.0
(22) Date of filing: 20.10.2020
(51) Int. Cl.: H04W 36/00

(54) **COMMUNICATION METHOD AND APPARATUS, AND DEVICE**

(30) Priority: 07.11.2019 CN 201911083630
(71) Applicant: Huawei Technologies Co., Ltd., Longgang District Shenzhen, Guangdong 518129 (CN)
(72) Inventor: YAO, Chuting, Shenzhen, Guangdong 518129 (CN); XU, Haibo, Shenzhen, Guangdong 518129 (CN); CAI, Yu, Shenzhen, Guangdong 518129 (CN); WANG, Jian, Shenzhen, Guangdong 518129 (CN)
(74) Representative: Gill Jennings & Every LLP
(86) International application number: PCT/CN2020/122177
(87) International publication number: WO 2021/088638

(57) **Abstract**

This application relates to a communications method and apparatus, and a device. A second terminal device receives a first message when the second terminal device camps on a second network device. The first message is used to indicate the second terminal device to camp on a first network device, and the first network device and the second network device correspond to different PLMNs. The second terminal device camps on the first network device. In embodiments of this application, two terminal devices camping on network devices corresponding to different PLMNs may camp on a same network device. Therefore, if the two terminal devices need to communicate through a sidelink, a mechanism such as a HARQ mechanism can be normally implemented. This improves reliability of information transmission between terminal devices.

## Description

### CROSS-REFERENCE TO RELATED APPLICATIONS

This application claims priority to Chinese Patent Application No. 201911083630.9, filed with the China National Intellectual Property Administration on November 7, 2019 and entitled "COMMUNICATIONS METHOD AND APPARATUS, AND DEVICE", which is incorporated herein by reference in its entirety.

### TECHNICAL FIELD

This application relates to the field of communications technologies, and in particular, to a communications method and apparatus, and a device.

### BACKGROUND

Currently, a terminal device generally implements communication with another device by using a subscriber identity module (subscriber identity module, SIM) card disposed in the terminal device. Each SIM card has a corresponding public land mobile network (public land mobile network, PLMN). For example, a SIM card 1 corresponds to an operator 1, and a SIM card 2 corresponds to an operator 2.

In addition, information may be transmitted between terminal devices through a sidelink (sidelink, SL). To improve information transmission reliability, a hybrid automatic repeat request (hybrid automatic repeat request, HARQ) mechanism is introduced to a sidelink. To be specific, after a terminal device 1 sends data to a terminal device 2, the terminal device 2 may send feedback information corresponding to the data to the terminal device 1, to determine whether the data is successfully transmitted. A terminal device sends data on one frequency band but listens to information from another device on a plurality of frequency bands. Even if SIM cards installed in the terminal device 1 and the terminal device 2 correspond to different operators, and frequency bands supported by the different operators may be different, after the terminal device 1 sends data to the terminal device 2, because the terminal device 1 can listen to information from another device on a plurality of frequency bands, the terminal device 1 can obtain feedback information from the terminal device 2 through listening. However, because a frequency band on which the terminal device 1 sends the data is different from a frequency band on which the feedback information is located, the terminal device 1 cannot determine whether the feedback information is the feedback information corresponding to the data, and the terminal device 1 considers that the feedback information of the data is not obtained.

It can be learned that the HARQ mechanism cannot be implemented currently for terminal devices corresponding to different operators. Consequently, information transmission reliability is reduced.

### SUMMARY

Embodiments of this application provide a communications method and apparatus, and a device, to improve information transmission reliability.

According to a first aspect, a first communications method is provided. The method includes: A second terminal device receives a first message when the second terminal device camps on a second network device. The first message is used to indicate the second terminal device to camp on a first network device, and the first network device and the second network device correspond to different PLMNs. The second terminal device camps on the first network device.

The method may be performed by a first communications apparatus. The first communications apparatus may be a communications device, or may be a communications apparatus, for example, a chip, that can support a communications device in implementing a function required in the method. For example, the first communications apparatus is the second terminal device, or is a chip that is disposed in the second terminal device and that is configured to implement a function of the second terminal device, or is another component that is configured to implement a function of the second terminal device. In the following description process, an example in which the first communications apparatus is the second terminal device is used.

In this embodiment of this application, if the second terminal device camps on the second network device, the second terminal device may camp on the first network device. A first terminal device camps on the first network device. In other words, if two terminal devices camp on network devices in different PLMNs, one of the terminal devices may camp on a network device in which the other terminal device is located, so that the two terminal devices camp on a same network device. Therefore, if the two terminal devices need to communicate through a sidelink, a mechanism such as a HARQ mechanism can be normally implemented. This improves reliability of information transmission between terminal devices.

With reference to the first aspect, in a first possible implementation of the first aspect, the receiving a first message includes:
receiving the first message from the second network device; or
receiving the first message from the first terminal device, where the first terminal device camps on the first network device; or
receiving the first message from the first network device.

The second terminal device may camp on the first network device based on different factors. For example, the second network device may indicate the second terminal device to camp on the first network device, and therefore the second terminal device receives the first message from the second network device; or the first terminal device may indicate the second terminal device to camp on the first network device, and therefore the second terminal device receives the first message from the first terminal device; or the first network device may indicate the second terminal device to camp on the first network device, and therefore the second terminal device receives the first message from the first network device. There are many relatively flexible implementations.

With reference to the first possible implementation of the first aspect, in a second possible implementation of the first aspect, before the receiving the first message from the second network device, the method further includes:
The second terminal device sends a request message to the second network device, where the request message is used to request to camp on the first network device; or
the second terminal device sends a third message to the first network device, where the third message is used to request to camp on the first network device.

For example, when the second terminal device needs to communicate with the first terminal device, or in a process in which the second terminal device communicates with the first terminal device, it is determined that the second network device on which the second terminal device camps and the first network device on which the first terminal device camps correspond to different PLMNs. In this case, the second terminal device may request to camp on the first network device, so that the second terminal device and the first terminal device work in a same network device. This can avoid a problem that a HARQ mechanism cannot be implemented due to different PLMNs. The second terminal device may send a request to the second network device, or may directly request the first network device. There are many manners.

With reference to the first aspect, the first possible implementation of the first aspect, or the second possible implementation of the first aspect, in a third possible implementation of the first aspect, that the second terminal device camps on the first network device includes:

The second terminal device camps on the first network device based on information about the first network device through cell reselection.

For example, the first message may include the information about the first network device, or the second terminal device may obtain the information about the first network device in another manner. For example, the second terminal device may obtain the information about the first network device from the first terminal device by interacting with the first terminal device. For example, the information about the first network device is an ID of the first network device, or may be other information of the first network device. After obtaining the information about the first network device, the second terminal device may determine to reselect the first network device. In this case, the second terminal device only needs to camp on, through cell reselection, a cell provided by the first network device. The second terminal device performs cell reselection when learning of the information about the first network device, so that cell reselection is more targeted, and there is no need to measure an excessive quantity of cells during cell reselection. Therefore, cell reselection efficiency is higher.

With reference to any one of the first aspect and the first possible implementation of the first aspect to the third possible implementation of the first aspect, in a fourth possible implementation of the first aspect, the method further includes:
The second terminal device establishes a sidelink connection to the first terminal device in the first network device.

After the second terminal device camps on the first network device, the second terminal device may establish the sidelink connection to the first terminal device in the first network device, so that the second terminal device can exchange data with the first terminal device. When the two terminal devices camp on a same network device, if the two terminal devices need to communicate through a sidelink, a mechanism such as a HARQ mechanism can be normally implemented. This improves reliability of information transmission between terminal devices.

With reference to any one of the first aspect and the first possible implementation of the first aspect to the fourth possible implementation of the first aspect, in a fifth possible implementation of the first aspect, the first message further includes verification information of the second terminal device, and the verification information of the second terminal device is used to perform verification on the second terminal device.

The second terminal device needs to camp on the first network device, but the first network device does not learn of information about the second terminal device in advance. If the first network device accepts camping of the second terminal device without verification, network security may be affected. Therefore, the first message may include the verification information of the second terminal device. For example, when or after the second terminal device establishes an RRC connection to the first network device, the second terminal device may send the verification information of the second terminal device to the first network device, so that the first network device can perform verification on the second terminal device based on the verification information. If the verification succeeds, the second terminal device may camp on the first network device; or if the verification fails, the first network device may even reject camping of the second terminal device. This manner can ensure network security as much as possible.

With reference to the fifth possible implementation of the first aspect, in a sixth possible implementation of the first aspect, the method further includes:
The second terminal device sends a fifth message to the first network device. The fifth message includes the verification information of the second terminal device.

For example, when or after the second terminal device establishes an RRC connection to the first network device, the second terminal device may send the verification information of the second terminal device to the first network device, so that the first network device can perform verification on the second terminal device based on the verification information. If the verification succeeds, the second terminal device may camp on the first network device; or if the verification fails, the first network device may even reject camping of the second terminal device. This manner can ensure network security as much as possible. For example, the verification information of the second terminal device is obtained by the second terminal device by using the first message, or may be obtained by the second terminal device in another manner.

According to a second aspect, a second communications method is provided. The method includes: A first terminal device receives a second message from a first network device. The second message is used to indicate a second terminal device to camp on the first network device, the second terminal device currently camps on a second network device, and the first network device and the second network device correspond to different PLMNs. The first terminal device sends a first message to the second terminal device. The first message is used to indicate the second terminal device to camp on the first network device.

The method may be performed by a second communications apparatus. The second communications apparatus may be a communications device, or may be a communications apparatus, for example, a chip, that can support a communications device in implementing a function required in the method. For example, the second communications apparatus is the first terminal device, or is a chip that is disposed in the first terminal device and that is configured to implement a function of the first terminal device, or is another component that is configured to implement a function of the first terminal device. In the following description process, an example in which the second communications apparatus is the first terminal device is used.

In this embodiment of this application, if the second terminal device camps on the second network device, the second terminal device may camp on the first network device. The first terminal device camps on the first network device. In other words, if two terminal devices camp on network devices in different PLMNs, one of the terminal devices may camp on a network device in which the other terminal device is located, so that the two terminal devices camp on a same network device. Therefore, if the two terminal devices need to communicate through a sidelink, a mechanism such as a HARQ mechanism can be normally implemented. This improves reliability of information transmission between terminal devices. One implementation in which the second terminal device camps on the first network device is that the first terminal device indicates the second terminal device to camp on the first network device. For example, when the first terminal device needs to communicate with the second terminal device, or in a process in which the first terminal device communicates with the second terminal device, it is determined that the second network device on which the second terminal device camps and the first network device on which the first terminal device camps correspond to different PLMNs. In this case, the first terminal device may indicate the second terminal device to camp on the first network device, so that the first terminal device and the second terminal device work in a same network device. This can avoid a problem that a HARQ mechanism cannot be implemented due to different PLMNs.

With reference to the second aspect, in a first possible implementation of the second aspect, the method further includes:

The first terminal device sends a third message to the first network device. The third message is used to indicate that the second terminal device camps on the second network device.

One manner in which the first terminal device indicates the second terminal device to camp on the first network device is that the first terminal device first sends the third message to the first network device. The third message indicates the second terminal device to camp on the second network device. After receiving the third message, the first network device may determine that the first terminal device expects the second terminal device to camp on the first network device. In this manner, the first network device can first determine that there may be a new terminal device that is to camp on.

With reference to the second aspect or the first possible implementation of the second aspect, in a second possible implementation of the second aspect, the method further includes:

The first terminal device establishes a sidelink connection to the second terminal device in the first network device.

After the second terminal device camps on the first network device, the first terminal device may establish the sidelink connection to the second terminal device in the first network device, so that the second terminal device can exchange data with the first terminal device. When the two terminal devices camp on a same network device, if the two terminal devices need to communicate through a sidelink, a mechanism such as a HARQ mechanism can be normally implemented. This improves reliability of information transmission between terminal devices.

According to a third aspect, a third communications method is provided. The method includes: A first network device receives a third message. The third message is used to indicate that a second terminal device camps on a second network device, or is used to indicate that a second terminal device camping on a second network device requests to camp on the first network device, and the first network device and the second network device correspond to different PLMNs. The first network device sends a second message. The second message is used to indicate the second terminal device to camp on the first network device.

The method may be performed by a third communications apparatus. The third communications apparatus may be a communications device, or may be a communications apparatus, for example, a chip, that can support a communications device in implementing a function required in the method. For example, the third communications apparatus is the first network device, or is a chip that is disposed in the first network device and that is configured to implement a function of the first network device, or is another component that is configured to implement a function of the first network device. In the following description process, an example in which the third communications apparatus is the first network device is used.

In this embodiment of this application, if the second terminal device camps on the second network device, the second terminal device may camp on the first network device. A first terminal device camps on the first network device. In other words, if two terminal devices camp on network devices in different PLMNs, one of the terminal devices may camp on a network device in which the other terminal device is located, so that the two terminal devices camp on a same network device. Therefore, if the two terminal devices need to communicate through a sidelink, a mechanism such as a HARQ mechanism can be normally implemented. This improves reliability of information transmission between terminal devices.

With reference to the third aspect, in a first possible implementation of the third aspect, that a first network device receives a third message includes:
The first network device receives the third message from the first terminal device; or
the first network device receives the third message from the second network device; or
the first network device receives the third message from the second terminal device.

For example, when the first terminal device needs to communicate with the second terminal device, or in a process in which the first terminal device communicates with the second terminal device, it is determined that the second network device on which the second terminal device camps and the first network device on which the first terminal device camps correspond to different PLMNs. In this case, the first terminal device may request the first network device, to enable the second terminal device to camp on the first network device; or the second network device on which the second terminal device camps may request the first network device, to enable the second terminal device to camp on the first network device; or the second terminal device may request the first network device, to enable the second terminal device to camp on the first network device. In this embodiment of this application, the first network device may determine, in different manners, that the second terminal device requests to camp on the first network device. This is relatively flexible.

With reference to the third aspect or the first possible implementation of the third aspect, in a second possible implementation of the third aspect, that the first network device sends a second message includes:
The first network device sends the second message to the first terminal device camping on the first network device; or
the first network device sends the second message to the second network device.

The first network device may send the second message to the first terminal device. For example, after receiving a first message, the first terminal device may send a message to the second terminal device, to indicate the second terminal device to camp on the first network device. Alternatively, the first network device may send the second message to the second network device. For example, after receiving a first message, the second network device may send a message to the second terminal device, to indicate the second terminal device to camp on the first network device. Alternatively, the first network device may send a first message to the second terminal device, to indicate the second terminal device to camp on the first network device. This manner is more direct.

With reference to the third aspect, the first possible implementation of the third aspect, or the second possible implementation of the third aspect, in a third possible implementation of the third aspect, the method further includes:

The first network device receives verification information of the second terminal device from the second network device. The verification information of the second terminal device is used to perform verification on the second terminal device.

The second terminal device needs to camp on the first network device, but the first network device does not learn of information about the second terminal device in advance. If the first network device accepts camping of the second terminal device without verification, network security may be affected. Therefore, the first network device may obtain the verification information of the second terminal device from the second network device, so that the first network device can perform verification on the second terminal device based on the verification information. If the verification succeeds, the second terminal device may camp on the first network device; or if the verification fails, the first network device may even reject camping of the second terminal device. This manner can ensure network security as much as possible.

With reference to the third possible implementation of the third aspect, in a fourth possible implementation of the third aspect, the method further includes:
The first network device sends a fourth message to the second network device. The fourth message is used to request to obtain the verification information of the second terminal device.

For example, the first network device may send a request to the second network device, to request to obtain the verification information of the second terminal device. After receiving the fourth message, the second network device may send the verification information of the second terminal device to the first network device. In this way, the first network device may request to obtain the verification information of the second terminal device again when there is a requirement. This improves validity of obtained information. Alternatively, the first network device may not need to send the fourth message to the second network device. For example, the second network device may actively send the verification information of the second terminal device to the first network device. This can reduce interaction between the first network device and the second network device, and reduce signaling overheads.

With reference to the third possible implementation of the third aspect or the fourth possible implementation of the third aspect, in a fifth possible implementation of the third aspect, the method further includes:
The first network device receives a fifth message from the second terminal device. The fifth message includes verification information of the second terminal device.

The first network device performs verification based on the verification information of the second terminal device included in the fifth message and the verification information of the second terminal device from the second network device.

When the verification succeeds, the first network device determines that the second terminal device can access the first network device.

The first network device may obtain the verification information of the second terminal device from the second terminal device, and may also obtain the verification information of the second terminal device from the second network device. In this case, the first network device may perform verification on the second terminal device based on the two pieces of verification information. For example, one verification manner is that the first network device compares the two pieces of verification information to determine whether the two pieces of verification information are consistent; and if the two pieces of verification information are consistent, the first network device determines that the verification on the second terminal device succeeds; or if the two pieces of verification information are inconsistent, the first network device may determine that the verification on the second terminal device fails. If the verification on the second terminal device succeeds, the second terminal device may camp on the first network device; or if the verification on the second terminal device fails, the first network device may even reject camping of the second terminal device. This manner can ensure network security as much as possible.

According to a fourth aspect, a fourth communications method is provided. The method includes: A second network device determines that a second terminal device camping on the second network device needs to camp on a first network device. The first network device and the second network device correspond to different PLMNs. The second network device sends a first message to the second terminal device. The first message is used to indicate the second terminal device to camp on the first network device.

The method may be performed by a fourth communications apparatus. The fourth communications apparatus may be a communications device, or may be a communications apparatus, for example, a chip, that can support a communications device in implementing a function required in the method. For example, the fourth communications apparatus is the second network device, or is a chip that is disposed in the second network device and that is configured to implement a function of the second network device, or is another component that is configured to implement a function of the first network device. In the following description process, an example in which the fourth communications apparatus is the second network device is used.

In this embodiment of this application, if the second terminal device camps on the second network device, the second terminal device may camp on the first network device. A first terminal device camps on the first network device. In other words, if two terminal devices camp on network devices in different PLMNs, one of the terminal devices may camp on a network device in which the other terminal device is located, so that the two terminal devices camp on a same network device. Therefore, if the two terminal devices need to communicate through a sidelink, a mechanism such as a HARQ mechanism can be normally implemented. This improves reliability of information transmission between terminal devices.

With reference to the fourth aspect, in a first possible implementation of the fourth aspect, that a second network device determines that a second terminal device camping on the second network device needs to camp on a first network device includes:
The second network device receives a second message from the first network device, where the second message is used to indicate the second terminal device to camp on the first network device; or
the second network device receives a request message from the second terminal device, where the request message is used to request to camp on the first network device.

For example, if the first network device determines that the second terminal device can camp on the first network device, the first network device may send a message to the second network device, to indicate the second terminal device to camp on the first network device. Alternatively, the second terminal device may actively request to camp on the first network device. There may be a plurality of manners in which the second network device determines that the second terminal device needs to camp on the first network device, and the manners are applicable to different scenarios.

With reference to the fourth aspect or the first possible implementation of the fourth aspect, in a second possible implementation of the fourth aspect, the method further includes:
The second network device sends verification information of the second terminal device to the first network device. The verification information of the second terminal device is used to perform verification on the second terminal device.

The second terminal device needs to camp on the first network device, but the first network device does not learn of information about the second terminal device in advance. If the first network device accepts camping of the second terminal device without verification, network security may be affected. Therefore, the second network device may send the verification information of the second terminal device to the first network device, so that the first network device can perform verification on the second terminal device based on the verification information. If the verification succeeds, the second terminal device may camp on the first network device; or if the verification fails, the first network device may even reject camping of the second terminal device. This manner can ensure network security as much as possible.

With reference to the second possible implementation of the fourth aspect, in a third possible implementation of the fourth aspect, the method further includes:
The second network device receives a fourth message from the first network device. The fourth message is used to request to obtain the verification information of the second terminal device.

For example, the first network device may send a request to the second network device, to request to obtain the verification information of the second terminal device. After receiving the fourth message, the second network device may send the verification information of the second terminal device to the first network device. In this way, the first network device may request to obtain the verification information of the second terminal device again when there is a requirement. This improves validity of obtained information. Alternatively, the first network device may not need to send the fourth message to the second network device. For example, the second network device may actively send the verification information of the second terminal device to the first network device. This can reduce interaction between the first network device and the second network device, and reduce signaling overheads.

According to a fifth aspect, a communications apparatus is provided. For example, the communications apparatus is the first communications apparatus described above. The first communications apparatus is configured to perform the method according to any one of the first aspect and the possible implementations. Specifically, the first communications apparatus may include modules configured to perform the method according to any one of the first aspect and the possible implementations, for example, include a processing module and a transceiver module. For example, the transceiver module may include a sending module and a receiving module. The sending module and the receiving module may be different function modules, or may be a same function module that can implement different functions. For example, the first communications apparatus is a communications device, or is a chip or another component disposed in a communications device. For example, the communications device is a second terminal device. An example in which the first communications apparatus is the second terminal device is used below. For example, the transceiver module may alternatively be implemented as a transceiver, and the processing module may alternatively be implemented as a processor. Alternatively, the sending module may be implemented as a transmitter, and the receiving module may be implemented as a receiver. The transmitter and the receiver may be different function modules, or may be a same function module that can implement different functions. If the first communications apparatus is a communications device, the transceiver is implemented as, for example, an antenna, a feeder, and a codec in the communications device. Alternatively, if the first communications apparatus is a chip disposed in a communications device, the transceiver (or the transmitter and the receiver) is, for example, a communications interface in the chip, and the communications interface is connected to a radio frequency transceiver component in the communications device, to implement information receiving and sending by using the radio frequency transceiver component. In a description process of the fifth aspect, an example in which the first communications apparatus is the second terminal device including the processing module and the transceiver module is still used for description.

The transceiver module is configured to receive a first message when the second terminal device camps on a second network device. The first message is used to indicate the second terminal device to camp on a first network device, and the first network device and the second network device correspond to different PLMNs.

The processing module is configured to camp on the first network device.

With reference to the fifth aspect, in a first possible implementation of the fifth aspect, the transceiver module is configured to receive the first message in the following manner:
receiving the first message from the second network device; or
receiving the first message from a first terminal device, where the first terminal device camps on the first network device; or
receiving the first message from the first network device.

With reference to the first possible implementation of the fifth aspect, in a second possible implementation of the fifth aspect,
before receiving the first message from the second network device, the transceiver module is further configured to send a request message to the second network device, where the request message is used to request to camp on the first network device; or
before receiving the first message from the second network device, the transceiver module is further configured to send a third message to the first network device, where the third message is used to request to camp on the first network device.

With reference to the fifth aspect, the first possible implementation of the fifth aspect, or the second possible implementation of the fifth aspect, in a third possible implementation of the fifth aspect, the processing module is configured to camp on the first network device in the following manner:
camping on the first network device based on information about the first network device through cell reselection.

With reference to any one of the fifth aspect and the first possible implementation of the fifth aspect to the third possible implementation of the fifth aspect, in a fourth possible implementation of the fifth aspect, the processing module is further configured to establish a sidelink connection to the first terminal device in the first network device.

With reference to any one of the fifth aspect and the first possible implementation of the fifth aspect to the fourth possible implementation of the fifth aspect, in a fifth possible implementation of the fifth aspect, the first message further includes verification information of the second terminal device, and the verification information of the second terminal device is used to perform verification on the second terminal device.

With reference to the fifth possible implementation of the fifth aspect, in a sixth possible implementation of the fifth aspect, the transceiver module is further configured to send a fifth message to the first network device. The fifth message includes the verification information of the second terminal device.

For technical effects brought by the fifth aspect or the possible implementations of the fifth aspect, refer to the descriptions of the technical effects brought by the first aspect or the corresponding implementations of the first aspect.

According to a sixth aspect, a communications apparatus is provided. For example, the communications apparatus is the second communications apparatus described above. The second communications apparatus is configured to perform the method according to any one of the second aspect and the possible implementations. Specifically, the second communications apparatus may include modules configured to perform the method according to any one of the second aspect and the possible implementations, for example, include a processing module and a transceiver module. For example, the transceiver module may include a sending module and a receiving module. The sending module and the receiving module may be different function modules, or may be a same function module that can implement different functions. For example, the second communications apparatus is a communications device, or is a chip or another component disposed in a communications device. For example, the communications device is a first terminal device. An example in which the second communications apparatus is the first terminal device is used below. For example, the transceiver module may alternatively be implemented as a transceiver, and the processing module may alternatively be implemented as a processor. Alternatively, the sending module may be implemented as a transmitter, and the receiving module may be implemented as a receiver. The transmitter and the receiver may be different function modules, or may be a same function module that can implement different functions. If the second communications apparatus is a communications device, the transceiver is implemented as, for example, an antenna, a feeder, and a codec in the communications device. Alternatively, if the second communications apparatus is a chip disposed in a communications device, the transceiver (or the transmitter and the receiver) is, for example, a communications interface in the chip, and the communications interface is connected to a radio frequency transceiver component in the communications device, to implement information receiving and sending by using the radio frequency transceiver component. In a description process of the sixth aspect, an example in which the second communications apparatus is the first terminal device including the processing module and the transceiver module is still used for description.

The transceiver module is configured to receive a second message from a first network device. The second message is used to indicate a second terminal device to camp on the first network device, the second terminal device currently camps on a second network device, and the first network device and the second network device correspond to different PLMNs.

The processing module is configured to determine a first message. The first message is used to indicate the second terminal device to camp on the first network device.

The transceiver module is further configured to send the first message to the second terminal device.

With reference to the sixth aspect, in a first possible implementation of the sixth aspect, the transceiver module is further configured to send a third message to the first network device. The third message is used to indicate that the second terminal device camps on the second network device.

With reference to the sixth aspect or the first possible implementation of the sixth aspect, in a second possible implementation of the sixth aspect, the processing module is further configured to establish a sidelink connection to the second terminal device in the first network device.

For technical effects brought by the sixth aspect or the possible implementations of the sixth aspect, refer to the descriptions of the technical effects brought by the second aspect or the corresponding implementations of the second aspect.

According to a seventh aspect, a communications apparatus is provided. For example, the communications apparatus is the third communications apparatus described above. The third communications apparatus is configured to perform the method according to any one of the third aspect and the possible implementations. Specifically, the third communications apparatus may include modules configured to perform the method according to any one of the third aspect and the possible implementations, for example, include a processing module and a transceiver module. For example, the transceiver module may include a sending module and a receiving module. The sending module and the receiving module may be different function modules, or may be a same function module that can implement different functions. For example, the third communications apparatus is a communications device, or is a chip or another component disposed in a communications device. For example, the communications device is a first network device. An example in which the third communications apparatus is the first network device is used below. For example, the transceiver module may alternatively be implemented as a transceiver, and the processing module may alternatively be implemented as a processor. Alternatively, the sending module may be implemented as a transmitter, and the receiving module may be implemented as a receiver. The transmitter and the receiver may be different function modules, or may be a same function module that can implement different functions. If the third communications apparatus is a communications device, the transceiver is implemented as, for example, an antenna, a feeder, and a codec in the communications device. Alternatively, if the third communications apparatus is a chip disposed in a communications device, the transceiver (or the transmitter and the receiver) is, for example, a communications interface in the chip, and the communications interface is connected to a radio frequency transceiver component in the communications device, to implement information receiving and sending by using the radio frequency transceiver component. In a description process of the seventh aspect, an example in which the third communications apparatus is the first network device including the processing module and the transceiver module is still used for description.

The transceiver module is configured to receive a third message. The third message is used to indicate that a second terminal device camps on a second network device, or is used to indicate that a second terminal device camping on a second network device requests to camp on the first network device, and the first network device and the second network device correspond to different PLMNs.

The processing module is configured to determine a second message. The second message is used to indicate the second terminal device to camp on the first network device.

The transceiver module is further configured to send the second message.

With reference to the seventh aspect, in a first possible implementation of the seventh aspect, the transceiver module is configured to receive the third message in the following manner:
receiving the third message from a first terminal device; or
receiving the third message from the second network device; or
receiving the third message from the second terminal device.

With reference to the seventh aspect or the first possible implementation of the seventh aspect, in a second possible implementation of the seventh aspect, the transceiver module is configured to send the second message in the following manner:
sending the second message to the first terminal device camping on the first network device; or
sending the second message to the second network device.

With reference to the seventh aspect, the first possible implementation of the seventh aspect, or the second possible implementation of the seventh aspect, in a third possible implementation of the seventh aspect, the transceiver module is further configured to receive verification information of the second terminal device from the second network device. The verification information of the second terminal device is used to perform verification on the second terminal device.

With reference to the third possible implementation of the seventh aspect, in a fourth possible implementation of the seventh aspect, the transceiver module is further configured to send a fourth message to the second network device. The fourth message is used to request to obtain the verification information of the second terminal device.

With reference to the third possible implementation of the seventh aspect or the fourth possible implementation of the seventh aspect, in a fifth possible implementation of the seventh aspect,
the transceiver module is further configured to receive a fifth message from the second terminal device, where the fifth message includes verification information of the second terminal device;
the processing module is further configured to perform verification based on the verification information of the second terminal device included in the fifth message and the verification information of the second terminal device from the second network device; and
the processing module is further configured to: when the verification succeeds, determine that the second terminal device can access the first network device.

For technical effects brought by the seventh aspect or the possible implementations of the seventh aspect, refer to the descriptions of the technical effects brought by the third aspect or the corresponding implementations of the third aspect.

According to an eighth aspect, a communications apparatus is provided. For example, the communications apparatus is the fourth communications apparatus described above. The fourth communications apparatus is configured to perform the method according to any one of the fourth aspect and the possible implementations. Specifically, the fourth communications apparatus may include modules configured to perform the method according to any one of the fourth aspect and the possible implementations, for example, include a processing module and a transceiver module. For example, the transceiver module may include a sending module and a receiving module. The sending module and the receiving module may be different function modules, or may be a same function module that can implement different functions. For example, the fourth communications apparatus is a communications device, or is a chip or another component disposed in a communications device. For example, the communications device is a second network device. An example in which the fourth communications apparatus is the second network device is used below. For example, the transceiver module may alternatively be implemented as a transceiver, and the processing module may alternatively be implemented as a processor. Alternatively, the sending module may be implemented as a transmitter, and the receiving module may be implemented as a receiver. The transmitter and the receiver may be different function modules, or may be a same function module that can implement different functions. If the fourth communications apparatus is a communications device, the transceiver is implemented as, for example, an antenna, a feeder, and a codec in the communications device. Alternatively, if the fourth communications apparatus is a chip disposed in a communications device, the transceiver (or the transmitter and the receiver) is, for example, a communications interface in the chip, and the communications interface is connected to a radio frequency transceiver component in the communications device, to implement information receiving and sending by using the radio frequency transceiver component. In a description process of the eighth aspect, an example in which the fourth communications apparatus is the second network device including the processing module and the transceiver module is still used for description.

The processing module is configured to determine that a second terminal device camping on the second network device needs to camp on a first network device. The first network device and the second network device correspond to different PLMNs.

The transceiver module is configured to send a first message to the second terminal device. The first message is used to indicate the second terminal device to camp on the first network device.

With reference to the eighth aspect, in a first possible implementation of the eighth aspect, the processing module is configured to determine, in the following manner, that the second terminal device camping on the second network device needs to camp on the first network device:
receiving a second message from the first network device by using the transceiver module, where the second message is used to indicate the second terminal device to camp on the first network device; or
receiving a request message from the second terminal device by using the transceiver module, where the request message is used to request to camp on the first network device.

With reference to the eighth aspect or the first possible implementation of the eighth aspect, in a second possible implementation of the eighth aspect, the transceiver module is further configured to send verification information of the second terminal device to the first network device. The verification information of the second terminal device is used to perform verification on the second terminal device.

With reference to the second possible implementation of the eighth aspect, in a third possible implementation of the eighth aspect, the transceiver module is further configured to receive a fourth message from the first network device. The fourth message is used to request to obtain the verification information of the second terminal device.

For technical effects brought by the eighth aspect or the possible implementations of the eighth aspect, refer to the descriptions of the technical effects brought by the fourth aspect or the corresponding implementations of the fourth aspect.

According to a ninth aspect, a communications apparatus is provided. The communications apparatus is, for example, the first communications apparatus described above. The communications apparatus includes a processor. Optionally, the communications apparatus may further include a memory, configured to store computer instructions. The processor and the memory are coupled to each other, to implement the method according to any one of the first aspect and the possible implementations. Alternatively, the first communications apparatus may not include a memory, and the memory may be located outside the first communications apparatus. Optionally, the first communications apparatus may further include a communications interface, configured to communicate with another apparatus or device. The processor, the memory, and the communications interface are coupled to each other, to implement the method according to any one of the first aspect and the possible implementations. For example, when the processor executes the computer instructions stored in the memory, the first communications apparatus is enabled to perform the method according to any one of the first aspect and the possible implementations. For example, the first communications apparatus is a communications device, or is a chip or another component disposed in a communications device. For example, the communications device is a second terminal device.

If the first communications apparatus is a communications device, the communications interface is implemented as, for example, a transceiver (or a transmitter and a receiver) in the communications device, and the transceiver is implemented as, for example, an antenna, a feeder, and a codec in the communications device. Alternatively, if the first communications apparatus is a chip disposed in a communications device, the communications interface is, for example, an input/output interface such as an input/output pin in the chip, and the communications interface is connected to a radio frequency transceiver component in the communications device, to implement information receiving and sending by using the radio frequency transceiver component.

According to a tenth aspect, a communications apparatus is provided. The communications apparatus is, for example, the second communications apparatus described above. The communications apparatus includes a processor. Optionally, the communications apparatus may further include a memory, configured to store computer instructions. The processor and the memory are coupled to each other, to implement the method according to any one of the second aspect and the possible implementations. Alternatively, the second communication apparatus may not include a memory, and the memory may be located outside the second communication apparatus. Optionally, the second communications apparatus may further include a communications interface, configured to communicate with another apparatus or device. The processor, the memory, and the communications interface are coupled to each other, to implement the method according to any one of the second aspect and the possible implementations. For example, when the processor executes the computer instructions stored in the memory, the second communications apparatus is enabled to perform the method according to any one of the second aspect and the possible implementations. For example, the second communications apparatus is a communications device, or is a chip or another component disposed in a communications device. For example, the communications device is a first terminal device.

If the second communications apparatus is a communications device, the communications interface is implemented as, for example, a transceiver (or a transmitter and a receiver) in the communications device, and the transceiver is implemented as, for example, an antenna, a feeder, and a codec in the communications device. Alternatively, if the second communications apparatus is a chip disposed in a communications device, the communications interface is, for example, an input/output interface such as an input/output pin in the chip, and the communications interface is connected to a radio frequency transceiver component in the communications device, to implement information receiving and sending by using the radio frequency transceiver component.

According to an eleventh aspect, a communications apparatus is provided. The communications apparatus is, for example, the third communications apparatus described above. The communications apparatus includes a processor. Optionally, the communications apparatus may further include a memory, configured to store computer instructions. The processor and the memory are coupled to each other, to implement the method according to any one of the third aspect and the possible implementations. Alternatively, the third communications apparatus may not include a memory, and the memory may be located outside the third communications apparatus. Optionally, the third communications apparatus may further include a communications interface, configured to communicate with another apparatus or device. The processor, the memory, and the communications interface are coupled to each other, to implement the method according to any one of the third aspect and the possible implementations. For example, when the processor executes the computer instructions stored in the memory, the third communications apparatus is enabled to perform the method according to any one of the third aspect and the possible implementations. For example, the third communications apparatus is a communications device, or is a chip or another component disposed in a communications device. For example, the communications device is a first network device.

If the third communications apparatus is a communications device, the communications interface is implemented as, for example, a transceiver (or a transmitter and a receiver) in the communications device, and the transceiver is implemented as, for example, an antenna, a feeder, and a codec in the communications device. Alternatively, if the third communications apparatus is a chip disposed in a communications device, the communications interface is, for example, an input/output interface such as an input/output pin in the chip, and the communications interface is connected to a radio frequency transceiver component in the communications device, to implement information receiving and sending by using the radio frequency transceiver component.

According to a twelfth aspect, a communications apparatus is provided. The communications apparatus is, for example, the fourth communications apparatus described above. The communications apparatus includes a processor. Optionally, the communications apparatus may further include a memory, configured to store computer instructions. The processor and the memory are coupled to each other, to implement the method according to any one of the fourth aspect and the possible implementations. Alternatively, the fourth communications apparatus may not include a memory, and the memory may be located outside the fourth communications apparatus. Optionally, the fourth communications apparatus may further include a communications interface, configured to communicate with another apparatus or device. The processor, the memory, and the communications interface are coupled to each other, to implement the method according to any one of the fourth aspect and the possible implementations. For example, when the processor executes the computer instructions stored in the memory, the fourth communications apparatus is enabled to perform the method according to any one of the fourth aspect and the possible implementations. For example, the fourth communications apparatus is a communications device, or is a chip or another component disposed in a communications device. For example, the communications device is a second network device.

If the fourth communications apparatus is a communications device, the communications interface is implemented as, for example, a transceiver (or a transmitter and a receiver) in the communications device, and the transceiver is implemented as, for example, an antenna, a feeder, and a codec in the communications device. Alternatively, if the fourth communications apparatus is a chip disposed in a communications device, the communications interface is, for example, an input/output interface such as an input/output pin in the chip, and the communications interface is connected to a radio frequency transceiver component in the communications device, to implement information receiving and sending by using the radio frequency transceiver component.

According to a thirteenth aspect, a communications system is provided. The communications system includes the communications apparatus according to the fifth aspect or the communications apparatus according to the ninth aspect.

In an optional implementation, the communications system further includes the communications apparatus according to the seventh aspect or the communications apparatus according to the eleventh aspect.

In an optional implementation, the communications system further includes the communications apparatus according to the sixth aspect or the communications apparatus according to the tenth aspect.

In an optional implementation, the communications system further includes the communications apparatus according to the eighth aspect or the communications apparatus according to the twelfth aspect.

According to a fourteenth aspect, a computer-readable storage medium is provided. The computer-readable storage medium is configured to store computer instructions. When the computer instructions are run on a computer, the computer is enabled to perform the method according to any one of the first aspect and the possible implementations.

According to a fifteenth aspect, a computer-readable storage medium is provided. The computer-readable storage medium is configured to store computer instructions. When the computer instructions are run on a computer, the computer is enabled to perform the method according to any one of the second aspect and the possible implementations.

According to a sixteenth aspect, a computer-readable storage medium is provided. The computer-readable storage medium is configured to store computer instructions. When the computer instructions are run on a computer, the computer is enabled to perform the method according to any one of the third aspect and the possible implementations.

According to a seventeenth aspect, a computer-readable storage medium is provided. The computer-readable storage medium is configured to store computer instructions. When the computer instructions are run on a computer, the computer is enabled to perform the method according to any one of the fourth aspect and the possible implementations.

According to an eighteenth aspect, a computer program product including instructions is provided. The computer program product is configured to store computer instructions. When the computer instructions are run on a computer, the computer is enabled to perform the method according to any one of the first aspect and the possible implementations.

According to a nineteenth aspect, a computer program product including instructions is provided. The computer program product is configured to store computer instructions. When the computer instructions are run on a computer, the computer is enabled to perform the method according to any one of the second aspect and the possible implementations.

According to a twentieth aspect, a computer program product including instructions is provided. The computer program product is configured to store computer instructions. When the computer instructions are run on a computer, the computer is enabled to perform the method according to any one of the third aspect and the possible implementations.

According to a twenty-first aspect, a computer program product including instructions is provided. The computer program product is configured to store computer instructions. When the computer instructions are run on a computer, the computer is enabled to perform the method according to any one of the fourth aspect and the possible implementations.

In embodiments of this application, two terminal devices camping on network devices corresponding to different PLMNs may camp on a same network device. Therefore, if the two terminal devices need to communicate through a sidelink, a mechanism such as a HARQ mechanism can be normally implemented. This improves reliability of information transmission between terminal devices.

### BRIEF DESCRIPTION OF DRAWINGS

FIG. 1A and FIG. 1B are two schematic diagrams of sidelinks;
FIG. 2A is a schematic diagram of an application scenario according to an embodiment of this application;
FIG. 2B is a schematic diagram of another application scenario according to an embodiment of this application;
FIG. 3A to FIG. 3C are a flowchart of a case in which a second terminal device determines, in a first determining manner, to camp on a first network device in a first communications method according to an embodiment of this application;
FIG. 4A and FIG. 4B are a flowchart of a case in which a second terminal device determines, in a second determining manner, to camp on a first network device in a first communications method according to an embodiment of this application;
FIG. 5A and FIG. 5B are a flowchart of a case in which a second terminal device determines, in a third determining manner, to camp on a first network device in a first communications method according to an embodiment of this application;
FIG. 6 is a flowchart in which a second network device performs authentication on a second terminal device according to an embodiment of this application;
FIG. 7 is a flowchart of a second communications method according to an embodiment of this application;
FIG. 8 is a flowchart of a third communications method according to an embodiment of this application;
FIG. 9 is a flowchart of a fourth communications method according to an embodiment of this application;
FIG. 10 is a schematic block diagram of a second terminal device of a first type according to an embodiment of this application;
FIG. 11 is a schematic block diagram of a first terminal device of a first type according to an embodiment of this application;
FIG. 12 is a schematic block diagram of a first network device of a first type according to an embodiment of this application;
FIG. 13 is a schematic block diagram of a second network device of a first type according to an embodiment of this application;
FIG. 14 is a schematic block diagram of a first terminal device of a second type according to an embodiment of this application;
FIG. 15 is a schematic block diagram of a second terminal device of a second type according to an embodiment of this application;
FIG. 16 is a schematic block diagram of a first network device of a second type according to an embodiment of this application;
FIG. 17 is a schematic block diagram of a second network device of a second type according to an embodiment of this application;
FIG. 18 is a schematic block diagram of a first terminal device of a third type according to an embodiment of this application;
FIG. 19 is a schematic block diagram of a second terminal device of a third type according to an embodiment of this application;
FIG. 20 is a schematic block diagram of a communications apparatus according to an embodiment of this application;
FIG. 21 is another schematic block diagram of a communications apparatus according to an embodiment of this application;
FIG. 22 is still another schematic block diagram of a communications apparatus according to an embodiment of this application; and
FIG. 23 is yet another schematic block diagram of a communications apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

The following describes some terms in embodiments of this application to facilitate understanding of a person skilled in the art.

(1) Terminal device: The terminal device includes a device that provides a voice and/or data connectivity for a user. Specifically, the terminal device includes a device that provides a voice for the user, or includes a device that provides data connectivity for the user, or includes a device that provides a voice and data connectivity for the user. For example, the terminal device may include a handheld device having a wireless connection function or a processing device connected to a wireless modem. The terminal device may communicate with a core network through a radio access network (radio access network, RAN), and exchange a voice or data with the RAN, or exchange a voice and data with the RAN. The terminal device may include user equipment (user equipment, UE), a wireless terminal device, a mobile terminal device, a device-to-device (device-to-device, D2D) communications terminal device, a vehicle-to-everything (vehicle-to-everything, V2X) terminal device, a machine-to-machine/machine type communications (machine-to-machine/machine type communications, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (or referred to as a "cellular" phone), a computer with a mobile terminal device, or a portable, pocket-sized, handheld, or computer built-in mobile apparatus. For example, the terminal device may be a device such as a personal communications service (personal communications service, PCS) phone, a cordless telephone set, a session initiation protocol (session initiation protocol, SIP) phone, a wireless local loop (wireless local loop, WLL) station, or a personal digital assistant (personal digital assistant, PDA). The terminal device alternatively includes a limited device, for example, a device having relatively low power consumption, a device having a limited storage capability, or a device having a limited computing capability. For example, the terminal device includes an information sensing device such as a barcode, radio frequency identification (radio frequency identification, RFID), a sensor, a global positioning system (global positioning system, GPS), or a laser scanner.

By way of example and not limitation, in embodiments of this application, the terminal device may alternatively be a wearable device. The wearable device may also be referred to as a wearable intelligent device, an intelligent wearing device, or the like, and is a generic term for wearable devices developed by intelligently designing daily wear by using wearable technologies, such as glasses (for example, glasses using a virtual reality (virtual reality, VR) technology or glasses using an augmented reality (augmented reality, AR) technology), gloves, watches, clothes, and shoes. The wearable device is a portable device that is directly worn on a body or integrated into user's clothes or accessories. The wearable device is more than a hardware device, and implements powerful functions through software support, data exchange, and cloud interaction. Broadly, wearable intelligent devices include full-featured and large-sized devices that can implement all or some functions without depending on smartphones, for example, smart watches or smart glasses, and include devices that focus only on one type of application functions and need to collaboratively work with other devices such as smartphones, for example, various smart bands, smart helmets, or smart jewelry for monitoring physical signs.

If the various terminal devices described above are located in a vehicle (for example, placed in the vehicle or installed in the vehicle), the terminal devices may be all considered as vehicle-mounted terminal devices. For example, the vehicle-mounted terminal devices are also referred to as on-board units (on-board unit, OBU). Alternatively, the terminal device may be a vehicle.

In embodiments of this application, the terminal device may further include a relay (relay). Alternatively, it may be understood that any device that can perform data communication with a base station may be considered as a terminal device.

In embodiments of this application, an apparatus configured to implement a function of a terminal device may be a terminal device, or may be an apparatus, for example, a chip system, that can support the terminal device in implementing the function. The apparatus may be installed in the terminal device. In embodiments of this application, the chip system may include one or more chip, or may include a chip and another discrete component. An example in which an apparatus configured to implement a function of a terminal is a terminal device is used to describe the technical solutions provided in embodiments of this application.

(2) Network device: The network device includes, for example, an access network (access network, AN) device such as a base station (for example, an access point), and may be a device that communicates with a wireless terminal device through an air interface by using one or more cells in an access network. Alternatively, the network device is, for example, a road side unit (road side unit, RSU) in a vehicle-to-everything (vehicle-to-everything, V2X) technology. The base station may be configured to perform mutual conversion between a received over-the-air frame and an IP packet, to serve as a router between the terminal device and a remaining part of the access network. The remaining part of the access network may include an IP network. The RSU may be a fixed infrastructure entity supporting a V2X application, and may exchange a message with another entity supporting the V2X application. The network device may further coordinate attribute management of the air interface. For example, the network device may include an evolved NodeB (NodeB, eNB, or eNodeB, evolved NodeB) in a long term evolution (long term evolution, LTE) system or a long term evolution-advanced (long term evolution-advanced, LTE-A) system, or may include a next generation NodeB (next generation NodeB, gNB) in a 5th generation (5th generation, 5G) mobile communications technology new radio (new radio, NR) system (also briefly referred to as an NR system), or may include a centralized unit (centralized unit, CU) and a distributed unit (distributed unit, DU) in a cloud radio access network (cloud radio access network, Cloud RAN) system. This is not limited in embodiments of this application.

The network device may alternatively include a core network device. The core network device includes, for example, an access and mobility management function (access and mobility management function, AMF), a security anchor function (security anchor function, SEAF), an authentication server function (authentication server function, AUSF), a core network function (core network function, CN function), or a unified data management (unified data management, UDM) function.

In embodiments of this application, an apparatus configured to implement a function of a network device may be a network device, or may be an apparatus, for example, a chip system, that can support the network device in implementing the function. The apparatus may be installed in the network device. An example in which an apparatus configured to implement a function of a network device is a network device is mainly used below to describe the technical solutions provided in embodiments of this application.

(3) For example, a SIM card may be understood as a key for a terminal device to access a mobile network. For ease of description, the SIM card and evolved cards thereof are collectively referred to as the SIM card in embodiments of this application. For example, the SIM card may be a global system for mobile communications (global system for mobile communications, GSM) digital mobile phone subscriber identity module card for storing a subscriber identity number and a key and supporting a GSM system in performing user authentication. For another example, the SIM card may alternatively be a universal subscriber identity module (universal subscriber identity module, USIM) card, which may also be referred to as an upgrade SIM card; or the SIM card may be an embedded subscriber identity module (embedded subscriber identity module, eSIM) card.

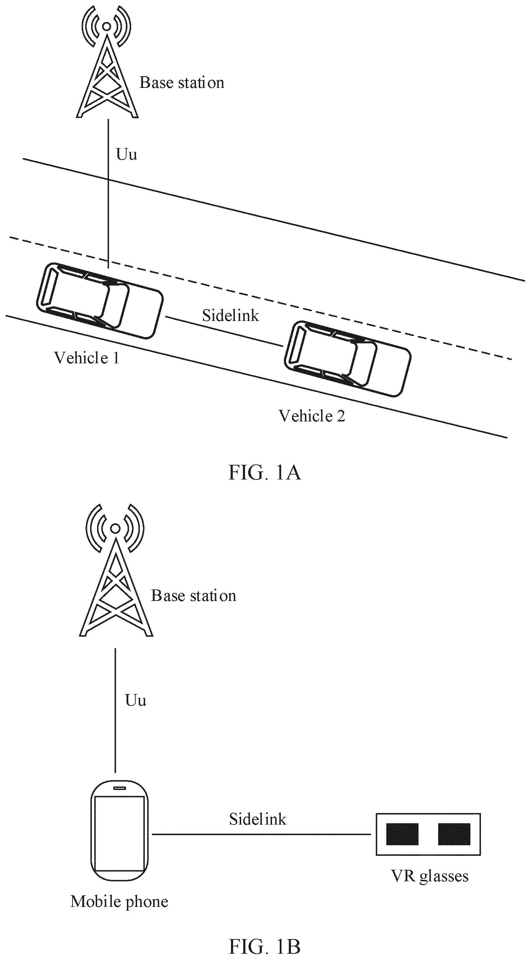

(4) Sidelink: The sidelink is a transmission link between terminal devices. As shown in FIG. I A, a base station communicates with a vehicle 1 through a Uu interface, and the vehicle 1 communicates with a vehicle 2 through a sidelink. Further, as shown in FIG. 1B, a base station communicates with a mobile phone through a Uu interface, and the mobile phone communicates with VR glasses through a sidelink.

(5) Terms "system" and "network" may be used interchangeably in embodiments of this application. In addition, "at least one" means one or more, and "a plurality of' means two or more. A term "and/or" describes an association relationship between associated objects and represents that three relationships may exist. For example, A and/or B may represent the following three cases: Only A exists, both A and B exist, and only B exists, where A and B may be singular or plural. A character "/" generally indicates an "or" relationship between the associated objects. Moreover, "at least one of the following items (pieces)" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural.

In addition, unless otherwise stated, in embodiments of this application, ordinal numbers such as "first" and "second" are intended to distinguish between a plurality of objects, but are not intended to limit sizes, content, orders, time sequences, priorities, importance, or the like of the plurality of objects. For example, a first message and a second message are merely intended to distinguish between different messages, but do not indicate that the two messages are different in content, a sending sequence, a priority, or importance.

Embodiments of this application may be applied to various communications systems, for example, an LTE system, an LTE-A system, an NR system, or a future possible communications system. This is not specifically limited. The technical solutions provided in embodiments of this application may be applied to a device-to-device (device-to-device, D2D) scenario, an NR D2D scenario, an LTE D2D scenario, or the like; or may be applied to a vehicle-to-everything (vehicle-to-everything, V2X) scenario, an NR V2X scenario, an LTE V2X scenario, or the like; or may be applied to another scenario or another communications system. This is not specifically limited.

The foregoing describes some noun concepts used in embodiments of this application. The following describes technical features of embodiments of this application.

Currently, a terminal device generally implements communication with another device by using a SIM card disposed in the terminal device. Each SIM card has a corresponding PLMN. For example, a SIM card 1 corresponds to an operator 1, and a SIM card 2 corresponds to an operator 2.

However, in the D2D application scenario (for example, a scenario of performing D2D communication by using a millimeter wave), two terminal devices that need to communicate may belong to different operators. For example, a mobile phone needs to communicate with a display of a wearable device; a SIM card installed in the mobile phone is, for example, a SIM card of China Unicom; and a SIM card installed in the display of the wearable device may be a SIM card of China Mobile. In this case, inter-PLMN unicast communication needs to be supported.

To improve information transmission reliability, a HARQ mechanism and an automatic repeat request (automatic repeat request, ARQ) mechanism are also introduced on a sidelink currently. When two terminal devices in a same PLMN communicate in a unicast manner, HARQ transmission and ARQ transmission need to be supported. The HARQ/ARQ retransmission mechanism means that, after a terminal device 1 sends data to a terminal device 2, the terminal device 2 may actively send feedback information corresponding to the data to the terminal device 1, to determine whether the data is successfully transmitted. The HARQ is used to determine whether MAC layer data needs to be retransmitted, and the ARQ is used to determine whether RLC layer data needs to be retransmitted. For one terminal device, if the terminal device sends data on one frequency band but listens to information from another device on a plurality of frequency bands, even if SIM cards installed in the terminal device 1 and the terminal device 2 correspond to different operators, frequency bands supported by the different operators may be different. However, after the terminal device 1 sends the data to the terminal device 2, because the terminal device 1 can listen to information from another device on a plurality of frequency bands, the terminal device 1 may obtain feedback information from the terminal device 2 through listening.

However, a problem in an inter-PLMN scenario is that, because a frequency band on which the terminal device 1 sends the data is different from a frequency band on which the feedback information is located, the terminal device 1 cannot determine whether the feedback information is the feedback information corresponding to the data, and the terminal device 1 considers that the feedback information of the data is not obtained.

It can be learned that the HARQ mechanism cannot be implemented currently for terminal devices corresponding to different operators. Consequently, information transmission reliability is reduced.

In view of this, the technical solutions in embodiments of this application are provided. In this embodiment of this application, if a second terminal device camps on a second network device, the second terminal device may camp on a first network device. A first terminal device camps on the first network device. In other words, if two terminal devices camp on network devices in different PLMNs, one of the terminal devices may camp on a network device in which the other terminal device is located, so that the two terminal devices camp on a same network device. Therefore, if the two terminal devices need to communicate through a sidelink, the HARQ mechanism can be normally implemented. This improves reliability of information transmission between terminal devices.

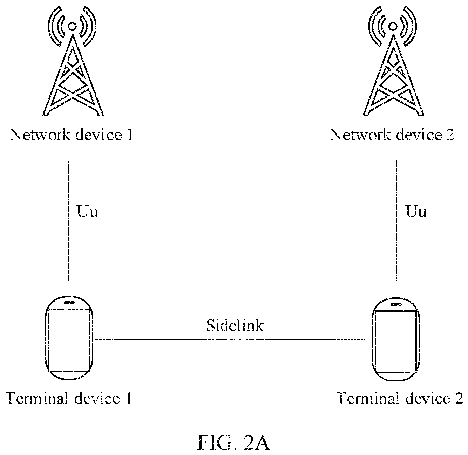

FIG. 2A shows an application scenario according to an embodiment of this application. FIG. 2A includes a network device 1, a network device 2, a terminal device 1, and a terminal device 2. The terminal device 1 camps on the network device 1, and the terminal device 2 camps on the network device 2. The terminal device 1 and the terminal device 2 may communicate through a sidelink. The network device 1 works, for example, in an evolved universal mobile telecommunications system terrestrial radio access (evolved UMTS terrestrial radio access, E-UTRA) system, or in an NR system, or in a next-generation communications system or another communications system. The network device 2 works, for example, in the E-UTRA system, or in the NR system, or in the next-generation communications system or another communications system. The network device 1 and the network device 2 may work in a same communications system, or may work in different communications systems.

The network device in FIG. 2A is, for example, a base station. The network device corresponds to different devices in different systems. For example, the network device may correspond to an eNB in a 4G system, and correspond to a 5G access network device such as a gNB in a 5G system. Certainly, the technical solutions provided in embodiments of this application may also be applied to a future mobile communications system. Therefore, the network device in FIG. 2A may also correspond to a network device in the future mobile communications system. In FIG. 2A, an example in which the network device is a base station is used. Actually, with reference to the foregoing descriptions, the network device may alternatively be a device such as an RSU.

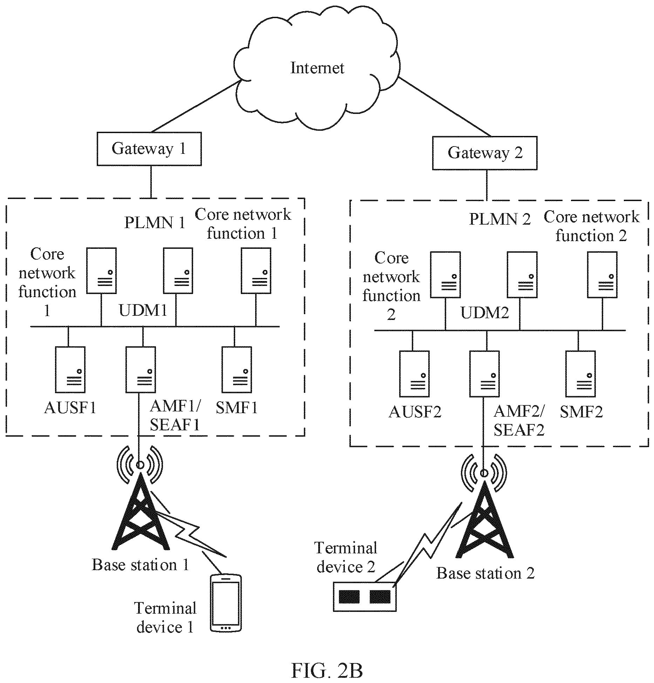

FIG. 2B shows another application scenario according to an embodiment of this application. FIG. 2B shows a first network and a second network. The first network corresponds to a PLMN 1, and the second network corresponds to a PLMN 2. The PLMN 1 and the PLMN 2 are different PLMNs. The first network includes an access network device 1 and a core network device. The core network device included in the first network may include AUSF1, AMF/SEAF1, SMF1, a CN function 1, and UDM1. The second network includes an access network device 2 and a core network device. The core network device included in the second network may include AUSF2, AMF/SEAF2, SMF2, a CN function 2, and UDM2. The first network accesses the internet (internet) by using a gateway (gateway) 1, and the second network accesses the internet by using a gateway 2. In addition, FIG. 2B further includes a terminal device 1 accessing the first network and a terminal device 2 accessing the second network.

In FIG. 2B, an example in which the access network device is a base station is used. To be specific, the access network device 1 is a base station 1, and the access network device 2 is a base station 2. The base station may correspond to different devices in different systems. For example, the base station may correspond to an eNB in a 4G system, and correspond to a 5G access network device such as a gNB in a 5G system. Certainly, the technical solutions provided in embodiments of this application may also be applied to a future mobile communications system. Therefore, the base station in FIG. 2B may also correspond to an access network device in the future mobile communications system. In FIG. 2B, an example in which the access network device is a base station is used. Actually, with reference to the foregoing descriptions, the access network device may alternatively be a device such as an RSU.

The technical solutions provided in embodiments of this application are described below in detail with reference to the accompanying drawings.

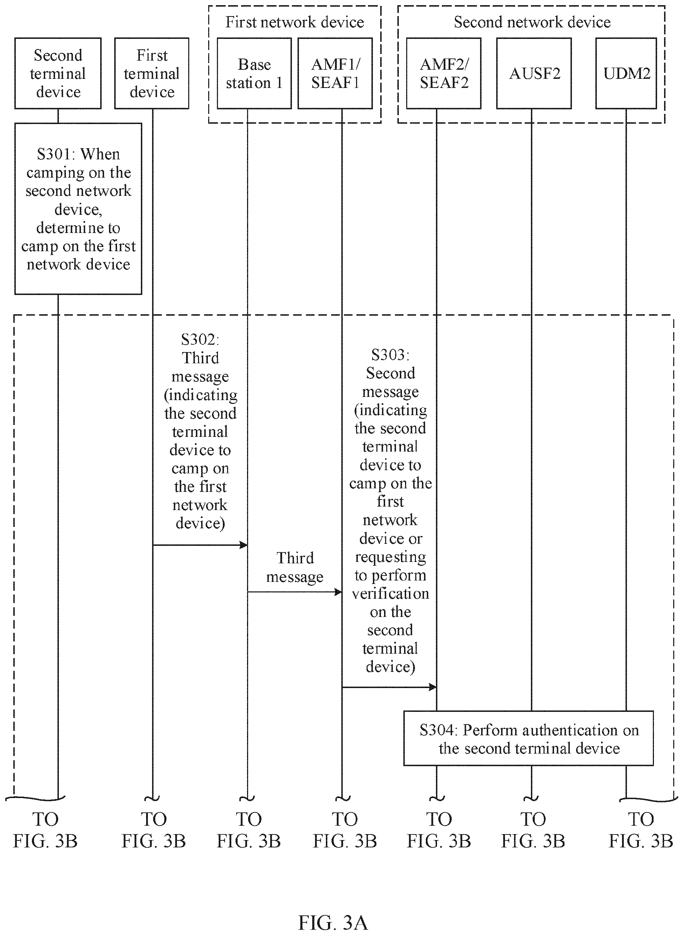

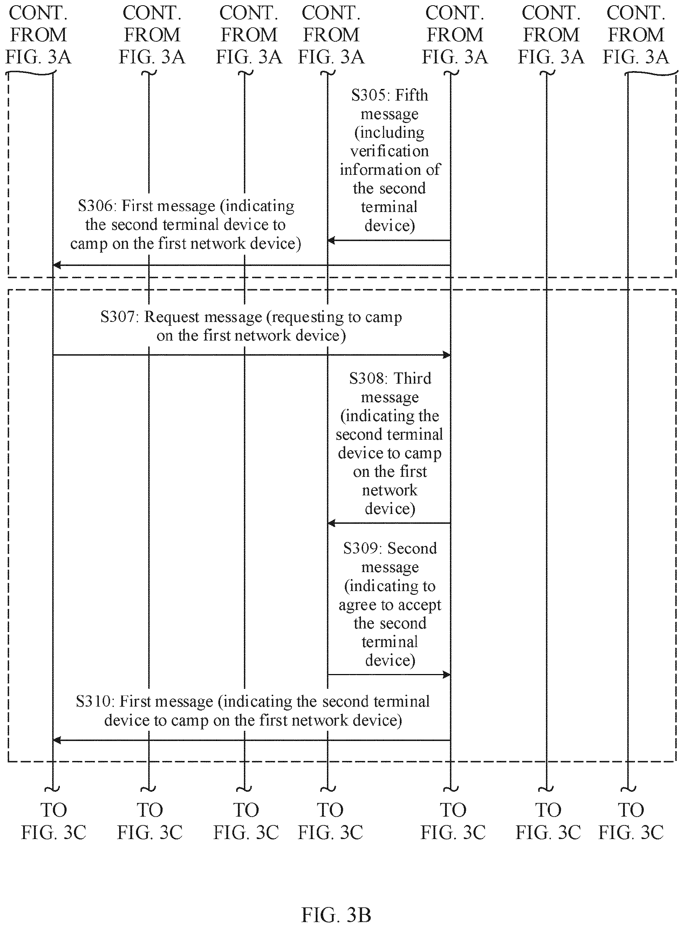

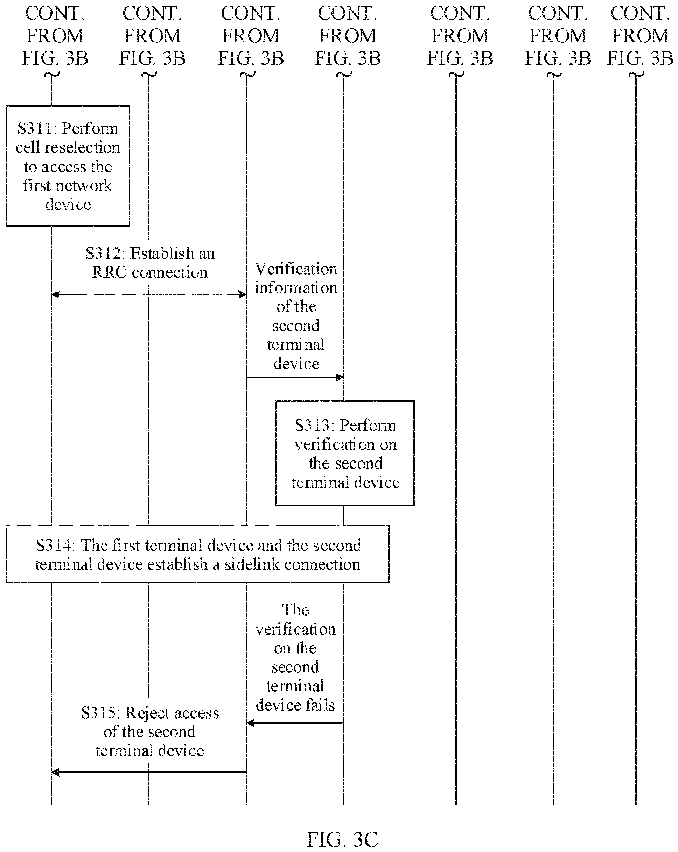

An embodiment of this application provides a first communications method. FIG. 3A to FIG. 3C are a flowchart of the method. In the following description process, an example in which the method is applied to the network architecture shown in FIG. 2B is used.

For ease of description, an example in which the method is performed by a network device and a terminal device is used below. Because an example in which this embodiment is applied to the network architecture shown in FIG. 2B is used, a first network device described below may include one or more of the base station 1, AMF1/SEAF1, SMF1, the CN function 1, or UDM1 included in the first network in the network architecture shown in FIG. 2B; a second network device described below may include one or more of the base station 2, AUSF2, AMF/SEAF2, SMF2, the CN function 2, or UDM2 included in the second network in the network architecture shown in FIG. 2B; a first terminal device described below may be the terminal device 1 in the network architecture shown in FIG. 2B; and a second terminal device described below may be the terminal device 2 in the network architecture shown in FIG. 2B.

S301: When camping on the second network device, the second terminal device determines to camp on the first network device.

The first network device and the second network device correspond to different PLMNs. In other words, the first network device and the second network device belong to different operators.

In this embodiment of this application, if the second terminal device camps on the second network device, the second terminal device may camp on the first network device. The first terminal device camps on the first network device. In other words, if two terminal devices camp on network devices in different PLMNs, one of the terminal devices may camp on a network device in which the other terminal device is located, so that the two terminal devices camp on a same network device. Therefore, if the two terminal devices need to communicate through a sidelink, a HARQ mechanism can be normally implemented. This improves reliability of information transmission between terminal devices.

There may be a plurality of determining manners in which the second terminal device determines to camp on the first network device. The following uses an example for description.

### 1. First determining manner in which the second terminal device determines to camp on the first network device

The second network device sends a first message to the second terminal device. The first message may indicate the second terminal device to camp on the first network device. In this case, after receiving the first message from the second network device, the second terminal device may determine to camp on the first network device based on the first message.

There may also be different implementations in which the second network device sends the first message to the second terminal device.

### Implementation 1

S302: The first terminal device sends a third message to the first network device, and the first network device receives the third message from the first terminal device. The third message is used to indicate the second terminal device to camp on the first network device.

For example, the first terminal device and the second terminal device may perform identification and pairing by establishing a connection in a non-3rd generation partnership project (3rd generation partnership project, 3GPP) manner, or the first terminal device and the second terminal device may perform identification and pairing in a 3GPP discovery process. After the identification and pairing, if the first terminal device determines that a network device on which the second terminal device camps is not the first network device, the first terminal device may request the first network device to enable the second terminal device to camp on the first network device. The non-3GPP manner is, for example, wireless fidelity (wireless fidelity, Wi-Fi), Bluetooth (Bluetooth), or near field communication (near field communication, NFC).

The third message may reuse a currently existing message. For example, the third message may include first information, and the first information is used to indicate the second terminal device to camp on the first network device. The first information may be carried in an existing field in the third message. For example, a reserved field in the third message may be used to carry the first information, or a reserved bit in a field in the third message may be used to carry the first information. Alternatively, a new field may be added to the third message, and the field is used to carry the first information.

Alternatively, the third message may be a newly defined message in this embodiment of this application.

S303: The first network device sends a second message to the second network device, and the second network device receives the second message from the first network device, where the second message is used to indicate the second terminal device to camp on the first network device, or is used to request to perform verification on the second terminal device.

For example, the first network device may include the base station 1 and AMF1/SEAF1. In this case, in S302, the first terminal device may actually send the third message to the base station 1 included in the first network device, and the base station 1 may receive the third message from the first terminal device. After receiving the third message, the base station 1 may send the third message to AMF1/SEAF1. In this case, AMF1/SEAF1 receives the third message from the base station 1.

For an implementation form of the second message, refer to the descriptions of the third message in S302. For example, the second message may reuse an existing message, or may be a newly defined message in this embodiment of this application.

In S303, AMF1/SEAF1 may send the second message to the second network device, and the second network device receives the second message from AMF1/SEAF1.

For example, the second network device includes AMF2/SEAF2, AUSF2, and UDM2. In this case, in S303, AMF1/SEAF1 may send the second message to AMF2/SEAF2 included in the second network device, and AMF2/SEAF2 receives the second message from AMF1/SEAF1.

For example, the third message in S302 includes an identifier of the second terminal device, and the second message in S303 may also include the identifier of the second terminal device, which indicates that the second message is related to the second terminal device. After receiving the second message, the second network device may perform authentication on the second terminal device. The third message sent by the first terminal device to the first network device includes the identifier of the second terminal device. For example, after the first terminal device and the second terminal device perform identification and pairing, the first terminal device obtains the identifier of the second terminal device. The identifier of the second terminal device is, for example, an ID of the second terminal device or other information that can indicate the second terminal device.

S304: The second network device performs authentication on the second terminal device.

For example, after receiving the second message from AMF1/SEAF1, AMF2/SEAF2 may trigger an authentication procedure to perform authentication on the second terminal device. There may be a plurality of manners in which the second network device performs authentication on the second terminal device. The following describes the authentication manners by using examples.

### 1. First authentication manner

For example, after receiving the second message, the second network device may obtain the identifier of the second terminal device that is included in the second message. Because the second terminal device camps on the second network device, and the second network device may have performed authentication on the second terminal device when the second terminal device registers with the second network device, the second network device may perform query based on the identifier of the second terminal device, to determine whether authentication information of the second terminal device is stored. The authentication information of the second terminal device may indicate that the authentication on the second terminal device succeeds or fails. If the second network device determines that the authentication information of the second terminal device is stored, it is equivalent to that the second network device completes the authentication on the second terminal device in S304. In this case, the second network device may send the authentication information of the second terminal device to the first network device, so that the first network device can determine whether the authentication on the second terminal device succeeds or fails.

Alternatively, if the second network device does not store the authentication information of the second terminal device, the second network device may perform authentication on the second terminal device, to obtain an authentication result.

Alternatively, even if the second network device stores the authentication information of the second terminal device, considering that an authentication process of the second terminal device probably is completed very early, the second network device may perform authentication on the second terminal device again to obtain a new authentication result, to ensure reliability of the authentication result.

If the second network device needs to obtain the authentication result of the second terminal device, in other words, if the second network device does not determine, based on the stored authentication information, whether the authentication on the second terminal device succeeds, the second network device may alternatively use the following second authentication manner.

### 2. Second authentication manner

For example, AMF2/SEAF2 sends a first request to AUSF2, and AUSF2 receives the first request from AMF2/SEAF2. The first request may be used to request to perform authentication on the second terminal device. For example, the first request may include the identifier of the second terminal device, to indicate to perform authentication on the second terminal device. Optionally, the first request may further include information about a sidelink to be used by the second terminal device, and the like. For example, the information about the sidelink to be used by the second terminal device may be sent by the first terminal device to AMF1/SEAF1 by using the third message in S302, and then sent by AMF1/SEAF1 to AMF2/SEAF2 by using the second message in S303. For example, after the first terminal device and the second terminal device perform identification and pairing, the first terminal device obtains the information about the sidelink to be used by the second terminal device. The sidelink information may be used to perform authentication on the second terminal device.

After receiving the first request, AUSF2 may send a second request to UDM2. UDM2 receives the second request from AUSF2. The second request may be used to request to obtain data used to perform authentication on the second terminal device, for example, authentication data for the sidelink information.

After receiving the second request, UDM2 may generate verification information of the second terminal device. The verification information of the second terminal device may be used to perform authentication on the second terminal device.

After generating the authentication data, UDM2 may send a response message of the second request to AUSF2. AUSF2 receives the response message of the second request from UDM2. The response message of the second request may include the verification information of the second terminal device.

After receiving the response message of the second request, AUSF2 may send a response message of the first request to AMF2/SEAF2. AMF2/SEAF2 receives the response message of the first request from AUSF2. The response message of the first request is used to, for example, request to obtain the verification information of the second terminal device.

After receiving the response message of the first request, AMF2/SEAF2 may send a third request to the second terminal device. The second terminal device receives the third request from AMF2/SEAF2. The third request may be used to request to obtain the verification information of the second terminal device.

After receiving the third request, the second terminal device may calculate an authentication reply. The authentication reply includes, for example, verification information of the second terminal device. The verification information of the second terminal device in the foregoing steps is obtained by UDM2, but the verification information of the second terminal device herein is data that is determined by the second terminal device and that is used to perform authentication on the second terminal device.

After obtaining the authentication reply, the second terminal device may send the authentication reply to AMF2/SEAF2. AMF2/SEAF2 receives the authentication reply from the second terminal device. Then, AMF2/SEAF2 may send the authentication reply to AUSF2, and AUSF2 receives the authentication reply from AMF2/SEAF2.

After receiving the authentication reply, AUSF2 also obtains the verification information of the second terminal device from the second terminal device. Because AUSF2 has obtained the verification information of the second terminal device from UDM2 previously, AUSF2 may perform verification based on the two pieces of verification information, to determine whether the authentication on the second terminal device succeeds. For example, AUSF2 compares the two pieces of verification information; and if the two pieces of verification information are consistent, AUSF2 determines that the authentication on the second terminal device succeeds; or if the two pieces of verification information are inconsistent, AUSF2 determines that the authentication on the second terminal device fails.

AUSF2 sends an authentication result to AMF2/SEAF2, and AMF2/SEAF2 receives the authentication result from AUSF2. The authentication result may indicate that the authentication on the second terminal device succeeds or fails, or indicate that the second terminal device is authorized or unauthorized (if the authentication on the second terminal device succeeds, it may be considered that the second terminal device is authorized; or if the authentication on the second terminal device fails, it may be considered that the second terminal device is unauthorized). If the authentication on the second terminal device succeeds or the second terminal device is authorized, AUSF2 may further send the verification information of the second terminal device to AMF2/SEAF2.

By performing the foregoing process, the second network device completes the authentication on the second terminal device.

Certainly, a manner in which the second network device performs authentication on the second terminal device is not limited to the foregoing two manners. A specific authentication manner is not limited in this embodiment of this application.

S305: The second network device sends a fifth message to the first network device, and the first network device receives the fifth message from the second network device.

For example, the fifth message includes the verification information of the second terminal device. The verification information of the second terminal device may be used to perform verification on the second terminal device, for example, may be used to verify whether the second terminal device is authorized.

For an implementation form of the fifth message, refer to the descriptions of the third message in S302. For example, the fifth message may reuse an existing message, or may be a newly defined message in this embodiment of this application.

For example, AMF2/SEAF2 included in the second network device may send the fifth message to AMF1/SEAF1 included in the first network device, and AMF1/SEAF1 receives the fifth message from AMF2/SEAF2. The verification information of the second terminal device that is included in the fifth message may be a string of random numbers, or may be a string of numbers generated based on an ID of the second terminal device in the second network.

S306: The second network device sends the first message to the second terminal device, where the first message may indicate the second terminal device to camp on the first network device. After receiving the first message from the second network device, the second terminal device may determine to camp on the first network device.

The first message may reuse a currently existing message. For example, the first message may be an RRC connection reconfiguration (RRC connection reconfiguration) message. For example, the first message may include second information, and the second information is used to indicate the second terminal device to camp on the first network device. The second information may be carried in an existing field in the first message. For example, a reserved field in the first message may be used to carry the first information, or a reserved bit in a field in the first message may be used to carry the second information. Alternatively, a new field may be added to the first message, and the field is used to carry the second information.

Alternatively, the first message may be a newly defined message in this embodiment of this application.

In an optional implementation, the first message in S306 may include the verification information of the second terminal device, to perform verification on the second terminal device in the first network device. For an implementation form of the first message, refer to the descriptions of the third message in S302. For example, the first message may reuse an existing message, or may be a newly defined message in this embodiment of this application.

For example, AMF2/SEAF2 included in the second network device may send the first message to the second terminal device, and the second terminal device receives the first message from AMF2/SEAF2.

### Implementation 2

S307: The second terminal device sends a request message to the second network device, and the second network device receives the request message from the second terminal device. The request message is used to request to camp on the first network device. The request message may carry a reason for requesting to camp on the first network device. For example, the request message may carry information about a sidelink service to be performed by the second terminal device.

For example, the first terminal device and the second terminal device may perform identification and pairing by establishing a connection in a non-3GPP manner, or the first terminal device and the second terminal device may perform pairing identification in a 3GPP discovery process. After the identification and pairing, if the second terminal device determines that a network device on which the second terminal device camps and a network device on which the first terminal device camps are not a same network device, the second terminal device may request the second network device, to camp on the first network device. Alternatively, when determining that a network device on which the second terminal device camps and a network device on which the first terminal device camps are not a same network device and determining that the two network devices correspond to different PLMNs, the second terminal device requests the second network device, to camp on the first network device. For example, the second terminal device may obtain PLMN information of the first terminal device from the first terminal device. The non-3GPP manner is, for example, Wi-Fi, Bluetooth, or NFC.

For an implementation form of the request message, refer to the descriptions of the third message in S302. For example, the request message may reuse an existing message, or may be a newly defined message in this embodiment of this application.

For example, the second terminal device may send the request message to AMF2/SEAF2 included in the second network device, and AMF2/SEAF2 receives the request message from the second terminal device.

S308: The second network device sends a third message to the first network device, and the first network device receives the third message from the second network device, where the third message may indicate the second terminal device to camp on the first network device, or indicate that the second terminal device camping on the second network device requests to camp on the first network device, or the third message may be used to request the first network device to accept the second terminal device.

For an implementation form of the third message, refer to the descriptions in S302. For example, the third message may reuse an existing message, or may be a newly defined message in this embodiment of this application.

In an optional implementation, the third message in S308 may include verification information of the second terminal device, to perform verification on the second terminal device. The verification information in the third message may be a string of random numbers, or may be a string of numbers generated based on an ID of the second terminal device in the second network.

For example, AMF2/SEAF2 in the second network device may send the third message to AMF1/SEAF1 in the first network device, and AMF1/SEAF1 receives the third message from AMF2/SEAF2.

S309: The first network device sends a second message to the second network device, and the second network device receives the second message from the first network device, where the second message may indicate the second terminal device to camp on the first network device, or the second message indicates that the first network device agrees to accept the second terminal device.

For an implementation form of the second message, refer to the descriptions of the third message in S302. For example, the second message may reuse an existing message, or may be a newly defined message in this embodiment of this application.

For example, AMF1/SEAF1 may send the second message to AMF2/SEAF2, and AMF2/SEAF2 receives the second message from AMF1/SEAF1. The second message may include a verification message, to subsequently perform identity authentication on the second terminal device in the first network. The verification information in the second message may be a string of random numbers, or may be a string of numbers generated based on an ID of the second terminal device in the second network.

S310: The second network device sends a first message to the second terminal device, where the first message may indicate the second terminal device to camp on the first network device. After receiving the first message from the second network device, the second terminal device may determine to camp on the first network device.

In an optional implementation, the first message in S310 may include the verification information of the second terminal device, to perform verification on the second terminal device in the first network. For an implementation form of the first message, refer to the descriptions of the first message in S306. For example, the first message may reuse an existing message, or may be a newly defined message in this embodiment of this application.

For example, AMF2/SEAF2 may send the first message to the second terminal device, and the second terminal device receives the first message from AMF2/SEAF2.

### 2. Second determining manner in which the second terminal device determines to camp on the first network device

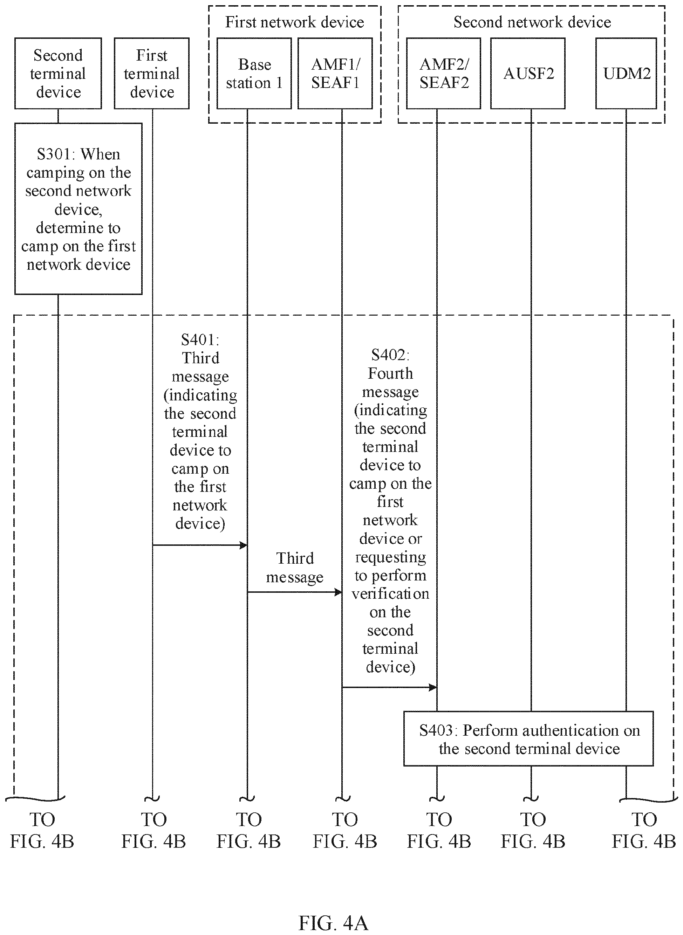

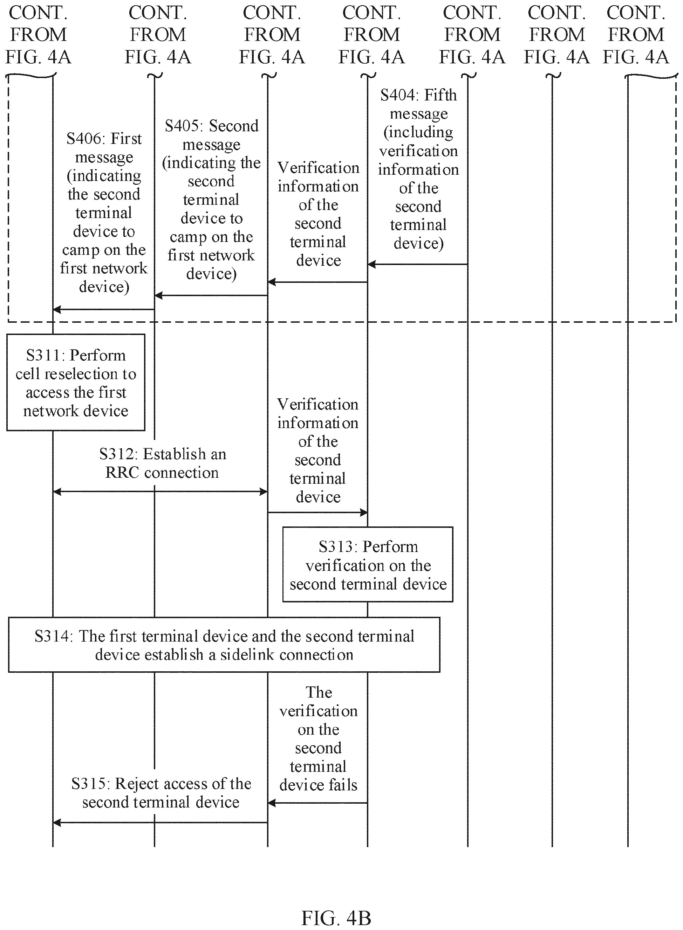

The first terminal device sends a first message to the second terminal device, and the second terminal device receives the first message from the first terminal device. The first message may indicate the second terminal device to camp on the first network device. Refer to FIG. 4A and FIG. 4B. One scenario of this determining manner is described below.

S401: The first terminal device sends a third message to the first network device, and the first network device receives the third message from the first terminal device, where the third message is used to indicate the second terminal device to camp on the first network device.

For more content of S401, refer to the descriptions of S302.

S402: The first network device sends, to the second network device, a message used to request to perform verification on the second terminal device, or a message used to indicate the second terminal device to camp on the first network device, or a message used to request the second terminal device to camp on the first network device, and the second network device receives the message from the first network device. For example, the message is a fourth message.

For more content of S402, refer to the descriptions of S303.

S403: The second network device performs authentication on the second terminal device.

For more content of S403, refer to the descriptions of S304.

S404: The second network device sends a fifth message to the first network device, and the first network device receives the fifth message from the second network device.

For example, the fifth message includes the verification information of the second terminal device. The verification information of the second terminal device may be used to perform verification on the second terminal device, for example, may be used to verify whether the second terminal device is authorized.

For more content of S404, refer to the descriptions of S305.

S405: The first network device sends a second message to the first terminal device, and the first terminal device receives the second message from the first network device. The second message may indicate the second terminal device to camp on the first network device.

For an implementation form of the second message, refer to the descriptions of the third message in S302. For example, the second message may reuse an existing message, or may be a newly defined message in this embodiment of this application.

For example, AMF1/SEAF1 included in the first network device may send the verification information of the second terminal device to the base station 1, and the base station 1 receives the verification information of the second terminal device from AMF1/SEAF1. In addition, the base station 1 may determine the second message, and send the second message to the first terminal device, and the first terminal device receives the second message from the base station 1.

S406: The first terminal device sends a first message to the second terminal device, and the second terminal device receives the first message from the first terminal device. The first message may indicate the second terminal device to camp on the first network device.

### 3. Third determining manner in which the second terminal device determines to camp on the first network device

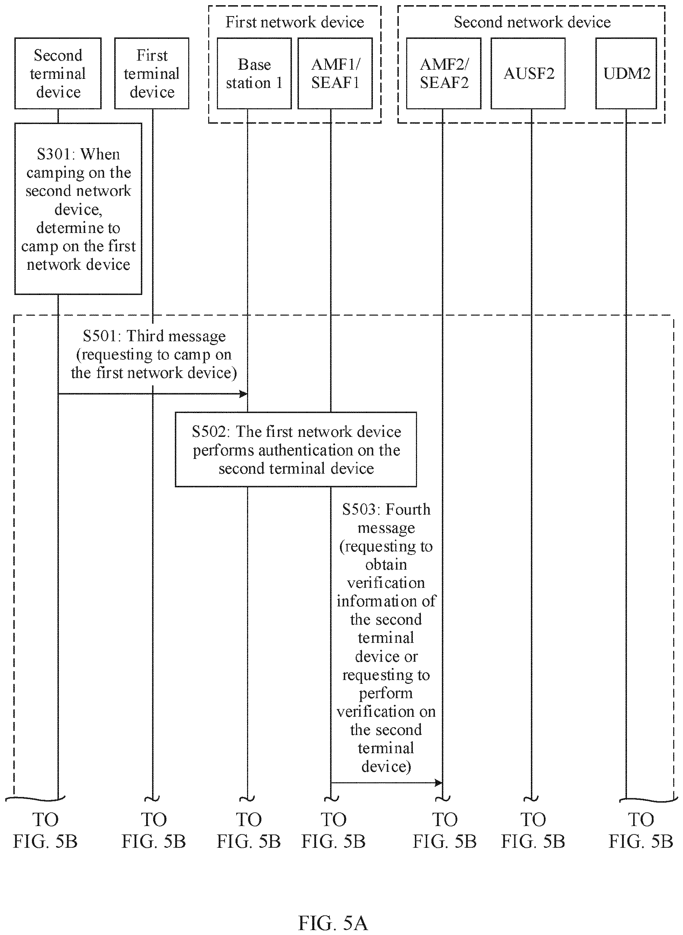

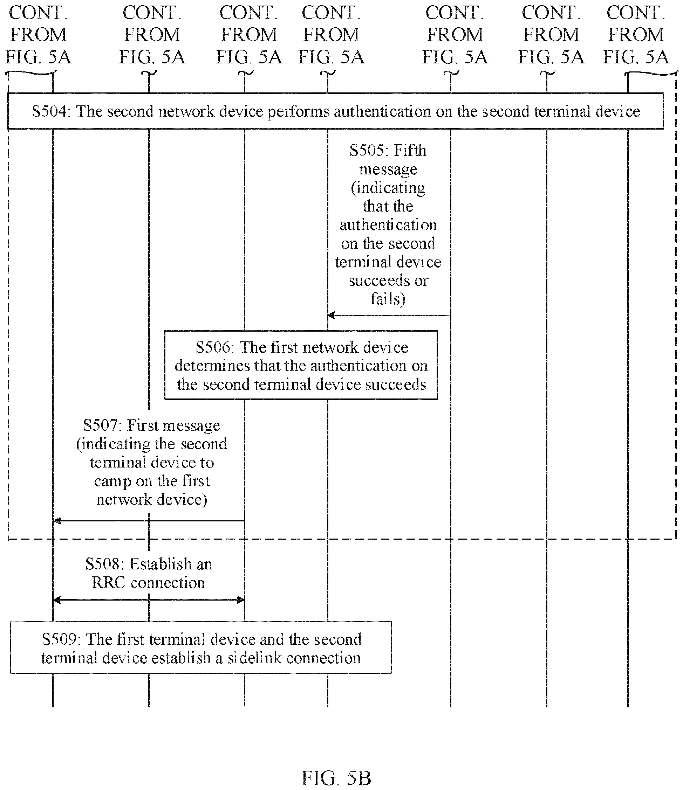

The first network device sends a first message to the second terminal device, and the second terminal device receives the first message from the first network device. The first message may indicate the second terminal device to camp on the first network device. Refer to FIG. 5A and FIG. 5B. One scenario of this determining manner is described below.

S501: The second terminal device sends a third message to the first network device, and the first network device receives the third message from the second terminal device. The third message may be used to request to camp on the first network device.

For example, if the second terminal device considers that the second terminal device needs to access a cell in the first network device (for example, before the second terminal device needs to communicate with the first terminal device through a sidelink, or in a process in which the second terminal device communicates with the first terminal device through a sidelink, if the second terminal device determines that a network device on which the second terminal device camps is not a network device in which the first terminal device is located, the second terminal device may consider that the second terminal device needs to access the cell in the first network device), the second terminal device may actively request to access the first network device.

For an implementation form of the third message, refer to the descriptions in S302. For example, the third message may reuse an existing message, or may be a newly defined message in this embodiment of this application.

For example, the second terminal device may send the third message to the base station 1, and the base station 1 receives the third message from the second terminal device.

S502: The first network device performs authentication on the second terminal device.

When performing authentication on the second terminal device, the base station 1 and AMF1/SEAF1 determine that the second terminal device is a terminal device camping on the second network device.

S503: The first network device sends a fourth message to the second network device, and the second network device receives the fourth message from the first network device. The fourth message may be used to request to obtain the verification information of the second terminal device, or used to request to perform verification on the second terminal device.

For an implementation form of the fourth message, refer to the descriptions of the third message in S302. For example, the fourth message may reuse an existing message, or may be a newly defined message in this embodiment of this application.

For example, AMF1/SEAF 1 may send the fourth message to AMF2/SEAF2, and AMF2/SEAF2 receives the fourth message from AMF1/SEAF1.

S504: The second network device performs authentication on the second terminal device. In FIG. 5A and FIG. 5B, the authentication process does not include interaction with the first terminal device. The second network device transparently transmits an authentication message by using the first network device, and interacts with the second terminal device.

In S504, the second network device needs to perform authentication on the second terminal device. For details, refer to the authentication manner described in S304. Alternatively, the second network device may perform authentication on the second terminal device in another manner.

S505: The second network device sends a fifth message to the first network device, and the first network device receives the fifth message from the second network device. The fifth message may indicate that the authentication on the second terminal device succeeds or fails. Optionally, the fifth message may further include the verification information of the second terminal device. The verification information in the fifth message may be a string of random numbers, or may be a string of numbers generated based on an ID of the second terminal device in the second network.

For an implementation form of the fifth message, refer to the descriptions of the third message in S302. For example, the fifth message may reuse an existing message, or may be a newly defined message in this embodiment of this application.

For example, AMF2/SEAF2 may send the fifth message to AMF1/SEAF1, and AMF1/SEAF1 receives the fifth message from AMF2/SEAF2.

S506: The first network device determines that the authentication on the second terminal device succeeds.

In this embodiment of this application, an example in which the authentication on the second terminal device succeeds is used.

S507: The first network device sends a first message to the second terminal device, and the second terminal device receives the first message from the first network device, where the first message may indicate the second terminal device to camp on the first network device. For an implementation form of the first message, refer to the descriptions of the third message in S302. For example, the first message may reuse an existing message, or may be a newly defined message in this embodiment of this application.

For an implementation form of the first message, refer to the descriptions of the first message in S306. For example, the first message may reuse an existing message, or may be a newly defined message in this embodiment of this application.

If the second terminal device determines, in the foregoing first determining manner or second determining manner, to camp on the first network device, after the second terminal device determines to camp on the first network device, the method may further include corresponding steps, which are described below.

S311: The second terminal device performs cell reselection to access the first network device.

For example, the second terminal device first disconnects an RRC connection to the second network device, and enters an RRC idle (idle) state. Then, the second terminal device in the RRC idle state may perform cell reselection based on information corresponding to the first network device, to access the first network device.

In an optional manner, the first message received by the second terminal device may include an identifier of the first network device, for example, an ID of the first network device or a PLMN ID of the first network. When performing cell reselection, the second terminal device may determine to reselect a cell in the first network device. Alternatively, the first message may not include the identifier of the first network device. However, the first terminal device and the second terminal device may have communicated with each other, for example, may communicate with each other in a Bluetooth or Wi-Fi manner. The first terminal device may send the identifier of the first network device to the second terminal device, so that the second terminal device can obtain the identifier of the first network device from the first terminal device.

S312: The second terminal device establishes an RRC connection to the first network device.

For example, the second terminal device may establish the RRC connection to the first network device by performing a random access process. For example, the second terminal device may establish an RRC connection to the base station 1. The random access process is not described herein again. That the second terminal device establishes an RRC connection to the first network device in S312 may mean establishing a new RRC connection or re-establishing an RRC connection.

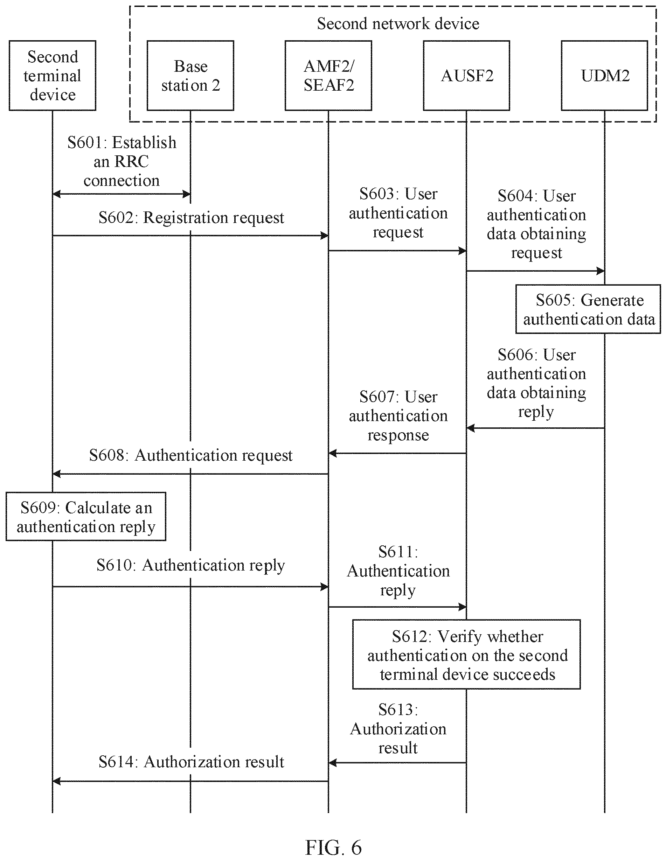

After establishing the RRC connection, the second terminal device may perform a registration process, to register with the first network device. In the registration process, the first network device may further perform corresponding authentication on the second terminal device, to determine whether the second terminal device is authorized. To understand this process, the following describes current authentication performed by the terminal device in the registration process with reference to FIG. 6. An example in which the second terminal device registers with the first network device is used. The first network device includes the base station 1, AMF1/SEAF1, AUSF1, and UDM1. The authentication process may further include: The first network device identifies a sidelink service to be performed by the second terminal device, to generate specific authentication information for a specific service. For example, if it is determined that the second terminal device needs to perform a sidelink VR/AR service, the first network device determines authentication information in the first network device.

S601: The second terminal device establishes an RRC connection to the base station 1.

The second terminal device may select, based on a SIM card disposed in the second terminal device, a cell in a PLMN corresponding to the SIM card. If the second terminal device does not learn of a specific network device that needs to be accessed, the second terminal device may perform reselection, to select a corresponding cell. However, in this embodiment of this application, if the second terminal device obtains the identifier of the first network device, the second terminal device may perform cell reselection based on the identifier of the first network device, to reselect a cell in the first network device, in other words, reselect a cell in the base station 1. If the registration procedure is applied to this embodiment of this application, S601 and S312 may be a same step.

S602: The second terminal device sends a registration request to AMF1/SEAF1, and AMF1/SEAF1 receives the registration request from the second terminal device, where the registration request may carry information about a sidelink to be used by the second terminal device, for example, service information.

S603: AMF1/SEAF1 sends a user authentication request to AUSF1, and AUSF1 receives the user authentication request from AMF1/SEAF1. The user authentication request is used to request to perform authentication on the second terminal device.

The user authentication request may carry the information about the sidelink to be used by the second terminal device. If the procedure is applied to this embodiment of this application, the sidelink information carried in the user authentication request may be sent by the first terminal device to the first network device by using the third message in S302, and then sent by the first network device to the second network device by using the second message in S303. For example, after the first terminal device and the second terminal device perform identification and pairing, the first terminal device obtains the information about the sidelink to be used by the second terminal device. The sidelink information may be used to perform authentication on the second terminal device.

S604: AUSF1 sends a user authentication data obtaining request to UDM1, and UDM1 receives the user authentication data obtaining request from AUSF1.

The user authentication data obtaining request may be used to request to obtain data used to perform authentication on the second terminal device, for example, authentication data for the sidelink information.

S605: UDM1 generates the authentication data. The authentication data may be used to perform authentication on the second terminal device. The authentication data may also be referred to as verification information of the second terminal device.

S606: UDM1 sends a user authentication data obtaining reply to AUSF1, and AUSF1 receives the user authentication data obtaining reply from UDM1.

The user authentication data obtaining reply may carry the authentication data.

S607: AUSF1 sends a user authentication response to AMF1/SEAF1, and AMF1/SEAF1 receives the user authentication response from AUSF1.

S608: AMF1/SEAF1 sends an authentication request to the second terminal device, and the second terminal device receives the authentication request from AMF1/SEAF1.

S609: The second terminal device calculates an authentication reply. The authentication reply includes, for example, authentication data used to perform authentication on the second terminal device. The authentication data in S609 is obtained by the second terminal device, and the authentication data in S605 is obtained by UDM1.

S610: The second terminal device sends the authentication reply to AMF1/SEAF1, and AMF1/SEAF1 receives the authentication reply from the second terminal device.

S611: AMF1/SEAF1 sends the authentication reply to AUSF1, and AUSF1 receives the authentication reply from AMF1/SEAF1.

S612: AUSF1 verifies whether the authentication on the second terminal device succeeds.

For example, AUSF1 compares the authentication data included in the authentication reply with the authentication data from UDM1; and if the two pieces of data are consistent, AUSF1 determines that the authentication on the second terminal device succeeds; or if the two pieces of data are inconsistent, AUSF1 determines that the authentication on the second terminal device fails.

S613: AUSF2 sends an authentication result to AMF1/SEAF1, and AMF1/SEAF1 receives the authentication result from AUSF1. The authentication result may indicate that the authentication on the second terminal device succeeds or fails, or indicate that the second terminal device is authorized or unauthorized (if the authentication on the second terminal device succeeds, it may be considered that the second terminal device is authorized; or if the authentication on the second terminal device fails, it may be considered that the second terminal device is unauthorized).

S614: AMF1/SEAF1 sends the authentication result to the second terminal device, and the second terminal device receives the authentication result from AMF1/SEAF1, so that the second terminal device can determine whether the authentication on the second terminal device succeeds, where S614 is an optional step.

FIG. 6 shows a current authentication process performed when a terminal device performs registration. In this embodiment of this application, the second terminal device registers with the first network device. For the authentication in the registration process, refer to the embodiment shown in FIG. 6.

S313: The first network device performs verification on the second terminal device. If the verification succeeds, S314 is performed; or if the verification fails, S315 is performed.

The second terminal device may send verification information of the second terminal device to the first network device. The verification information of the second terminal device that is sent by the second terminal device is included in the first message. The first network device also obtains verification information of the second terminal device from the second network device (for example, the fifth message or the third message from the second network device may include the verification information of the second terminal device). In this case, the first network device may perform verification based on the verification information from the second terminal device and the verification information from the second network device. For example, the first network device may compare the verification information from the second terminal device with the verification information from the second network device, to determine whether the two pieces of information are consistent; and if the two pieces of information are consistent, the first network device determines that the verification on the second terminal device succeeds; or if the two pieces of information are inconsistent, the first network device determines that the verification on the second terminal device fails. The verification information of the second terminal device may be a string of random numbers, or may be a string of numbers generated based on an ID of the second terminal device in the second network.

For example, the second terminal device may send the verification information of the second terminal device to the first network device by using any message in an RRC connection establishment process, for example, an RRC establishment request message or an RRC establishment completion message; or the second terminal device may send the verification information of the second terminal device to the first network device by using any message after the RRC connection is established; or the second terminal device may send the verification information of the second terminal device to the first network device by using a newly defined message in this embodiment of this application. If the verification information of the second terminal device is sent by using the newly defined message, an occurrence occasion of the message is not limited.

In the embodiment shown in FIG. 6, the second terminal device sends the verification information of the second terminal device to AMF1/SEAF1 by using the authentication reply in S610, AMF1/SEAF1 sends the authentication reply to AUSF1, and AUSF1 performs verification on the second terminal device. However, in this embodiment of this application, for example, the second terminal device sends the verification information of the second terminal device to the base station 1. After receiving the verification information of the second terminal device, the base station 1 may send the verification information of the second terminal device to AMF1/SEAF1. AMF1/SEAF1 performs verification on the second terminal device. Alternatively, in this embodiment of this application, AMF1/SEAF1 may further send the verification information of the second terminal device to AUSF1, and AUSF1 performs verification on the second terminal device. Therefore, in this embodiment of this application, the second terminal device may alternatively send the verification information of the second terminal device to AMF1/SEAF1 by using the authentication reply in S610, AMF1/SEAF1 sends the authentication reply to AUSF1, and AUSF1 performs verification on the second terminal device. In other words, when S612 is performed, S313 may be actually performed. However, a difference is that, in S313, the first network device compares the verification information from the second terminal device with the verification information from the second network device. In other words, one of the two pieces of verification information compared by the first network device is from the second terminal device, and the other is from the second network device (not determined by the first network device).

S314: The first terminal device and the second terminal device establish a sidelink connection in the first network device.

In this embodiment of this application, if two terminal devices camp on network devices in different PLMNs, one of the terminal devices may camp on a network device in which the other terminal device is located, so that the two terminal devices camp on a same network device. Therefore, if the two terminal devices communicate through a sidelink, a HARQ mechanism can be normally implemented. This improves reliability of information transmission between terminal devices.

S315: The first network device sends a reject message to the second terminal device, and the second terminal device receives the reject message from the first network device. The reject message is used to indicate to reject access of the second terminal device.

If verification performed by the first network device on the second terminal device fails, the second terminal device may be unauthorized, and the first network device may reject access of the second terminal device, to ensure network security. For example, if verification performed by AMF1/SEAF1 on the second terminal device fails, AMF1/SEAF1 may send, to the base station 1, information used to indicate that the verification on the second terminal device fails. After receiving the information from AMF1/SEAF1, the base station 1 may send the reject message to the second terminal device. The second terminal device may receive the reject message from the base station 1.

S311 to S315 describe the following: If the second terminal device determines, in the foregoing first determining manner or second determining manner, to camp on the first network device, after the second terminal device determines to camp on the first network device, the method may further include corresponding steps. If the second terminal device determines, in the foregoing third determining manner, to camp on the first network device, after the second terminal device determines to camp on the first network device, the method may also include corresponding steps, which are described below.

For example, the second terminal device establishes an RRC connection to the first network device. For example, the second terminal device may establish the RRC connection to the first network device by performing a random access process. For example, the second terminal device may establish an RRC connection to the base station 1. The random access process is not described herein again.

The first terminal device and the second terminal device establish a sidelink connection in the first network device. In the third determining manner, the first network device has determined that the authentication on the second terminal device succeeds. Therefore, the first network device does not need to perform verification on the second terminal device, and the second terminal device can communicate in the first network device after the random access succeeds.

In this embodiment of this application, if two terminal devices camp on network devices in different PLMNs, one of the terminal devices may camp on a network device in which the other terminal device is located, so that the two terminal devices camp on a same network device. Therefore, if the two terminal devices communicate through a sidelink, a HARQ mechanism can be normally implemented. This improves reliability of information transmission between terminal devices.

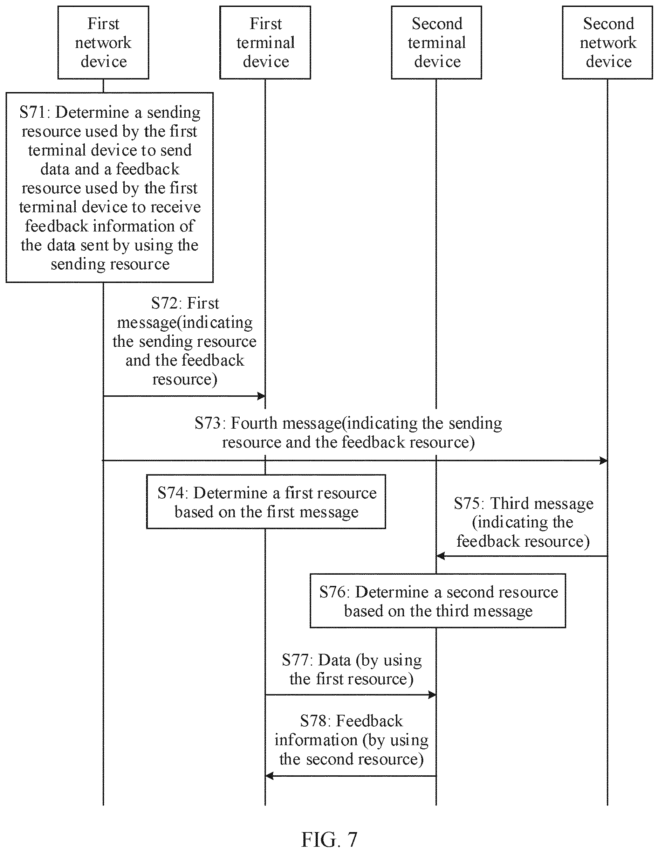

To resolve a same technical problem, an embodiment of this application provides a second communications method. FIG. 7 is a flowchart of the method. In the following description process, an example in which the method is applied to the network architecture shown in FIG. 2A is used.

For ease of description, an example in which the method is performed by a network device and a terminal device is used below. Because an example in which this embodiment is applied to the network architecture shown in FIG. 2A is used, a first network device described below may be the network device 1 in the network architecture shown in FIG. 2A, a second network device described below may be the network device 2 in the network architecture shown in FIG. 2A, a first terminal device described below may be the terminal device 1 in the network architecture shown in FIG. 2A, and a second terminal device described below may be the terminal device 2 in the network architecture shown in FIG. 2A.

S71: The first network device determines a sending resource used by the first terminal device to send data and a feedback resource used by the first terminal device to receive feedback information of the data sent by using the sending resource.

The sending resource may include a first resource, and the feedback resource includes a second resource; or the sending resource includes a first resource pool, and the feedback resource includes a second resource pool.

The first terminal device needs to communicate with the second terminal device through a sidelink. A sending resource required for communication may be allocated by the first network device. There are two allocation manners in which the first network device allocates the sending resource to the first terminal device. In one allocation manner, a resource required each time the first terminal device sends data is scheduled by the first network device. In this case, the sending resource determined by the first network device may be the first resource. In the other allocation manner, the first network device may configure a resource pool for the first terminal device. For example, the first network device may send information about the resource pool in a broadcast manner. In this case, all or some of terminal devices in coverage of the first network device may send data by using the resource pool. In this case, the sending resource determined by the first network device may be the first resource pool, and the first resource pool includes one or more resources used to send data. The first terminal device camps on the first network device. The second terminal device camps on the second network device. The first network device and the second network device correspond to different PLMNs.

To implement a HARQ mechanism, after the first terminal device sends data to the second terminal device, the second terminal device needs to send feedback information corresponding to the data to the first terminal device. For example, the feedback information is an acknowledgment (ACK) or a negative acknowledgment (NACK). The ACK indicates that the second terminal device successfully receives the data, and the NACK indicates that the second terminal device fails to receive the data. The second terminal device also needs to use a corresponding resource to send the feedback information corresponding to the data to the first terminal device. In this embodiment of this application, in addition to the sending resource, the first network device may also determine the resource (referred to as the feedback resource in this specification) used to receive the feedback information of the data sent by using the sending resource.

S72: The first network device sends a first message, and the first terminal device receives the first message from the first network device. The first message is used to indicate the sending resource and the feedback resource.

For example, the first message may indicate the feedback resource. After receiving the first message, the first terminal device may determine that the feedback resource is used to receive the feedback information of the data sent by using the sending resource. Alternatively, in addition to the feedback resource, the first message may further indicate that the feedback resource is used to receive the feedback information of the data sent by using the sending resource.

For example, if the sending resource is the first resource pool, and the feedback resource is the second resource pool, the first message may be a broadcast message, and all terminal devices that receive the first message may send data by using the first resource pool, and may receive feedback information by using the second resource pool. The first terminal device is only one of the plurality of terminal devices. Alternatively, if the sending resource is the first resource, and the feedback resource is the second resource, the first message may be a unicast message, and the first resource and the second resource are configured for the first terminal device.

Alternatively, the first network device may respectively indicate the sending resource and the feedback resource by using two messages. For example, the two messages may be sent at the same time or at different time.

Alternatively, if the sending resource is the first resource pool, and the feedback resource is the second resource pool, there is another possible manner in which the first resource pool and the second resource pool may be preconfigured in the terminal devices, or may be specified in a protocol, or the like. In this case, the first network device may not need to send the first message.

In this embodiment of this application, in addition to the sending resource, the first network device may further determine the feedback resource used to receive the feedback information of the data sent by using the sending resource. For example, to implement the HARQ mechanism, after the first terminal device sends data to the second terminal device, the second terminal device needs to send feedback information corresponding to the data to the first terminal device. For example, the feedback information is an ACK or a NACK. The second terminal device also needs to use a corresponding resource to send the feedback information corresponding to the data to the first terminal device. If the second network device determines the resource used to send the feedback information, the first terminal device may fail to identify whether the feedback information is the feedback information corresponding to the data. Consequently, a feedback failure actually occurs. Therefore, in this embodiment of this application, the first network device may determine the feedback resource, and the first network device may notify the first terminal device of both the determined sending resource and the determined feedback resource. The first terminal device may listen to the feedback information by using the feedback resource, so that the first terminal device can determine that the feedback information corresponds to the data sent by using the sending resource. This ensures normal running of the HARQ mechanism and improves transmission reliability.

S73: The first network device sends a fourth message to the second network device, where the fourth message is used to indicate the sending resource and the feedback resource; and the second network device receives the fourth message from the first network device, and may determine the sending resource and the feedback resource based on the fourth message.

After determining the sending resource and the feedback resource, the first network device may notify the second network device of the sending resource and the feedback resource.

S74: The first terminal device determines the first resource based on the first message.

When the first terminal device is to send the data to the second terminal device, the first terminal device may determine the first resource.

If the sending resource indicated by the first message is the first resource, the first terminal device may determine the first resource. Alternatively, if the sending resource indicated by the first message is the first resource pool, the first terminal device may select the first resource from the first resource pool to send the data.

S73 may be performed before S74; or S73 may be performed after S74; or S73 and S74 may be simultaneously performed.

S75: The second network device sends a third message, and the second terminal device receives the third message from the second network device. The third message is used to indicate the feedback resource.

For example, the third message may indicate the feedback resource. After receiving the third message, the second terminal device may determine that the feedback resource is used to receive the feedback information of the data sent by using the sending resource. Alternatively, in addition to the feedback resource, the third message may further indicate that the feedback resource is used to receive the feedback information of the data sent by using the sending resource.

For example, if the feedback resource is the second resource pool, the third message may be a broadcast message, and all terminal devices that receive the third message may send, by using the second resource pool, feedback information corresponding to the first resource pool. The second terminal device is only one of the plurality of terminal devices. Alternatively, if the feedback resource is the second resource, the third message may be a unicast message, and the second resource is configured for the second terminal device.

S75 may be performed after S73. In addition, S75 may be performed before S74; or S75 may be performed after S74; or S75 and S74 may be simultaneously performed.

S76: The second terminal device determines the second resource based on the third message.

When the second terminal device needs to receive the data from the first terminal device, the second terminal device may determine the second resource.

If the sending resource indicated by the third message is the second resource, the second terminal device may determine the second resource. Alternatively, if the sending resource indicated by the third message is the second resource pool, the second terminal device may select the second resource from the second resource pool to send the feedback information.

S77: The first terminal device sends the data to the second terminal device on the first resource, and the second terminal device receives the data from the first terminal device by using the first resource.

S78: The second terminal device sends the feedback information to the first terminal device on the second resource, and the first terminal device receives the feedback information from the second terminal device on the second resource. The feedback information corresponds to the data in S77. The feedback information is, for example, an ACK or a NACK.

If the second terminal device determines the feedback resource, after receiving the data from the first terminal device, the second terminal device sends the feedback information of the data to the first terminal device by using the feedback resource. If the feedback resource is the second resource, the second terminal device sends the feedback information of the data to the first terminal device on the second resource. Alternatively, if the feedback resource is the second resource pool, the second terminal device may select a resource from the second resource pool to send the feedback information. For example, the second terminal device selects the second resource to send the feedback information.

In addition, the first terminal device also determines, based on the first message, the feedback resource corresponding to the sending resource. If the feedback resource is the second resource, the first terminal device may listen to the feedback information of the data on the second resource. The first terminal device can determine, provided that feedback information is received on the second resource, that the feedback information is the feedback information corresponding to the data. Alternatively, if the feedback resource is the second resource pool, the first terminal device may listen to the feedback information of the data on all or some of resources included in the second resource pool. Because the second terminal device sends the feedback information on the second resource, the first terminal device may receive the feedback information on the second resource. The first terminal device can determine, provided that feedback information is received on a resource included in the second resource pool, that the feedback information is the feedback information corresponding to the data.

Alternatively, there is another manner. If the sending resource is the first resource pool, and the feedback resource is the second resource pool, the first terminal device may select the first resource from the first resource pool to send the data, and may further select the second resource from the second resource pool to send the feedback information of the data. The first terminal device may send first indication information to the second terminal device. The first indication information may indicate the second resource; or the first indication information indicates the second resource, and indicates that the second resource is used to send the feedback information of the data received by using the first resource. After the second terminal device receives the first indication information from the first terminal device, the second terminal device may determine the second resource. Therefore, after receiving the data from the first terminal device, the second terminal device does not need to select a resource from the second resource pool, but may send the feedback information of the data to the first terminal device by using the second resource. In addition, the first terminal device does not need to listen on the second resource pool, but only needs to listen on the second resource. This reduces power consumption of the first terminal device.

In an optional implementation, the second terminal device may need to simultaneously perform feedback on the second resource and perform sending on a resource of the second network. If the second terminal device cannot complete simultaneous sending due to a capability problem, it may be agreed that feedback information is preferentially sent, or data of the second terminal device is preferentially sent, or the like. This manner can avoid a case in which a transmit end and a receive end have inconsistent understandings during communication on a sidelink.

In this embodiment of this application, if the first terminal device and the second terminal device need to communicate through a sidelink, and network devices to which the first terminal device and the second terminal device belong correspond to different PLMNs, the first network device may determine a sending resource used by the first terminal device to send data and a feedback resource used by the second terminal device to send feedback information. Therefore, the second terminal device sends the feedback information by using the feedback resource, and the first terminal device can determine, provided that feedback information is obtained through listening on the feedback resource, that the feedback information is feedback information corresponding to the sent data. This manner can implement normal running of the HARQ mechanism and improve transmission reliability.

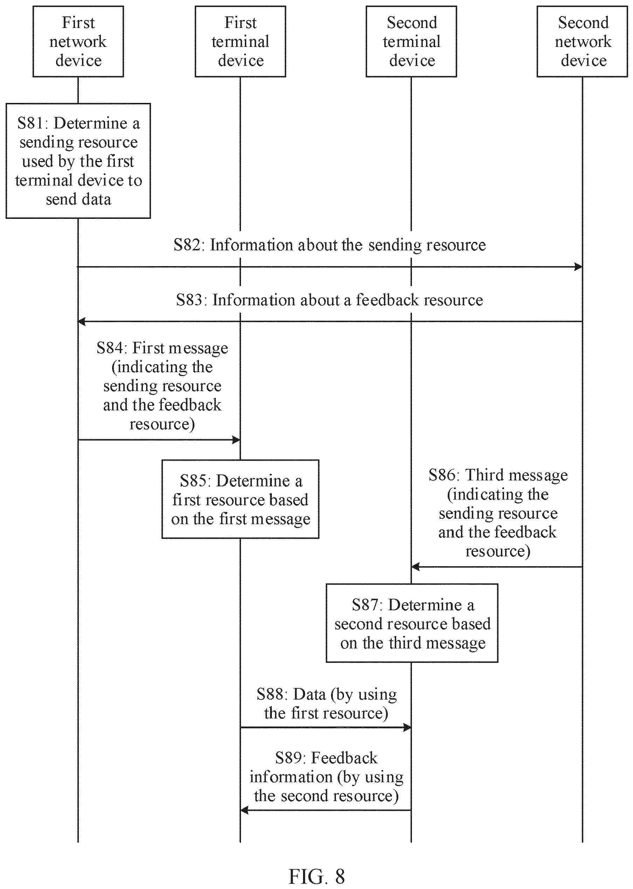

To resolve a same technical problem, an embodiment of this application provides a third communications method. FIG. 8 is a flowchart of the method. In the following description process, an example in which the method is applied to the network architecture shown in FIG. 2A is used.

For ease of description, an example in which the method is performed by a network device and a terminal device is used below. Because an example in which this embodiment is applied to the network architecture shown in FIG. 2A is used, a first network device described below may be the network device 1 in the network architecture shown in FIG. 2A, a second network device described below may be the network device 2 in the network architecture shown in FIG. 2A, a first terminal device described below may be the terminal device 1 in the network architecture shown in FIG. 2A, and a second terminal device described below may be the terminal device 2 in the network architecture shown in FIG. 2A.

S81: The first network device determines a sending resource used by the first terminal device to send data.

The sending resource may include a first resource or a first resource pool.

The first terminal device needs to communicate with the second terminal device through a sidelink. A sending resource required for communication may be allocated by the first network device. There are two allocation manners in which the first network device allocates the sending resource to the first terminal device. In one allocation manner, a resource required each time the first terminal device sends data is scheduled by the first network device. In this case, the sending resource determined by the first network device may be the first resource. In the other allocation manner, the first network device may configure a resource pool for the first terminal device. For example, the first network device may send information about the resource pool in a broadcast manner. In this case, all or some of terminal devices in coverage of the first network device may send data by using the resource pool. In this case, the sending resource determined by the first network device may be the first resource pool, and the first resource pool includes one or more resources used to send data. The first terminal device camps on the first network device. The second terminal device camps on the second network device. The first network device and the second network device correspond to different PLMNs.

S82: The first network device sends information about the sending resource to the second network device, and the second network device receives the information about the sending resource from the first network device.

After determining the sending resource, the first network device may notify the second network device of the information about the sending resource, so that the second network device can determine the sending resource.

S83: The second network device sends information about a feedback resource to the first network device, and the first network device receives the information about the feedback resource from the second network device.

After determining the sending resource, the second network device may determine a corresponding feedback resource. The feedback resource may be used by the second terminal device to send feedback information of the data received by using the sending resource. If the sending resource includes the first resource, the feedback resource may include a second resource; or if the sending resource includes the first resource pool, the feedback resource may include a second resource pool.

After receiving the information about the feedback resource, the first network device may determine the feedback resource. The first network device may determine the sending resource and the feedback resource by performing S81 to S83.

S84: The first network device sends a first message, and the first terminal device receives the first message from the first network device. The first message is used to indicate the sending resource and the feedback resource.

For example, the first message may indicate that there is an association relationship between the sending resource and the feedback resource, and the association relationship indicates that the feedback resource is used to receive the feedback information of the data sent by using the sending resource. In this case, after receiving the first message, the first terminal device may determine that the feedback resource is used to receive the feedback information of the data sent by using the sending resource. For example, the first message indicates the sending resource and the feedback resource. In this case, it implicitly indicates that the first message indicates that there is an association relationship between the sending resource and the feedback resource, and no additional indication information is required. This reduces signaling overheads. Alternatively, in addition to the sending resource and the feedback resource, the first message may further indicate that there is an association relationship between the sending resource and the feedback resource. This implements clearer indication.

For example, if the sending resource is the first resource pool, and the feedback resource is the second resource pool, the first message may be a broadcast message, and all terminal devices that receive the first message may send data by using the first resource pool, and may receive feedback information by using the second resource pool. The first terminal device is only one of the plurality of terminal devices. Alternatively, if the sending resource is the first resource, and the feedback resource is the second resource, the first message may be a unicast message, and the first resource and the second resource are configured for the first terminal device.

In this embodiment of this application, after determining the sending resource, the first network device may notify the second network device of the information about the sending resource, so that the second network device can determine the corresponding feedback resource, and the second network device can notify the first network device of the information about the feedback resource. In this way, both the first network device and the second network device can determine the association relationship between the sending resource and the feedback resource. For example, to implement a HARQ mechanism, after the first terminal device sends data to the second terminal device, the second terminal device needs to send feedback information corresponding to the data to the first terminal device. For example, the feedback information is an ACK or a NACK. The second terminal device also needs to use a corresponding resource to send the feedback information corresponding to the data to the first terminal device. In this embodiment of this application, both the first network device and the second network device can determine the association relationship between the sending resource and the feedback resource, the second terminal device sends the feedback information by using the feedback resource, and the first terminal device may listen to the feedback information by using the feedback resource, so that the first terminal device can determine that the feedback information corresponds to the data sent by using the sending resource. This ensures normal running of the HARQ mechanism and improves transmission reliability.

S85: The first terminal device determines the first resource based on the first message.

When the first terminal device is to send the data to the second terminal device, the first terminal device may determine the first resource.

If the sending resource indicated by the first message is the first resource, the first terminal device may determine the first resource. Alternatively, if the sending resource indicated by the first message is the first resource pool, the first terminal device may select the first resource from the first resource pool to send the data.

S86: The second network device sends a third message, and the second terminal device receives the third message from the second network device. The third message is used to indicate the sending resource and the feedback resource.

For example, the third message may indicate that there is an association relationship between the sending resource and the feedback resource, and the association relationship indicates that the feedback resource is used to receive the feedback information of the data sent by using the sending resource. In this case, after receiving the third message, the second terminal device may determine that the feedback resource is used to receive the feedback information of the data sent by using the sending resource. For example, the third message indicates the sending resource and the feedback resource. In this case, it implicitly indicates that the third message indicates that there is an association relationship between the sending resource and the feedback resource, and no additional indication information is required. This reduces signaling overheads. Alternatively, in addition to the sending resource and the feedback resource, the third message may further indicate that there is an association relationship between the sending resource and the feedback resource. This implements clearer indication.

For example, if the sending resource is the first resource pool, and the feedback resource is the second resource pool, the third message may be a broadcast message, and all terminal devices that receive the third message may send feedback information by using the second resource pool. The second terminal device is only one of the plurality of terminal devices. Alternatively, if the sending resource is the first resource, and the feedback resource is the second resource, the third message may be a unicast message, and the second resource is configured for the second terminal device.

S86 may be performed before S85; or S86 may be performed after S85; or S86 and S85 may be simultaneously performed.

S87: The second terminal device determines the second resource based on the third message.

When the second terminal device needs to receive the data from the first terminal device, the second terminal device may determine the second resource.

If the sending resource indicated by the third message is the second resource, the second terminal device may determine the second resource. Alternatively, if the sending resource indicated by the third message is the second resource pool, the second terminal device may select the second resource from the second resource pool to send the feedback information.

S88: The first terminal device sends the data to the second terminal device on the first resource, and the second terminal device receives the data from the first terminal device by using the first resource.

S89: The second terminal device sends the feedback information to the first terminal device on the second resource, and the first terminal device receives the feedback information from the second terminal device on the second resource. The feedback information corresponds to the data in S88. The feedback information is, for example, an ACK or a NACK.

If the second terminal device determines the feedback resource, after receiving the data from the first terminal device, the second terminal device sends the feedback information of the data to the first terminal device by using the feedback resource. If the feedback resource is the second resource, the second terminal device sends the feedback information of the data to the first terminal device on the second resource. Alternatively, if the feedback resource is the second resource pool, the second terminal device may select a resource from the second resource pool to send the feedback information. For example, the second terminal device selects the second resource to send the feedback information.

In addition, the first terminal device also determines, based on the first message, the feedback resource corresponding to the sending resource. If the feedback resource is the second resource, the first terminal device may listen to the feedback information of the data on the second resource. The first terminal device can determine, provided that feedback information is received on the second resource, that the feedback information is the feedback information corresponding to the data. Alternatively, if the feedback resource is the second resource pool, the first terminal device may listen to the feedback information of the data on all or some of resources included in the second resource pool. Because the second terminal device sends the feedback information on the second resource, the first terminal device may receive the feedback information on the second resource. The first terminal device can determine, provided that feedback information is received on a resource included in the second resource pool, that the feedback information is the feedback information corresponding to the data.

In this embodiment of this application, after determining the sending resource, the first network device may notify the second network device of the information about the sending resource, so that the second network device can determine the corresponding feedback resource, and the second network device can notify the first network device of the information about the feedback resource. In this way, both the first network device and the second network device can determine the association relationship between the sending resource and the feedback resource. In addition, the first network device notifies the first terminal device of the association relationship, the second network device also notifies the second terminal device of the association relationship, the first terminal device sends data by using the sending resource, the second terminal device sends feedback information by using the feedback resource, and the first terminal device may listen to the feedback information by using the feedback resource, so that the first terminal device can determine that the feedback information corresponds to the data sent by using the sending resource. This ensures normal running of the HARQ mechanism and improves transmission reliability.

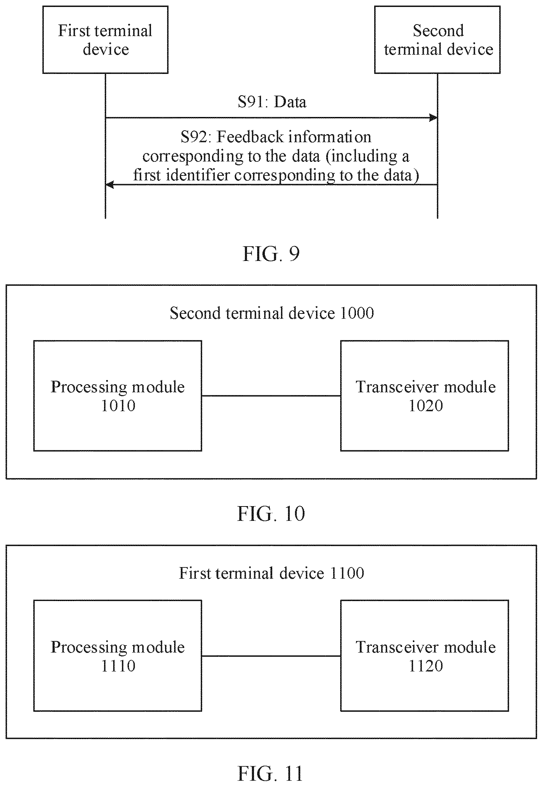

To resolve a same technical problem, an embodiment of this application provides a fourth communications method. FIG. 9 is a flowchart of the method. In the following description process, an example in which the method is applied to the network architecture shown in FIG. 2A is used.

For ease of description, an example in which the method is performed by a network device and a terminal device is used below. Because an example in which this embodiment is applied to the network architecture shown in FIG. 2A is used, a first network device described below may be the network device 1 in the network architecture shown in FIG. 2A, a second network device described below may be the network device 2 in the network architecture shown in FIG. 2A, a first terminal device described below may be the terminal device 1 in the network architecture shown in FIG. 2A, and a second terminal device described below may be the terminal device 2 in the network architecture shown in FIG. 2A.

S91: The first terminal device sends data to the second terminal device, and the second terminal device receives the data from the first terminal device.

The first terminal device camps on the first network device. The second terminal device camps on the second network device. The first network device and the second network device correspond to different PLMNs.

S92: The second terminal device sends feedback information corresponding to the data to the first terminal device, and the first terminal device receives the feedback information from the second terminal device. The feedback information may include a first identifier corresponding to the data.

Because the first network device and the second network device belong to different PLMNs, although the first terminal device can receive the feedback information sent by the second terminal device to the first terminal device, the first terminal device cannot identify specific data of which feedback information corresponds to the feedback information, and even cannot determine whether the feedback information is feedback information corresponding to the first terminal device. Consequently, a HARQ mechanism cannot be performed. In this embodiment of this application, the feedback information sent by the second terminal device may include the first identifier. If the first terminal device receives the feedback information, the first terminal device may determine, based on the first identifier, the data corresponding to the feedback information. This can implement normal running of the HARQ mechanism and improve data transmission reliability.

The first identifier is, for example, an identifier of the first terminal device, such as an ID of the first terminal device. Alternatively, the first identifier is, for example, a HARQ process number corresponding to the data. Alternatively, the first identifier is, for example, a random number. For example, the random number is generated by the first terminal device. The first terminal device may add the random number to the data in S91 and then send the data to the second terminal device, or the first terminal device may send the random number to the second terminal device by using another message. The random number corresponds to the data in S91. After receiving the random number, the second terminal device may add the random number to the feedback information when sending the feedback information to the first terminal device. Therefore, after receiving the feedback information, the first terminal device may determine, based on the random number, the data corresponding to the feedback information.

In this embodiment of this application, adding the first identifier to the feedback information is equivalent to establishing a correspondence between the feedback information and the data, so that the first terminal device can identify that the feedback information is the feedback information corresponding to the data. This ensures normal running of the HARQ mechanism and implements more reliable data transmission.

With reference to the accompanying drawings, the following describes apparatuses configured to implement the foregoing methods in embodiments of this application. Therefore, all the foregoing content may be used in the following embodiments. Repeated content is not described again.

FIG. 10 is a schematic block diagram of a communications apparatus 1000 according to an embodiment of this application. For example, the communications apparatus 1000 is a second terminal device 1000.

The second terminal device 1000 includes a transceiver module 1020 and a processing module 1010. For example, the second terminal device 1000 may be a second terminal device, or may be a chip applied to a second terminal device, or may be another combination device or component having a function of a second terminal device. When the second terminal device 1000 is a second terminal device, the transceiver module 1020 may be a transceiver that may include an antenna, a radio frequency circuit, and the like, and the processing module 1010 may be a processor that may include one or more central processing units (central processing unit, CPU). When the second terminal device 1000 is a component having a function of a second terminal device, the transceiver module 1020 may be a radio frequency unit, and the processing module 1010 may be a processor. When the second terminal device 1000 is a chip system, the transceiver module 1020 may be an input/output interface in a chip, and the processing module 1010 may be a processor that may include one or more central processing units in the chip system.

The processing module 1010 may be configured to: perform all operations such as S301, S311, and S314 performed by the second terminal device in the embodiment shown in FIG. 3A to FIG. 3C other than receiving and sending operations, and/or support another process of the technology described in this specification; and the transceiver module 1020 may be configured to: perform all receiving operations such as S306, S307, S310, S312, S314, and S315 performed by the second terminal device in the embodiment shown in FIG. 3A to FIG. 3C, and/or support another process of the technology described in this specification.

Alternatively, the processing module 1010 may be configured to: perform all operations such as S301, S311, and S314 performed by the second terminal device in the embodiment shown in FIG. 4A and FIG. 4B other than receiving and sending operations, and/or support another process of the technology described in this specification; and the transceiver module 1020 may be configured to: perform all receiving operations such as S406, S312, S314, and S315 performed by the second terminal device in the embodiment shown in FIG. 4A and FIG. 4B, and/or support another process of the technology described in this specification.

Alternatively, the processing module 1010 may be configured to: perform all operations such as S301 and S509 performed by the second terminal device in the embodiment shown in FIG. 5A and FIG. 5B other than receiving and sending operations, and/or support another process of the technology described in this specification; and the transceiver module 1020 may be configured to: perform all receiving operations such as S501, S504, S507, S508, and S509 performed by the second device in the embodiment shown in FIG. 5A and FIG. 5B, and/or support another process of the technology described in this specification.

In addition, the transceiver module 1020 may be one function module (the function module corresponds to, for example, a transceiver, a radio frequency unit, or an input/output interface). The function module can complete both a sending operation and a receiving operation. For example, the transceiver module 1020 may be configured to perform all sending operations and receiving operations performed by the second terminal device in the embodiment shown in any one of FIG. 3A to FIG. 3C to FIG. 5A and FIG. 5B. For example, when performing a sending operation, the transceiver module 1020 may be considered as a sending module; and when performing a receiving operation, the transceiver module 1020 may be considered as a receiving module. Alternatively, the transceiver module 1020 may be two function modules. The transceiver module 1020 may be considered as a general term of the two function modules. The two function modules are respectively a sending module (for example, corresponding to a transmitter, a radio frequency unit, or an output interface) and a receiving module (for example, corresponding to a receiver, a radio frequency unit, or an input interface). The sending module is configured to complete a sending operation. For example, the sending module may be configured to perform all sending operations performed by the second terminal device in the embodiment shown in any one of FIG. 3A to FIG. 3C to FIG. 5A and FIG. 5B. The receiving module is configured to complete a receiving operation. For example, the receiving module may be configured to perform all receiving operations performed by the second terminal device in the embodiment shown in any one of FIG. 3A to FIG. 3C to FIG. 5A and FIG. 5B.

The transceiver module 1020 is configured to receive a first message when the second terminal device 1000 camps on a second network device. The first message is used to indicate the second terminal device 1000 to camp on a first network device, and the first network device and the second network device correspond to different PLMNs.

The processing module 1010 is configured to camp on the first network device.

In an optional implementation, the transceiver module 1020 is configured to receive the first message in the following manner:
receiving the first message from the second network device; or
receiving the first message from a first terminal device, where the first terminal device camps on the first network device; or
receiving the first message from the first network device.

In an optional implementation, before receiving the first message from the second network device, the transceiver module 1020 is further configured to:
send a request message to the second network device, where the request message is used to request to camp on the first network device; or
send a third message to the first network device, where the third message is used to request to camp on the first network device.

In an optional implementation, the processing module 1010 is configured to camp on the first network device in the following manner:
camping on the first network device based on information about the first network device through cell reselection.

In an optional implementation, the processing module 1010 is further configured to establish a sidelink connection to the first terminal device in the first network device.

In an optional implementation, the first message further includes verification information of the second terminal device 1000, and the verification information of the second terminal device 1000 is used to perform verification on the second terminal device 1000.

In an optional implementation, the transceiver module 1020 is further configured to send a fifth message to the first network device. The fifth message includes the verification information of the second terminal device 1000.

FIG. 11 is a schematic block diagram of a communications apparatus 1100 according to an embodiment of this application. For example, the communications apparatus 1100 is a first terminal device 1100.

The first terminal device 1100 includes a transceiver module 1120. Optionally, the first terminal device 1100 may further include a processing module 1110. For example, the first terminal device 1100 may be a first terminal device, or may be a chip applied to a first terminal device, or may be another combination device or component having a function of a first terminal device. For an implementation form or the like of the transceiver module 1120 or the processing module 1110, refer to the descriptions of the content such as the implementation form of the transceiver module 1020 or the processing module 1010 in the embodiment shown in FIG. 10.

The processing module 1110 may be configured to: perform all operations such as S314 performed by the first terminal device in the embodiment shown in FIG. 3A to FIG. 3C other than receiving and sending operations, and/or support another process of the technology described in this specification; and the transceiver module 1120 may be configured to: perform all receiving operations such as S302, S314, and S315 performed by the first terminal device in the embodiment shown in FIG. 3A to FIG. 3C, and/or support another process of the technology described in this specification.

Alternatively, the processing module 1110 may be configured to: perform all operations such as S314 performed by the first terminal device in the embodiment shown in FIG. 4A and FIG. 4B other than receiving and sending operations, and/or support another process of the technology described in this specification; and the transceiver module 1120 may be configured to: perform all receiving operations such as S401, S405, S406, and S314 performed by the first terminal device in the embodiment shown in FIG. 4A and FIG. 4B, and/or support another process of the technology described in this specification.

Alternatively, the processing module 1110 may be configured to: perform all operations such as S509 performed by the first terminal device in the embodiment shown in FIG. 5A and FIG. 5B other than receiving and sending operations, and/or support another process of the technology described in this specification; and the transceiver module 1120 may be configured to: perform all receiving operations such as S509 performed by the first terminal device in the embodiment shown in FIG. 5A and FIG. 5B, and/or support another process of the technology described in this specification.

The transceiver module 1120 is configured to receive a second message from a first network device. The second message is used to indicate a second terminal device to camp on the first network device, the second terminal device currently camps on a second network device, and the first network device and the second network device correspond to different PLMNs.

The transceiver module 1120 is further configured to send a first message to the second terminal device. The first message is used to indicate the second terminal device to camp on the first network device.

In an optional implementation, the processing module 1110 is configured to determine the first message.

In an optional implementation, the transceiver module 1120 is further configured to send a third message to the first network device. The third message is used to indicate that the second terminal device camps on the second network device.

In an optional implementation, the processing module 1110 is configured to establish a sidelink connection to the second terminal device in the first network device.

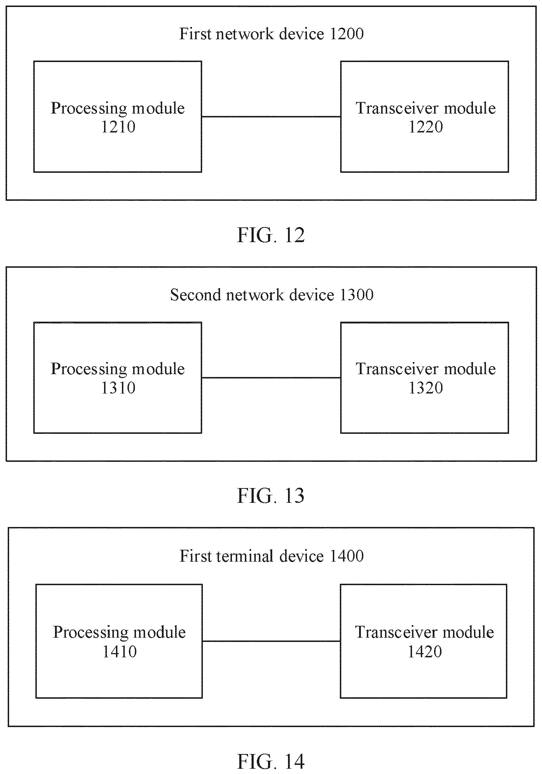

FIG. 12 is a schematic block diagram of a communications apparatus 1200 according to an embodiment of this application. For example, the communications apparatus 1200 is a first network device 1200. The first network device 1200 may be a base station 1, AMF1, or SEAF1.

The first network device 1200 includes a transceiver module 1220. Optionally, the first network device 1200 may further include a processing module 1210. For example, the first network device 1200 may be a first network device, or may be a chip applied to a first network device, or may be another combination device or component having a function of a first network device. For an implementation form or the like of the transceiver module 1220 or the processing module 1210, refer to the descriptions of the content such as the implementation form of the transceiver module 1020 or the processing module 1010 in the embodiment shown in FIG. 10.

The processing module 1210 may be configured to: perform all operations such as S313 performed by the first network device in the embodiment shown in FIG. 3A to FIG. 3C other than receiving and sending operations, and/or support another process of the technology described in this specification; and the transceiver module 1220 may be configured to: perform all receiving operations such as S302, S303, S305, S308, S309, S312, and S315 performed by the first network device in the embodiment shown in FIG. 3A to FIG. 3C, and/or support another process of the technology described in this specification.

Alternatively, the processing module 1210 may be configured to: perform all operations such as S313 performed by the first network device in the embodiment shown in FIG. 4A and FIG. 4B other than receiving and sending operations, and/or support another process of the technology described in this specification; and the transceiver module 1220 may be configured to: perform all receiving operations such as S401, S402, S404, S405, S312, and S315 performed by the first network device in the embodiment shown in FIG. 4A and FIG. 4B, and/or support another process of the technology described in this specification.

Alternatively, the processing module 1210 may be configured to: perform all operations such as S502 and S506 performed by the first network device in the embodiment shown in FIG. 5A and FIG. 5B other than receiving and sending operations, and/or support another process of the technology described in this specification; and the transceiver module 1220 may be configured to: perform all receiving operations such as S501, S503, S505, S507, and S508 performed by the first network device in the embodiment shown in FIG. 5A and FIG. 5B, and/or support another process of the technology described in this specification.

The transceiver module 1220 is configured to receive a third message. The third message is used to indicate that a second terminal device camps on a second network device, or is used to indicate that a second terminal device camping on a second network device requests to camp on the first network device 1200, and the first network device 1200 and the second network device correspond to different PLMNs.

The transceiver module 1220 is further configured to send a second message. The second message is used to indicate the second terminal device to camp on the first network device 1200.

In an optional implementation, the processing module 1210 is configured to determine the second message.

In an optional implementation, the transceiver module 1220 is configured to receive the third message in the following manner:
receiving the third message from a first terminal device; or
receiving the third message from the second network device; or
receiving the third message from the second terminal device.

In an optional implementation, the transceiver module 1220 is configured to send the second message in the following manner:
sending the second message to the first terminal device camping on the first network device 1200; or
sending the second message to the second network device.

In an optional implementation, the transceiver module 1220 is further configured to receive verification information of the second terminal device from the second network device. The verification information of the second terminal device is used to perform verification on the second terminal device.

In an optional implementation, the transceiver module 1220 is further configured to send a fourth message to the second network device. The fourth message is used to request to obtain the verification information of the second terminal device.

In an optional implementation,
the transceiver module 1220 is further configured to receive a fifth message from the second terminal device, where the fifth message includes verification information of the second terminal device;
the processing module 1210 is configured to perform verification based on the verification information of the second terminal device included in the fifth message and the verification information of the second terminal device from the second network device; and
the processing module 1210 is further configured to: when the verification succeeds, determine that the second terminal device can access the first network device 1200.

FIG. 13 is a schematic block diagram of a communications apparatus 1300 according to an embodiment of this application. For example, the communications apparatus 1300 is a second network device 1300. The second network device 1300 may be a base station 2, AUSF2, AMF2, SEAF2, or UDM2.

The second network device 1300 includes a transceiver module 1320 and a processing module 1310. For example, the second network device 1300 may be a second network device, or may be a chip applied to a second network device, or may be another combination device or component having a function of a second network device. For an implementation form or the like of the transceiver module 1320 or the processing module 1310, refer to the descriptions of the content such as the implementation form of the transceiver module 1020 or the processing module 1010 in the embodiment shown in FIG. 10.

The processing module 1310 may be configured to: perform all operations such as S304 performed by the second network device in the embodiment shown in FIG. 3A to FIG. 3C other than receiving and sending operations, and/or support another process of the technology described in this specification; and the transceiver module 1320 may be configured to: perform all receiving operations such as S303, S305, S306, S307, S308, S309, and S310 performed by the second network device in the embodiment shown in FIG. 3A to FIG. 3C, and/or support another process of the technology described in this specification.

Alternatively, the processing module 1310 may be configured to: perform all operations such as S403 performed by the second network device in the embodiment shown in FIG. 4A and FIG. 4B other than receiving and sending operations, and/or support another process of the technology described in this specification; and the transceiver module 1320 may be configured to: perform all receiving operations such as S402 and S404 performed by the second network device in the embodiment shown in FIG. 4A and FIG. 4B, and/or support another process of the technology described in this specification.

Alternatively, the processing module 1310 may be configured to: perform all operations such as S504 performed by the second network device in the embodiment shown in FIG. 5A and FIG. 5B other than receiving and sending operations, and/or support another process of the technology described in this specification; and the transceiver module 1320 may be configured to: perform all receiving operations such as S503 and S505 performed by the second network device in the embodiment shown in FIG. 5A and FIG. 5B, and/or support another process of the technology described in this specification.

The processing module 1310 is configured to determine that a second terminal device camping on the second network device 1300 needs to camp on a first network device. The first network device and the second network device 1300 correspond to different PLMNs.

The transceiver module 1320 is configured to send a first message to the second terminal device. The first message is used to indicate the second terminal device to camp on the first network device.

In an optional implementation, the processing module 1310 is configured to determine, in the following manner, that the second terminal device camping on the second network device 1300 needs to camp on the first network device:
receiving a second message from the first network device by using the transceiver module 1320, where the second message is used to indicate the second terminal device to camp on the first network device; or
receiving a request message from the second terminal device by using the transceiver module 1320, where the request message is used to request to camp on the first network device.

In an optional implementation, the transceiver module 1320 is further configured to send verification information of the second terminal device to the first network device. The verification information of the second terminal device is used to perform verification on the second terminal device.

In an optional implementation, the transceiver module 1320 is further configured to receive a fourth message from the first network device. The fourth message is used to request to obtain the verification information of the second terminal device.

FIG. 14 is a schematic block diagram of a communications apparatus 1400 according to an embodiment of this application. For example, the communications apparatus 1400 is a first terminal device 1400.

The first terminal device 1400 includes a transceiver module 1420 and a processing module 1410. For example, the first terminal device 1400 may be a first terminal device, or may be a chip applied to a first terminal device, or may be another combination device or component having a function of a first terminal device. For an implementation form or the like of the transceiver module 1420 or the processing module 1410, refer to the descriptions of the content such as the implementation form of the transceiver module 1020 or the processing module 1010 in the embodiment shown in FIG. 10.

The processing module 1410 may be configured to: perform all operations such as S74 performed by the first terminal device in the embodiment shown in FIG. 7 other than receiving and sending operations, and/or support another process of the technology described in this specification; and the transceiver module 1420 may be configured to: perform all receiving operations such as S72, S77, and S78 performed by the first terminal device in the embodiment shown in FIG. 7, and/or support another process of the technology described in this specification.

Alternatively, the processing module 1410 may be configured to: perform all operations such as S85 performed by the first terminal device in the embodiment shown in FIG. 8 other than receiving and sending operations, and/or support another process of the technology described in this specification; and the transceiver module 1420 may be configured to: perform all receiving operations such as S84, S88, and S89 performed by the first terminal device in the embodiment shown in FIG. 8, and/or support another process of the technology described in this specification.

The transceiver module 1420 is configured to receive a first message from a first network device.

The processing module 1410 is configured to determine a first resource based on the first message.

The transceiver module 1420 is further configured to send data to a second terminal device on the first resource.

The transceiver module 1420 is further configured to receive, on a second resource from the second terminal device, feedback information corresponding to the data. The second resource is used to receive the feedback information of the data sent by using the first resource.

In an optional implementation, the first message is used to indicate that the second resource is used to receive the feedback information of the data sent by using the first resource.

In an optional implementation, the first message is used to indicate that there is an association relationship between the second resource and the first resource, and the association relationship indicates that the second resource is used to receive the feedback information of the data sent by using the first resource.

In an optional implementation, the first message is used to indicate a first resource pool and a second resource pool, there is an association relationship between the first resource pool and the second resource pool, and the association relationship indicates that a resource included in the second resource pool is used to receive feedback information of data sent by using a resource included in the first resource pool.

In an optional implementation, the processing module 1410 is configured to determine the first resource in the following manner:
selecting the first resource from the first resource pool.

In an optional implementation,
the processing module 1410 is further configured to select the second resource from the second resource pool to receive the feedback information of the data sent by using the first resource; and
the transceiver module 1420 is further configured to send first indication information to the second terminal device, where the first indication information is used to indicate that the second resource is used to send feedback information of data received by using the first resource.

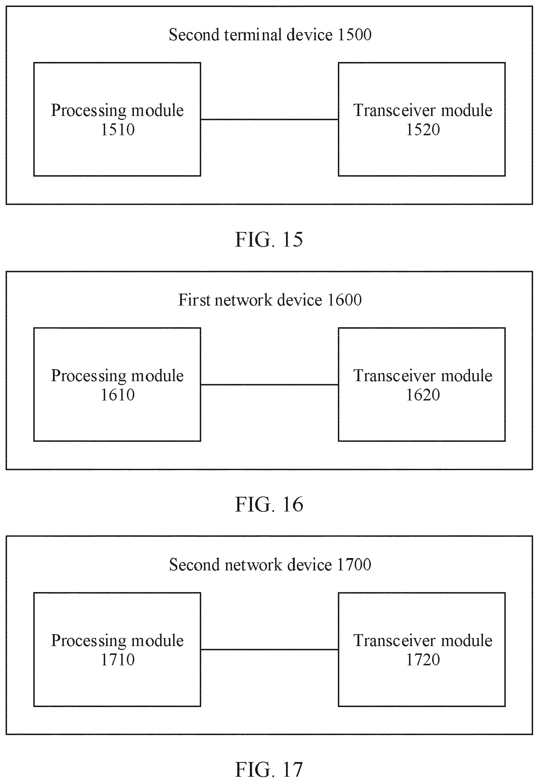

FIG. 15 is a schematic block diagram of a communications apparatus 1500 according to an embodiment of this application. For example, the communications apparatus 1500 is a second terminal device 1500.

The second terminal device 1500 includes a transceiver module 1520 and a processing module 1510. For example, the second terminal device 1500 may be a second terminal device, or may be a chip applied to a second terminal device, or may be another combination device or component having a function of a second terminal device. For an implementation form or the like of the transceiver module 1520 or the processing module 1510, refer to the descriptions of the content such as the implementation form of the transceiver module 1020 or the processing module 1010 in the embodiment shown in FIG. 10.

The processing module 1510 may be configured to: perform all operations such as S76 performed by the second terminal device in the embodiment shown in FIG. 7 other than receiving and sending operations, and/or support another process of the technology described in this specification; and the transceiver module 1520 may be configured to: perform all receiving operations such as S75, S77, and S78 performed by the second terminal device in the embodiment shown in FIG. 7, and/or support another process of the technology described in this specification.

Alternatively, the processing module 1510 may be configured to: perform all operations such as S87 performed by the second terminal device in the embodiment shown in FIG. 8 other than receiving and sending operations, and/or support another process of the technology described in this specification; and the transceiver module 1520 may be configured to: perform all receiving operations such as S86, S88, and S89 performed by the second terminal device in the embodiment shown in FIG. 8, and/or support another process of the technology described in this specification.

The transceiver module 1520 is configured to receive data from a first terminal device on a first resource.

The transceiver module 1520 is further configured to send feedback information corresponding to the data to the first terminal device on a second resource. The second resource is used to receive feedback information of data sent by using the first resource.

In an optional implementation, the processing module 1510 is configured to determine the feedback information.

In an optional implementation, the transceiver module 1520 is further configured to:
receive first indication information from the first terminal device, where the first indication information is used to indicate the second resource, and the second resource is used to send the feedback information of the data received by using the first resource; or
receive a third message from a second network device, where the third message is used to indicate the second resource, the second resource is used to send the feedback information of the data received by using the first resource, and the second terminal device 1500 camps on the second network device.

In an optional implementation, the third message is used to indicate that there is an association relationship between the second resource and the first resource, and the association relationship indicates that the second resource is used to send the feedback information of the data received by using the first resource.

In an optional implementation,
the transceiver module 1520 is further configured to receive a third message from a second network device, where the third message is used to indicate a first resource pool and a second resource pool, there is an association relationship between the first resource pool and the second resource pool, and the association relationship indicates that a resource included in the second resource pool is used to send feedback information of data received by using a resource included in the first resource pool; and
the processing module 1510 is further configured to select the second resource from the second resource pool, where the first resource belongs to the first resource pool.

FIG. 16 is a schematic block diagram of a communications apparatus 1600 according to an embodiment of this application. For example, the communications apparatus 1600 is a first network device 1600.

The first network device 1600 includes a transceiver module 1620 and a processing module 1610. For example, the first network device 1600 may be a first network device, or may be a chip applied to a first network device, or may be another combination device or component having a function of a first network device. For an implementation form or the like of the transceiver module 1620 or the processing module 1610, refer to the descriptions of the content such as the implementation form of the transceiver module 1020 or the processing module 1010 in the embodiment shown in FIG. 10.

The processing module 1610 may be configured to: perform all operations such as S71 performed by the first network device in the embodiment shown in FIG. 7 other than receiving and sending operations, and/or support another process of the technology described in this specification; and the transceiver module 1620 may be configured to: perform all receiving operations such as S72 and S73 performed by the first network device in the embodiment shown in FIG. 7, and/or support another process of the technology described in this specification.

Alternatively, the processing module 1610 may be configured to: perform all operations such as S81 performed by the first network device in the embodiment shown in FIG. 8 other than receiving and sending operations, and/or support another process of the technology described in this specification; and the transceiver module 1620 may be configured to: perform all receiving operations such as S82, S83, and S84 performed by the first network device in the embodiment shown in FIG. 8, and/or support another process of the technology described in this specification.

The processing module 1610 is configured to determine a sending resource used by a first terminal device to send data and a feedback resource used by the first terminal device to receive feedback information of the data sent by using the sending resource. The sending resource includes a first resource, and the feedback resource includes a second resource; or the sending resource includes a first resource pool, and the feedback resource includes a second resource pool.

The transceiver module 1620 is configured to send a first message to the first terminal device. The first message is used to indicate the sending resource, and indicate that the feedback resource is used to receive the feedback information of the data sent by using the sending resource.

In an optional implementation, the transceiver module 1620 is further configured to send a fourth message to a second network device. The fourth message is used to indicate the sending resource and the feedback resource, the second network device is a network device on which a second terminal device camps, and the second terminal device is a receive end of the data.

In an optional implementation, the first message is used to indicate that there is an association relationship between the sending resource and the feedback resource, and the association relationship indicates that the feedback resource is used to receive the feedback information of the data sent by using the sending resource.

In an optional implementation, the transceiver module 1620 is further configured to:
send information about the sending resource to a second network device, where the information about the sending resource is used to determine information about the feedback resource; and
receive the information about the feedback resource from the second network device.

FIG. 17 is a schematic block diagram of a communications apparatus 1700 according to an embodiment of this application. For example, the communications apparatus 1700 is a second network device 1700.

The second network device 1700 includes a transceiver module 1720 and a processing module 1710. For example, the second network device 1700 may be a second network device, or may be a chip applied to a second network device, or may be another combination device or component having a function of a second network device. For an implementation form or the like of the transceiver module 1720 or the processing module 1710, refer to the descriptions of the content such as the implementation form of the transceiver module 1020 or the processing module 1010 in the embodiment shown in FIG. 10.

The processing module 1710 may be configured to: perform all operations such as an operation of determining a feedback resource used by a second terminal device to send feedback information, performed by the second network device in the embodiment shown in FIG. 7 other than receiving and sending operations, and/or support another process of the technology described in this specification; and the transceiver module 1720 may be configured to: perform all receiving operations such as S73 and S75 performed by the second network device in the embodiment shown in FIG. 7, and/or support another process of the technology described in this specification.

Alternatively, the processing module 1710 may be configured to: perform all operations such as an operation of determining a feedback resource used by a second terminal device to send feedback information, performed by the second network device in the embodiment shown in FIG. 8 other than receiving and sending operations, and/or support another process of the technology described in this specification; and the transceiver module 1720 may be configured to: perform all receiving operations such as S82, S83, and S86 performed by the second network device in the embodiment shown in FIG. 8, and/or support another process of the technology described in this specification.

The processing module 1710 is configured to determine a feedback resource used by a second terminal device to send feedback information. The feedback resource is used by the second terminal device to send feedback information of data sent by using a sending resource. The sending resource includes a first resource, and the feedback resource includes a second resource; or the sending resource includes a first resource pool, and the feedback resource includes a second resource pool.

The transceiver module 1720 is configured to send a third message to the second terminal device. The third message is used to indicate that the feedback resource is used to receive the feedback information of the data sent by using the sending resource.

In an optional implementation, the transceiver module 1720 is further configured to receive a fourth message from a first network device. The fourth message is used to indicate the sending resource and the feedback resource, the first network device is a network device on which a first terminal device camps, and the first terminal device is a transmit end of the data.

In an optional implementation, the third message is used to indicate that there is an association relationship between the sending resource and the feedback resource, and the association relationship indicates that the receiving resource is used to receive the feedback information of the data sent by using the sending resource.

In an optional implementation,
the transceiver module 1720 is further configured to receive information about the sending resource from a first network device, where the first network device is a network device on which a first terminal device camps, and the first terminal device is a transmit end of the data;
the processing module 1710 is further configured to determine information about the feedback resource based on the information about the sending resource; and
the transceiver module 1720 is further configured to send the information about the feedback resource to the first network device.

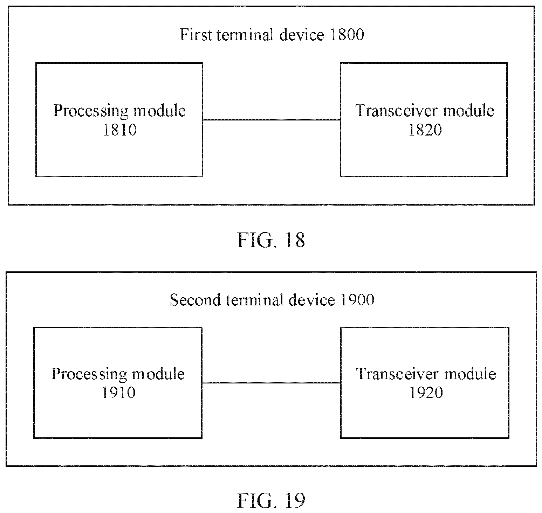

FIG. 18 is a schematic block diagram of a communications apparatus 1800 according to an embodiment of this application. For example, the communications apparatus 1800 is a first terminal device 1800.

The first terminal device 1800 includes a transceiver module 1820 and a processing module 1810. For example, the first terminal device 1800 may be a first terminal device, or may be a chip applied to a first terminal device, or may be another combination device or component having a function of a first terminal device. For an implementation form or the like of the transceiver module 1820 or the processing module 1810, refer to the descriptions of the content such as the implementation form of the transceiver module 1020 or the processing module 1010 in the embodiment shown in FIG. 10.

The processing module 1810 may be configured to: perform all operations such as a data determining operation performed by the first terminal device in the embodiment shown in FIG. 9 other than receiving and sending operations, and/or support another process of the technology described in this specification; and the transceiver module 1820 may be configured to: perform all receiving operations such as S91 and S92 performed by the first terminal device in the embodiment shown in FIG. 9, and/or support another process of the technology described in this specification.

The transceiver module 1820 is configured to send data to a second terminal device.

The transceiver module 1820 is further configured to receive, from the second terminal device, feedback information corresponding to the data. The feedback information includes a first identifier corresponding to the data.

In an optional implementation, the processing module 1810 is configured to determine the data.

In an optional implementation, the first identifier includes one or more of the following:
an identifier of the first terminal device 1800;
a random number; or
a HARQ process number corresponding to the data.

In an optional implementation, the first identifier includes the random number, and the transceiver module 1820 is further configured to send the random number corresponding to the data to the second terminal device.

FIG. 19 is a schematic block diagram of a communications apparatus 1900 according to an embodiment of this application. For example, the communications apparatus 1900 is a second terminal device 1900.

The second terminal device 1900 includes a transceiver module 1920 and a processing module 1910. For example, the second terminal device 1900 may be a first terminal device, or may be a chip applied to a second terminal device, or may be another combination device or component having a function of a second terminal device. For an implementation form or the like of the transceiver module 1920 or the processing module 1910, refer to the descriptions of the content such as the implementation form of the transceiver module 1020 or the processing module 1010 in the embodiment shown in FIG. 10.

The processing module 1910 may be configured to: perform all operations such as a feedback information determining operation performed by the second terminal device in the embodiment shown in FIG. 9 other than receiving and sending operations, and/or support another process of the technology described in this specification; and the transceiver module 1920 may be configured to: perform all receiving operations such as S91 and S92 performed by the second terminal device in the embodiment shown in FIG. 9, and/or support another process of the technology described in this specification.

The transceiver module 1920 is configured to receive data from a first terminal device.

The transceiver module 1920 is further configured to send feedback information corresponding to the data to the first terminal device. The feedback information includes a first identifier corresponding to the data.

In an optional implementation, the processing module 1910 is configured to determine the feedback information.

In an optional implementation, the first identifier includes one or more of the following:
an identifier of the first terminal device;
a random number; or
a HARQ process number corresponding to the data.

In an optional implementation, the first identifier includes the random number, and the transceiver module 1920 is further configured to receive, from the second terminal device, the random number corresponding to the data.

An embodiment of this application further provides a communications apparatus. The communications apparatus may be a terminal device or a circuit. The communications apparatus may be configured to perform an action performed by the terminal device in the foregoing method embodiment.

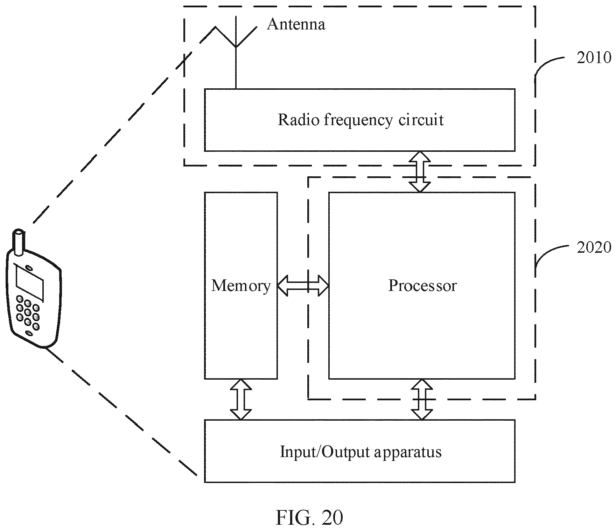

When the communications apparatus is a terminal device, FIG. 20 is a simplified schematic diagram of a structure of the terminal device. For ease of understanding and figure illustration, an example in which the terminal device is a mobile phone is used in FIG. 20. As shown in FIG. 20, the terminal device includes a processor, a memory, a radio frequency circuit, an antenna, and an input/output apparatus. The processor is mainly configured to: process a communications protocol and communications data, control the terminal device, execute a software program, process data of the software program, and the like. The memory is mainly configured to store a software program and data. The radio frequency circuit is mainly configured to perform conversion between a baseband signal and a radio frequency signal and process the radio frequency signal. The antenna is mainly configured to receive and send radio frequency signals in a form of an electromagnetic wave. The input/output apparatus, for example, a touchscreen, a display, or a keyboard, is mainly configured to receive data entered by a user and output data to the user. It should be noted that some types of terminal devices may not have the input/output apparatus.

When data needs to be sent, the processor performs baseband processing on the to-be-sent data, and then outputs a baseband signal to the radio frequency circuit. The radio frequency circuit performs radio frequency processing on the baseband signal and then sends a radio frequency signal to the outside in a form of an electromagnetic wave through the antenna. When data is sent to the terminal device, the radio frequency circuit receives a radio frequency signal through the antenna, converts the radio frequency signal into a baseband signal, and outputs the baseband signal to the processor. The processor converts the baseband signal into data and processes the data. For ease of description, FIG. 20 shows only one memory and one processor. In an actual terminal device product, there may be one or more processors and one or more memories. The memory may also be referred to as a storage medium, a storage device, or the like. The memory may be independent of the processor, or may be integrated with the processor. This is not limited in this embodiment of this application.

In this embodiment of this application, the antenna and the radio frequency circuit that have receiving and sending functions may be considered as a transceiver unit of the terminal device, and the processor that has a processing function may be considered as a processing unit of the terminal device. As shown in FIG. 20, the terminal device includes a transceiver unit 2010 and a processing unit 2020. The transceiver unit may also be referred to as a transceiver, a transceiver machine, a transceiver apparatus, or the like. The processing unit may also be referred to as a processor, a processing board, a processing module, a processing apparatus, or the like. Optionally, a component configured to implement a receiving function in the transceiver unit 2010 may be considered as a receiving unit, and a component configured to implement a sending function in the transceiver unit 2010 may be considered as a sending unit. In other words, the transceiver unit 2010 includes a receiving unit and a sending unit. The transceiver unit sometimes may also be referred to as a transceiver machine, a transceiver, a transceiver circuit, or the like. The receiving unit sometimes may also be referred to as a receiver machine, a receiver, a receiver circuit, or the like. The sending unit sometimes may also be referred to as a transmitter machine, a transmitter, a transmitter circuit, or the like.

It should be understood that the transceiver unit 2010 is configured to perform a sending operation and a receiving operation on a terminal device side in the foregoing method embodiment, and the processing unit 2020 is configured to perform an operation other than the sending operation and the receiving operation performed by the terminal device in the foregoing method embodiment.

For example, in an implementation, the transceiver unit 2010 may implement a function of the transceiver module 1020, a function of the transceiver module 1120, a function of the transceiver module 1420, a function of the transceiver module 1520, a function of the transceiver module 1820, or a function of the transceiver module 1920.

When the communications apparatus is a chip apparatus or circuit, the apparatus may include a transceiver unit and a processing unit. The transceiver unit may be an input/output circuit and/or a communications interface. The processing unit is an integrated processor, a microprocessor, or an integrated circuit.

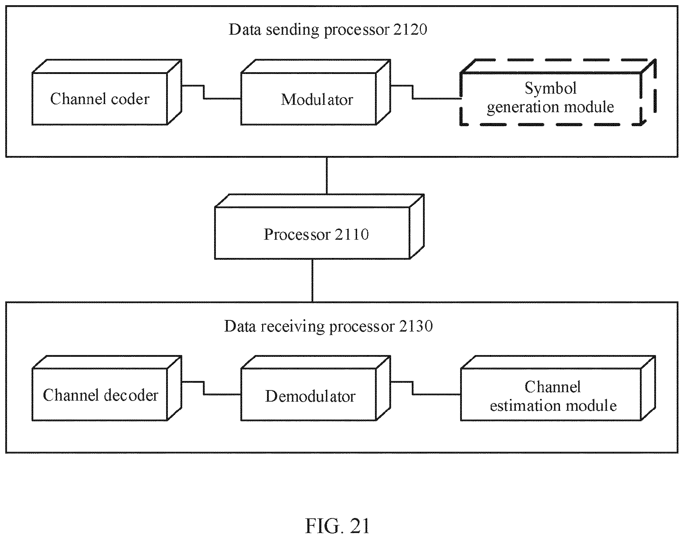

When the communications apparatus in this embodiment is a terminal device, refer to a device shown in FIG. 21. For example, the device may complete a function similar to that of the processing module 1010 in FIG. 10, a function similar to that of the processing module 1110 in FIG. 11, a function similar to that of the processing module 1410 in FIG. 14, a function similar to that of the processing module 1510 in FIG. 15, a function similar to that of the processing module 1810 in FIG. 18, or a function similar to that of the processing module 1910 in FIG. 19. In FIG. 21, the device includes a processor 2110, a data sending processor 2120, and a data receiving processor 2130. The processing module 1010 in the foregoing embodiment may be the processor 2110 in FIG. 21, and complete a corresponding function; and the transceiver module 1020 in the foregoing embodiment may be the data sending processor 2120 and/or the data receiving processor 2130 in FIG. 21. Alternatively, the processing module 1110 in the foregoing embodiment may be the processor 2110 in FIG. 21, and complete a corresponding function; and the transceiver module 1120 in the foregoing embodiment may be the data sending processor 2120 and/or the data receiving processor 2130 in FIG. 21. Alternatively, the processing module 1410 in the foregoing embodiment may be the processor 2110 in FIG. 21, and complete a corresponding function; and the transceiver module 1420 in the foregoing embodiment may be the data sending processor 2120 and/or the data receiving processor 2130 in FIG. 21. Alternatively, the processing module 1510 in the foregoing embodiment may be the processor 2110 in FIG. 21, and complete a corresponding function; and the transceiver module 1520 in the foregoing embodiment may be the data sending processor 2120 and/or the data receiving processor 2130 in FIG. 21. Alternatively, the processing module 1810 in the foregoing embodiment may be the processor 2110 in FIG. 21, and complete a corresponding function; and the transceiver module 1820 in the foregoing embodiment may be the data sending processor 2120 and/or the data receiving processor 2130 in FIG. 21. Alternatively, the processing module 1910 in the foregoing embodiment may be the processor 2110 in FIG. 21, and complete a corresponding function; and the transceiver module 1920 in the foregoing embodiment may be the data sending processor 2120 and/or the data receiving processor 2130 in FIG. 21. FIG. 21 shows a channel coder and a channel decoder. However, it may be understood that these modules do not constitute a limitation on this embodiment, but are only an example.

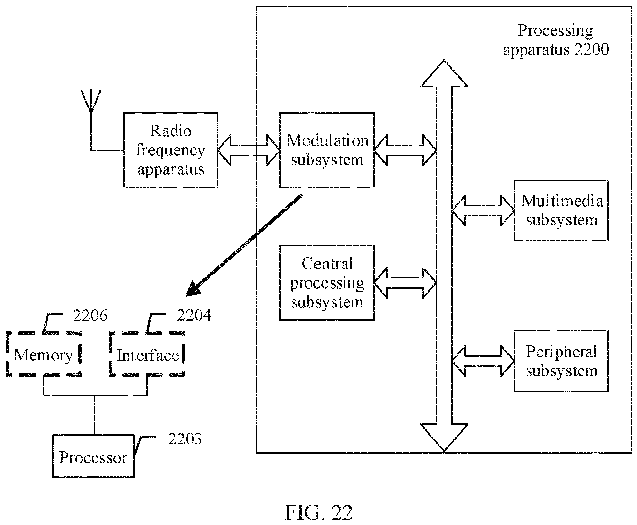

FIG. 22 shows another form of this embodiment. A processing apparatus 2200 includes modules such as a modulation subsystem, a central processing subsystem, and a peripheral subsystem. The communications apparatus in this embodiment may be used as the modulation subsystem. Specifically, the modulation subsystem may include a processor 2203 and an interface 2204. The processor 2203 completes a function of the processing module 1010, and the interface 2204 completes a function of the transceiver module 1020. Alternatively, the processor 2203 completes a function of the processing module 1110, and the interface 2204 completes a function of the transceiver module 1120. Alternatively, the processor 2203 completes a function of the processing module 1410, and the interface 2204 completes a function of the transceiver module 1420. Alternatively, the processor 2203 completes a function of the processing module 1510, and the interface 2204 completes a function of the transceiver module 1520. Alternatively, the processor 2203 completes a function of the processing module 1810, and the interface 2204 completes a function of the transceiver module 1820. Alternatively, the processor 2203 completes a function of the processing module 1910, and the interface 2204 completes a function of the transceiver module 1920. In another variant, the modulation subsystem includes a memory 2206, a processor 2203, and a program that is stored in the memory 2206 and that can be run on the processor. When executing the program, the processor 2203 implements the method on the terminal device side in the foregoing method embodiment. It should be noted that the memory 2206 may be nonvolatile or volatile, and may be located inside the modulation subsystem, or may be located in the processing apparatus 2200, provided that the memory 2206 can be connected to the processor 2203.

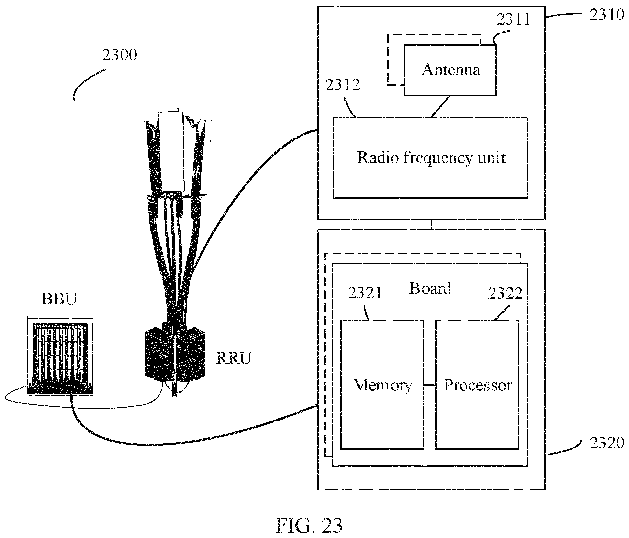

When the apparatus in this embodiment of this application is a network device, the apparatus may be shown in FIG. 23. An apparatus 2300 includes one or more radio frequency units, such as a remote radio unit (remote radio unit, RRU) 2310 and one or more baseband units (baseband unit, BBU) 2320 (which may also be referred to as digital units (digital unit, DU)). The RRU 2310 may be referred to as a transceiver module, and corresponds to the transceiver module 1220 in FIG. 12, the transceiver module 1320 in FIG. 13, the transceiver module 1620 in FIG. 16, or the transceiver module 1720 in FIG. 17. Optionally, the transceiver module may also be referred to as a transceiver machine, a transceiver circuit, a transceiver, or the like, and may include at least one antenna 2311 and a radio frequency unit 2312. The RRU 2310 is mainly configured to: receive and send radio frequency signals, and perform conversion between a radio frequency signal and a baseband signal, for example, configured to send indication information to a terminal device. The BBU 2310 is mainly configured to: perform baseband processing, control a base station, and the like. The RRU 2310 and the BBU 2320 may be physically disposed together; or may be physically disposed separately, in other words, in a distributed base station.

The BBU 2320 is a control center of the base station; may also be referred to as a processing module; may correspond to the processing module 1210 in FIG. 12, the processing module 1310 in FIG. 13, the processing module 1610 in FIG. 16, or the processing module 1710 in FIG. 17; and is mainly configured to complete a baseband processing function, such as channel coding, multiplexing, modulation, and spectrum spreading. For example, the BBU (the processing module) may be configured to control the base station to perform an operation procedure related to the network device in the foregoing method embodiment, for example, generate the foregoing indication information.

For example, the BBU 2320 may include one or more boards, and the plurality of boards may jointly support a radio access network in a single access standard (for example, an LTE network), or may separately support radio access networks in different access standards (for example, an LTE network, a 5G network, and another network). The BBU 2320 further includes a memory 2321 and a processor 2322. The memory 2321 is configured to store necessary instructions and data. The processor 2322 is configured to control the base station to perform a necessary action, for example, configured to control the base station to perform the operation procedure related to the network device in the foregoing method embodiment. The memory 2321 and the processor 2322 may serve the one or more boards. In other words, a memory and a processor may be disposed on each board, or the plurality of boards may share a same memory and a same processor. In addition, a necessary circuit may be further disposed on each board.

For example, the apparatus 2300 shown in FIG. 23 is mainly a base station. When the network device in this embodiment of this application is a core network device, a structure may also be correspondingly different.

An embodiment of this application provides a first communications system. The first communications system may include the second terminal device in the embodiment shown in any one of FIG. 3A to FIG. 3C to FIG. 6. The second terminal device is, for example, the second terminal device 1000 in FIG. 10.

Optionally, the first communications system may further include the first network device in the embodiment shown in any one of FIG. 3A to FIG. 3C to FIG. 6. The first network device is, for example, the first network device 1200 in FIG. 12.

Optionally, the first communications system may further include the second network device in the embodiment shown in any one of FIG. 3A to FIG. 3C to FIG. 6. The second network device is, for example, the second network device 1300 in FIG. 13.

Optionally, the first communications system may further include the first terminal device in the embodiment shown in any one of FIG. 3A to FIG. 3C to FIG. 6. The first terminal device is, for example, the first terminal device 1100 in FIG. 11.

An embodiment of this application provides a second communications system. The second communications system may include the second terminal device in the embodiment shown in FIG. 7 or the embodiment shown in FIG. 8. The second terminal device is, for example, the second terminal device 1500 in FIG. 15.

Optionally, the first communications system may further include the first network device in the embodiment shown in FIG. 7 or the embodiment shown in FIG. 8. The first network device is, for example, the first network device 1600 in FIG. 16.

Optionally, the first communications system may further include the second network device in the embodiment shown in FIG. 7 or the embodiment shown in FIG. 8. The second network device is, for example, the second network device 1700 in FIG. 17.

Optionally, the first communications system may further include the first terminal device in the embodiment shown in FIG. 7 or the embodiment shown in FIG. 8. The first terminal device is, for example, the first terminal device 1400 in FIG. 14.

An embodiment of this application provides a third communications system. The third communications system may include the first terminal device and the second terminal device in the embodiment shown in FIG. 9. The first terminal device is, for example, the first terminal device 1800 in FIG. 18. The second terminal device is, for example, the second terminal device 1900 in FIG. 19.

The first communications system, the second communications system, and the third communications system may be a same communications system, or may be different communications systems, or any two of the first communications system, the second communications system, and the third communications system may be a same communications system.

An embodiment of this application further provides a computer-readable storage medium. The computer-readable storage medium is configured to store a computer program. When the computer program is executed by a computer, the computer may implement a procedure related to the first terminal device in the embodiment shown in any one of FIG. 3A to FIG. 3C to FIG. 6 in the foregoing method embodiments.

An embodiment of this application further provides a computer-readable storage medium. The computer-readable storage medium is configured to store a computer program. When the computer program is executed by a computer, the computer may implement a procedure related to the second terminal device in the embodiment shown in any one of FIG. 3A to FIG. 3C to FIG. 6 in the foregoing method embodiments.

An embodiment of this application further provides a computer-readable storage medium. The computer-readable storage medium is configured to store a computer program. When the computer program is executed by a computer, the computer may implement a procedure related to the first network device in the embodiment shown in any one of FIG. 3A to FIG. 3C to FIG. 6 in the foregoing method embodiments.

An embodiment of this application further provides a computer-readable storage medium. The computer-readable storage medium is configured to store a computer program. When the computer program is executed by a computer, the computer may implement a procedure related to the second network device in the embodiment shown in any one of FIG. 3A to FIG. 3C to FIG. 6 in the foregoing method embodiments.

An embodiment of this application further provides a computer-readable storage medium. The computer-readable storage medium is configured to store a computer program. When the computer program is executed by a computer, the computer may implement a procedure related to the first terminal device in the embodiment shown in FIG. 7 or the embodiment shown in FIG. 8 in the foregoing method embodiments.

An embodiment of this application further provides a computer-readable storage medium. The computer-readable storage medium is configured to store a computer program. When the computer program is executed by a computer, the computer may implement a procedure related to the second terminal device in the embodiment shown in FIG. 7 or the embodiment shown in FIG. 8 in the foregoing method embodiments.

An embodiment of this application further provides a computer-readable storage medium. The computer-readable storage medium is configured to store a computer program. When the computer program is executed by a computer, the computer may implement a procedure related to the first network device in the embodiment shown in FIG. 7 or the embodiment shown in FIG. 8 in the foregoing method embodiments.

An embodiment of this application further provides a computer-readable storage medium. The computer-readable storage medium is configured to store a computer program. When the computer program is executed by a computer, the computer may implement a procedure related to the second network device in the embodiment shown in FIG. 7 or the embodiment shown in FIG. 8 in the foregoing method embodiments.

An embodiment of this application further provides a computer-readable storage medium. The computer-readable storage medium is configured to store a computer program. When the computer program is executed by a computer, the computer may implement a procedure related to the first terminal device in the embodiment shown in FIG. 9 in the foregoing method embodiments.

An embodiment of this application further provides a computer-readable storage medium. The computer-readable storage medium is configured to store a computer program. When the computer program is executed by a computer, the computer may implement a procedure related to the second terminal device in the embodiment shown in FIG. 9 in the foregoing method embodiments.

An embodiment of this application further provides a computer program product. The computer program product is configured to store a computer program. When the computer program is executed by a computer, the computer may implement a procedure related to the first terminal device in the embodiment shown in any one of FIG. 3A to FIG. 3C to FIG. 6 in the foregoing method embodiments.

An embodiment of this application further provides a computer program product. The computer program product is configured to store a computer program. When the computer program is executed by a computer, the computer may implement a procedure related to the second terminal device in the embodiment shown in any one of FIG. 3A to FIG. 3C to FIG. 6 in the foregoing method embodiments.

An embodiment of this application further provides a computer program product. The computer program product is configured to store a computer program. When the computer program is executed by a computer, the computer may implement a procedure related to the first network device in the embodiment shown in any one of FIG. 3A to FIG. 3C to FIG. 6 in the foregoing method embodiments.

An embodiment of this application further provides a computer program product. The computer program product is configured to store a computer program. When the computer program is executed by a computer, the computer may implement a procedure related to the second network device in the embodiment shown in any one of FIG. 3A to FIG. 3C to FIG. 6 in the foregoing method embodiments.

An embodiment of this application further provides a computer program product. The computer program product is configured to store a computer program. When the computer program is executed by a computer, the computer may implement a procedure related to the first terminal device in the embodiment shown in FIG. 7 or the embodiment shown in FIG. 8 in the foregoing method embodiments.

An embodiment of this application further provides a computer program product. The computer program product is configured to store a computer program. When the computer program is executed by a computer, the computer may implement a procedure related to the second terminal device in the embodiment shown in FIG. 7 or the embodiment shown in FIG. 8 in the foregoing method embodiments.

An embodiment of this application further provides a computer program product. The computer program product is configured to store a computer program. When the computer program is executed by a computer, the computer may implement a procedure related to the first network device in the embodiment shown in FIG. 7 or the embodiment shown in FIG. 8 in the foregoing method embodiments.

An embodiment of this application further provides a computer program product. The computer program product is configured to store a computer program. When the computer program is executed by a computer, the computer may implement a procedure related to the second network device in the embodiment shown in FIG. 7 or the embodiment shown in FIG. 8 in the foregoing method embodiments.

An embodiment of this application further provides a computer program product. The computer program product is configured to store a computer program. When the computer program is executed by a computer, the computer may implement a procedure related to the first terminal device in the embodiment shown in FIG. 9 in the foregoing method embodiments.

An embodiment of this application further provides a computer program product. The computer program product is configured to store a computer program. When the computer program is executed by a computer, the computer may implement a procedure related to the second terminal device in the embodiment shown in FIG. 9 in the foregoing method embodiments.

It should be understood that the processor mentioned in embodiments of this application may be a CPU, or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate, a transistor logic device, a discrete hardware component, or the like. The general-purpose processor may be a microprocessor, or the processor may be any conventional processor, or the like.

It may be understood that the memory mentioned in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is a general-purpose processor, a DSP, an ASIC, an FPGA or another programmable logic device, a discrete gate, a transistor logic device, or a discrete hardware component, the memory (storage module) is integrated into the processor.

It should be noted that the memory described in this specification is intended to include but not limited to these memories and any memory of another appropriate type.

It should be understood that sequence numbers of the foregoing processes do not mean execution sequences in various embodiments of this application. The execution sequences of the processes should be determined based on functions and internal logic of the processes, and should not be construed as any limitation on implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed systems, apparatuses, and methods may be implemented in another manner. For example, the foregoing apparatus embodiment is merely an example. For example, division into units is merely logical function division and may be other division during actual implementation. For example, a plurality of units or components may be combined or integrated into another system, or some features may be ignored or not performed. In addition, the displayed or discussed mutual couplings or direct couplings or communications connections may be implemented by using some interfaces. The indirect couplings or communication connections between the apparatuses or units may be implemented in an electrical form, a mechanical form, or another form.

The units described as separate parts may or may not be physically separate, and parts displayed as units may or may not be physical units, in other words, may be located in one place, or may be distributed on a plurality of network units. Some or all of the units may be selected according to actual requirements to achieve the objectives of the solutions of embodiments.

In addition, function units in embodiments of this application may be integrated into one processing unit, or each of the units may exist alone physically, or two or more units are integrated into one unit.

When the functions are implemented in a form of a software function unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

With reference to the foregoing descriptions, this application further provides the following embodiments:
Embodiment 1: A communications method is provided. The method includes:
   A first terminal device receives a first message from a first network device.
   The first terminal device determines a first resource based on the first message.
   The first terminal device sends data to a second terminal device on the first resource.
   The first terminal device receives, on a second resource from the second terminal device, feedback information corresponding to the data. The second resource is used to receive the feedback information of the data sent by using the first resource.
Embodiment 2: According to the method in Embodiment 1, the first message is used to indicate that the second resource is used to receive the feedback information of the data sent by using the first resource.
Embodiment 3: According to the method in Embodiment 1 or Embodiment 2,
   the first message is used to indicate that there is an association relationship between the second resource and the first resource, and the association relationship indicates that the second resource is used to receive the feedback information of the data sent by using the first resource.
Embodiment 4: According to the method in Embodiment 1, the first message is used to indicate a first resource pool and a second resource pool, there is an association relationship between the first resource pool and the second resource pool, and the association relationship indicates that a resource included in the second resource pool is used to receive feedback information of data sent by using a resource included in the first resource pool.
Embodiment 5: According to the method in Embodiment 4, that the first terminal device determines a first resource includes:
   The first terminal device selects the first resource from the first resource pool.
Embodiment 6: According to the method in Embodiment 4 or Embodiment 5, the method further includes:
   The first terminal device selects the second resource from the second resource pool to receive the feedback information of the data sent by using the first resource.
   The first terminal device sends first indication information to the second terminal device. The first indication information is used to indicate that the second resource is used to send feedback information of data received by using the first resource.
Embodiment 7: A communications method is provided. The method includes:
   A second terminal device receives data from a first terminal device on a first resource.
   The second terminal device sends feedback information corresponding to the data to the first terminal device on a second resource. The second resource is used to receive feedback information of data sent by using the first resource.
Embodiment 8: According to the method in Embodiment 7, the method further includes:
   The second terminal device receives first indication information from the first terminal device. The first indication information is used to indicate the second resource, and the second resource is used to send the feedback information of the data received by using the first resource.
   Alternatively, the second terminal device receives a third message from a second network device. The third message is used to indicate the second resource, the second resource is used to send the feedback information of the data received by using the first resource, and the second terminal device camps on the second network device.
Embodiment 9: According to the method in Embodiment 8,
   the third message is used to indicate that there is an association relationship between the second resource and the first resource, and the association relationship indicates that the second resource is used to send the feedback information of the data received by using the first resource.
Embodiment 10: According to the method in Embodiment 7, the method further includes:
   The second terminal device receives a third message from a second network device. The third message is used to indicate a first resource pool and a second resource pool, there is an association relationship between the first resource pool and the second resource pool, and the association relationship indicates that a resource included in the second resource pool is used to send feedback information of data received by using a resource included in the first resource pool.
   The second terminal device selects the second resource from the second resource pool. The first resource belongs to the first resource pool.
Embodiment 11: A communications method is provided. The method includes:
   A first network device determines a sending resource used by a first terminal device to send data and a feedback resource used by the first terminal device to receive feedback information of the data sent by using the sending resource. The sending resource includes a first resource, and the feedback resource includes a second resource; or the sending resource includes a first resource pool, and the feedback resource includes a second resource pool.
   The first network device sends a first message to the first terminal device. The first message is used to indicate the sending resource, and indicate that the feedback resource is used to receive the feedback information of the data sent by using the sending resource.
Embodiment 12: According to the method in Embodiment 11, the method further includes:
   The first network device sends a fourth message to a second network device. The fourth message is used to indicate the sending resource and the feedback resource, the second network device is a network device on which a second terminal device camps, and the second terminal device is a receive end of the data.
Embodiment 13: According to the method in Embodiment 11,
   the first message is used to indicate that there is an association relationship between the sending resource and the feedback resource, and the association relationship indicates that the feedback resource is used to receive the feedback information of the data sent by using the sending resource.
Embodiment 14: According to the method in Embodiment 11 or Embodiment 13, the method further includes:
   The first network device sends information about the sending resource to a second network device. The information about the sending resource is used to determine information about the feedback resource.
   The first network device receives the information about the feedback resource from the second network device.
Embodiment 15: A communications method is provided. The method includes:
   A second network device determines a feedback resource used by a second terminal device to send feedback information. The feedback resource is used by the second terminal device to send feedback information of data sent by using a sending resource. The sending resource includes a first resource, and the feedback resource includes a second resource; or the sending resource includes a first resource pool, and the feedback resource includes a second resource pool.
   The second network device sends a third message to the second terminal device. The third message is used to indicate that the feedback resource is used to receive the feedback information of the data sent by using the sending resource.
Embodiment 16: According to the method in Embodiment 15, the method further includes:
   The second network device receives a fourth message from a first network device. The fourth message is used to indicate the sending resource and the feedback resource, the first network device is a network device on which a first terminal device camps, and the first terminal device is a transmit end of the data.
Embodiment 17: According to the method in Embodiment 15,
   the third message is used to indicate that there is an association relationship between the sending resource and the feedback resource, and the association relationship indicates that the receiving resource is used to receive the feedback information of the data sent by using the sending resource.
Embodiment 18: According to the method in Embodiment 15 or Embodiment 17, the method further includes:
   The second network device receives information about the sending resource from a first network device. The first network device is a network device on which a first terminal device camps, and the first terminal device is a transmit end of the data.
   The second network device determines information about the feedback resource based on the information about the sending resource.
   The second network device sends the information about the feedback resource to the first network device.
Embodiment 19: A communications method is provided. The method includes:
   A first terminal device sends data to a second terminal device.
   The first terminal device receives, from the second terminal device, feedback information corresponding to the data. The feedback information includes a first identifier corresponding to the data.
Embodiment 20: According to the method in Embodiment 19, the first identifier includes one or more of the following:
   an identifier of the first terminal device;
   a random number; or
   a HARQ process number corresponding to the data.
Embodiment 21: According to the method in Embodiment 20, the first identifier includes the random number, and the method further includes:
   The first terminal device sends the random number corresponding to the data to the second terminal device.
Embodiment 22: A communications method is provided. The method includes:
   A second terminal device receives data from a first terminal device.
   The second terminal device sends feedback information corresponding to the data to the first terminal device. The feedback information includes a first identifier corresponding to the data.
Embodiment 23: According to the method in Embodiment 22, the first identifier includes one or more of the following:
   an identifier of the first terminal device;
   a random number; or
   a HARQ process number corresponding to the data.
Embodiment 24: According to the method in Embodiment 23, the first identifier includes the random number, and the method further includes:
   The second terminal device receives the random number corresponding to the data from the first terminal device.
Embodiment 25: A communications apparatus is provided. The communications apparatus includes:
   a transceiver module, configured to receive a first message from a first network device; and
   a processing module, configured to determine a first resource based on the first message.
   The transceiver module is further configured to send data to a second terminal device on the first resource.
   The transceiver module is further configured to receive, on a second resource from the second terminal device, feedback information corresponding to the data. The second resource is used to receive the feedback information of the data sent by using the first resource.
Embodiment 26: According to the communications apparatus in Embodiment 25, the first message is used to indicate that the second resource is used to receive the feedback information of the data sent by using the first resource.
Embodiment 27: According to the communications apparatus in Embodiment 25 or Embodiment 26, the first message is used to indicate that there is an association relationship between the second resource and the first resource, and the association relationship indicates that the second resource is used to receive the feedback information of the data sent by using the first resource.
Embodiment 28: According to the communications apparatus in Embodiment 27, the first message is used to indicate a first resource pool and a second resource pool, there is an association relationship between the first resource pool and the second resource pool, and the association relationship indicates that a resource included in the second resource pool is used to receive feedback information of data sent by using a resource included in the first resource pool.
Embodiment 29: According to the communications apparatus in Embodiment 28, the processing module is configured to determine the first resource in the following manner:
   selecting the first resource from the first resource pool.
Embodiment 30: According to the communications apparatus in Embodiment 28 or Embodiment 29,
   the processing module is further configured to select the second resource from the second resource pool to receive the feedback information of the data sent by using the first resource; and
   the transceiver module is further configured to send first indication information to the second terminal device, where the first indication information is used to indicate that the second resource is used to send feedback information of data received by using the first resource.
Embodiment 31: A communications apparatus is provided. The communications apparatus includes:
   a transceiver module, configured to receive data from a first terminal device on a first resource; and
   a processing module, configured to determine feedback information corresponding to the data.
   The transceiver module is further configured to send the feedback information to the first terminal device on a second resource. The second resource is used to receive feedback information of data sent by using the first resource.
Embodiment 32: According to the communications apparatus in Embodiment 31, the transceiver module is further configured to:
   receive first indication information from the first terminal device, where the first indication information is used to indicate the second resource, and the second resource is used to send the feedback information of the data received by using the first resource; or
   receive a third message from a second network device, where the third message is used to indicate the second resource, the second resource is used to send the feedback information of the data received by using the first resource, and the second terminal device camps on the second network device.
Embodiment 33: According to the communications apparatus in Embodiment 32,
   the third message is used to indicate that there is an association relationship between the second resource and the first resource, and the association relationship indicates that the second resource is used to send the feedback information of the data received by using the first resource.
Embodiment 34: According to the communications apparatus in Embodiment 31,
   the transceiver module is further configured to receive a third message from a second network device, where the third message is used to indicate a first resource pool and a second resource pool, there is an association relationship between the first resource pool and the second resource pool, and the association relationship indicates that a resource included in the second resource pool is used to send feedback information of data received by using a resource included in the first resource pool; and
   the processing module is further configured to select the second resource from the second resource pool, where the first resource belongs to the first resource pool.
Embodiment 35: A network device is provided. The network device includes:
   a processing module, configured to determine a sending resource used by a first terminal device to send data and a feedback resource used by the first terminal device to receive feedback information of the data sent by using the sending resource, where the sending resource includes a first resource, and the feedback resource includes a second resource; or the sending resource includes a first resource pool, and the feedback resource includes a second resource pool; and
   a transceiver module, configured to send a first message to the first terminal device, where the first message is used to indicate the sending resource, and indicate that the feedback resource is used to receive the feedback information of the data sent by using the sending resource.
Embodiment 36: According to the network device in Embodiment 35, the transceiver module is further configured to send a fourth message to a second network device. The fourth message is used to indicate the sending resource and the feedback resource, the second network device is a network device on which a second terminal device camps, and the second terminal device is a receive end of the data.
Embodiment 37: According to the network device in Embodiment 35,
   the first message is used to indicate that there is an association relationship between the sending resource and the feedback resource, and the association relationship indicates that the feedback resource is used to receive the feedback information of the data sent by using the sending resource.
Embodiment 38: According to the network device in Embodiment 35 or Embodiment 37, the transceiver module is further configured to:
   send information about the sending resource to a second network device, where the information about the sending resource is used to determine information about the feedback resource; and
   receive the information about the feedback resource from the second network device.
Embodiment 39: A network device is provided. The network device includes:
   a processing module, configured to determine a feedback resource used by a second terminal device to send feedback information, where the feedback resource is used by the second terminal device to send feedback information of data sent by using a sending resource; and the sending resource includes a first resource, and the feedback resource includes a second resource; or the sending resource includes a first resource pool, and the feedback resource includes a second resource pool; and
   a transceiver module, configured to send a third message to the second terminal device, where the third message is used to indicate that the feedback resource is used to receive the feedback information of the data sent by using the sending resource.
Embodiment 40: According to the network device in Embodiment 39, the transceiver module is further configured to receive a fourth message from a first network device. The fourth message is used to indicate the sending resource and the feedback resource, the first network device is a network device on which a first terminal device camps, and the first terminal device is a transmit end of the data.
Embodiment 41: According to the network device in Embodiment 39,
   the third message is used to indicate that there is an association relationship between the sending resource and the feedback resource, and the association relationship indicates that the receiving resource is used to receive the feedback information of the data sent by using the sending resource.
Embodiment 42: According to the network device in Embodiment 39 or Embodiment 41,
   the transceiver module is further configured to receive information about the sending resource from a first network device, where the first network device is a network device on which a first terminal device camps, and the first terminal device is a transmit end of the data;
   the processing module is further configured to determine information about the feedback resource based on the information about the sending resource; and
   the transceiver module is further configured to send the information about the feedback resource to the first network device.
Embodiment 43: A communications apparatus is provided. The communications apparatus includes:
   a processing module, configured to determine data; and
   a transceiver module, configured to send the data to a second terminal device.
   The transceiver module is further configured to receive, from the second terminal device, feedback information corresponding to the data. The feedback information includes a first identifier corresponding to the data.
Embodiment 44: According to the communications apparatus in Embodiment 43, the first identifier includes one or more of the following:
   an identifier of the communications apparatus;
   a random number; or
   a HARQ process number corresponding to the data.
Embodiment 45: According to the communications apparatus in Embodiment 44, the first identifier includes the random number, and the transceiver module is further configured to send the random number corresponding to the data to the second terminal device.
Embodiment 46: A communications apparatus is provided. The communications apparatus includes:
   a transceiver module, configured to receive data from a first terminal device; and
   a processing module, configured to determine feedback information corresponding to the data.
   The transceiver module is further configured to send the feedback information to the first terminal device. The feedback information includes a first identifier corresponding to the data.
Embodiment 47: According to the communications apparatus in Embodiment 46, the first identifier includes one or more of the following:
   an identifier of the first terminal device;
   a random number; or
   a HARQ process number corresponding to the data.
Embodiment 48: According to the communications apparatus in Embodiment 47, the first identifier includes the random number, and the transceiver module is further configured to receive the random number corresponding to the data from the first terminal device.
Embodiment 49: A communications apparatus is provided. The communications apparatus includes a processor and a transceiver. The processor and the transceiver are coupled, to perform the method according to any one of Embodiment 1 to Embodiment 6, or the method according to any one of Embodiment 7 to Embodiment 10, or the method according to any one of Embodiment 11 to Embodiment 14, or the method according to any one of Embodiment 15 to Embodiment 18.
Embodiment 50: A communications apparatus is provided. The communications apparatus includes a processor and a transceiver. The processor and the transceiver are coupled, to perform the method according to any one of Embodiment 19 to Embodiment 21 or the method according to any one of Embodiment 22 to Embodiment 24.
Embodiment 51: A chip is provided. The chip includes a processor. When the processor executes instructions, the processor is configured to perform the method according to any one of Embodiment 1 to Embodiment 6, or the method according to any one of Embodiment 7 to Embodiment 10, or the method according to any one of Embodiment 11 to Embodiment 14, or the method according to any one of Embodiment 15 to Embodiment 18. The instructions may be from a memory inside the chip, or may be from a memory outside the chip. Optionally, the chip further includes an input/output circuit.
Embodiment 52: A chip is provided. The chip includes a processor. When the processor executes instructions, the processor is configured to perform the method according to any one of Embodiment 19 to Embodiment 21 or the method according to any one of Embodiment 22 to Embodiment 24. The instructions may be from a memory inside the chip, or may be from a memory outside the chip. Optionally, the chip further includes an input/output circuit.
Embodiment 53: A communications system is provided. The communications system includes the communications apparatus according to any one of Embodiment 25 to Embodiment 30, the communications apparatus according to any one of Embodiment 3 1 to Embodiment 34, the network device according to any one of Embodiment 35 to Embodiment 38, and the network device according to any one of Embodiment 39 to Embodiment 42.
Embodiment 54: A communications system is provided. The communications system includes the communications apparatus according to any one of Embodiment 43 to Embodiment 45 and the communications apparatus according to any one of Embodiment 46 to Embodiment 48.
Embodiment 55: A computer-readable storage medium is provided. The computer-readable storage medium stores a computer program, and when the computer program is run on a computer, the computer is enabled to perform the method according to any one of Embodiment 1 to Embodiment 6, or the method according to any one of Embodiment 7 to Embodiment 10, or the method according to any one of Embodiment 11 to Embodiment 14, or the method according to any one of Embodiment 15 to Embodiment 18.
Embodiment 56: A computer-readable storage medium is provided. The computer-readable storage medium stores a computer program, and when the computer program is run on a computer, the computer is enabled to perform the method according to any one of Embodiment 19 to Embodiment 21 or the method according to any one of Embodiment 22 to Embodiment 24.
Embodiment 57: A computer program product is provided. The computer program product is configured to store a computer program, and when the computer program is run on a computer, the computer is enabled to implement the method according to any one of Embodiment 1 to Embodiment 6, or the method according to any one of Embodiment 7 to Embodiment 10, or the method according to any one of Embodiment 11 to Embodiment 14, or the method according to any one of Embodiment 15 to Embodiment 18.
Embodiment 58: A computer program product is provided. The computer program product is configured to store a computer program, and when the computer program is run on a computer, the computer is enabled to implement the method according to any one of Embodiment 19 to Embodiment 21 or the method according to any one of Embodiment 22 to Embodiment 24.
Embodiment 59: A communications method is provided. The method includes:
   A second terminal device receives a first message when the second terminal device camps on a second network device. The first message is used to indicate the second terminal device to camp on a first network device, and the first network device and the second network device correspond to different PLMNs.
   The second terminal device camps on the first network device.
Embodiment 60: According to the method in Embodiment 59, the receiving a first message includes:
   receiving the first message from the second network device; or
   receiving the first message from a first terminal device, where the first terminal device camps on the first network device; or
   receiving the first message from the first network device.
Embodiment 61: According to the method in Embodiment 60, before the receiving the first message from the second network device, the method further includes:
   The second terminal device sends a request message to the second network device, where the request message is used to request to camp on the first network device; or
   the second terminal device sends a third message to the first network device, where the third message is used to request to camp on the first network device.
Embodiment 62: According to the method in any one of Embodiment 59 to Embodiment 61, that the second terminal device camps on the first network device includes:
   The second terminal device camps on the first network device based on information about the first network device through cell reselection.
Embodiment 63: According to the method in any one of Embodiment 59 to Embodiment 62, the method further includes:
   The second terminal device establishes a sidelink connection to the first terminal device in the first network device.
Embodiment 64: According to the method in any one of Embodiment 59 to Embodiment 63, the first message further includes verification information of the second terminal device, and the verification information of the second terminal device is used to perform verification on the second terminal device.
Embodiment 65: According to the method in Embodiment 64, the method further includes:
   The second terminal device sends a fifth message to the first network device. The fifth message includes the verification information of the second terminal device.
Embodiment 66: A communications method is provided. The method includes:
   A first terminal device receives a second message from a first network device. The second message is used to indicate a second terminal device to camp on the first network device, the second terminal device currently camps on a second network device, and the first network device and the second network device correspond to different PLMNs.
   The first terminal device sends a first message to the second terminal device. The first message is used to indicate the second terminal device to camp on the first network device.
Embodiment 67: According to the method in Embodiment 66, the method further includes:
   The first terminal device sends a third message to the first network device. The third message is used to indicate that the second terminal device camps on the second network device.
Embodiment 68: According to the method in Embodiment 66 or Embodiment 67, the method further includes:
   The first terminal device establishes a sidelink connection to the second terminal device in the first network device.
Embodiment 69: A communications method is provided. The method includes:
   A first network device receives a third message. The third message is used to indicate that a second terminal device camps on a second network device, or is used to indicate that a second terminal device camping on a second network device requests to camp on the first network device, and the first network device and the second network device correspond to different PLMNs.
   The first network device sends a second message. The second message is used to indicate the second terminal device to camp on the first network device.
Embodiment 70: According to the method in Embodiment 69, that a first network device receives a third message includes:
   The first network device receives the third message from a first terminal device; or
   the first network device receives the third message from the second network device; or
   the first network device receives the third message from the second terminal device.
Embodiment 71: According to the method in Embodiment 69 or Embodiment 70, that the first network device sends a second message includes:
   The first network device sends the second message to the first terminal device camping on the first network device; or
   the first network device sends the second message to the second network device.
Embodiment 72: According to the method in any one of Embodiment 69 to Embodiment 71, the method further includes:
   The first network device receives verification information of the second terminal device from the second network device. The verification information of the second terminal device is used to perform verification on the second terminal device.
Embodiment 73: According to the method in Embodiment 72, the method further includes:
   The first network device sends a fourth message to the second network device. The fourth message is used to request to obtain the verification information of the second terminal device.
Embodiment 74: According to the method in Embodiment 72 or Embodiment 73, the method further includes:
   The first network device receives a fifth message from the second terminal device. The fifth message includes verification information of the second terminal device.
   The first network device performs verification based on the verification information of the second terminal device included in the fifth message and the verification information of the second terminal device from the second network device.
   When the verification succeeds, the first network device determines that the second terminal device can access the first network device.
Embodiment 75: A communications method is provided. The method includes:
   A second network device determines that a second terminal device camping on the second network device needs to camp on a first network device. The first network device and the second network device correspond to different PLMNs.
   The second network device sends a first message to the second terminal device. The first message is used to indicate the second terminal device to camp on the first network device.
Embodiment 76: According to the method in Embodiment 75, that a second network device determines that a second terminal device camping on the second network device needs to camp on a first network device includes:
   The second network device receives a second message from the first network device, where the second message is used to indicate the second terminal device to camp on the first network device; or
   the second network device receives a request message from the second terminal device, where the request message is used to request to camp on the first network device.
Embodiment 77: According to the method in Embodiment 75 or Embodiment 76, the method further includes:
   The second network device sends verification information of the second terminal device to the first network device. The verification information of the second terminal device is used to perform verification on the second terminal device.
Embodiment 78: According to the method in Embodiment 77, the method further includes:
   The second network device receives a fourth message from the first network device. The fourth message is used to request to obtain the verification information of the second terminal device.
Embodiment 79: A communications apparatus is provided. The communications apparatus includes:
   a transceiver module, configured to receive a first message when the communications apparatus camps on a second network device, where the first message is used to indicate the communications apparatus to camp on a first network device, and the first network device and the second network device correspond to different PLMNs; and
   a processing module, configured to camp on the first network device.
Embodiment 80: According to the communications apparatus in Embodiment 79, the transceiver module is configured to receive the first message in the following manner:
   receiving the first message from the second network device; or
   receiving the first message from a first terminal device, where the first terminal device camps on the first network device; or
   receiving the first message from the first network device.
Embodiment 81: According to the communications apparatus in Embodiment 80,
   before receiving the first message from the second network device, the transceiver module is further configured to send a request message to the second network device, where the request message is used to request to camp on the first network device; or
   before receiving the first message from the second network device, the transceiver module is further configured to send a third message to the first network device, where the third message is used to request to camp on the first network device.
Embodiment 82: According to the communications apparatus in any one of Embodiment 79 to Embodiment 81, the processing module is configured to enable the communications apparatus to camp on the first network device in the following manner:
   camping on the first network device based on information about the first network device through cell reselection.
Embodiment 83: According to the communications apparatus in any one of Embodiment 79 to Embodiment 82, the processing module is further configured to establish a sidelink connection to the first terminal device in the first network device.
Embodiment 84: According to the communications apparatus in any one of Embodiment 79 to Embodiment 83, the first message further includes verification information of the communications apparatus, and the verification information of the communications apparatus is used to perform verification on the communications apparatus.
Embodiment 85: According to the communications apparatus in Embodiment 84, the transceiver module is further configured to send a fifth message to the first network device. The fifth message includes the verification information of the communications apparatus.
Embodiment 86: A communications apparatus is provided. The communications apparatus includes:
   a transceiver module, configured to receive a second message from a first network device, where the second message is used to indicate a second terminal device to camp on the first network device, the second terminal device currently camps on a second network device, and the first network device and the second network device correspond to different PLMNs; and
   a processing module, configured to determine a first message, where the first message is used to indicate the second terminal device to camp on the first network device.
   The transceiver module is further configured to send the first message to the second terminal device.
Embodiment 87: According to the communications apparatus in Embodiment 86, the transceiver module is further configured to send a third message to the first network device. The third message is used to indicate that the second terminal device camps on the second network device.
Embodiment 88: According to the communications apparatus in Embodiment 86 or Embodiment 87, the processing module is further configured to establish a sidelink connection to the second terminal device in the first network device.
Embodiment 89: A network device is provided. The network device includes:
   a transceiver module, configured to receive a third message, where the third message is used to indicate that a second terminal device camps on a second network device, or is used to indicate that a second terminal device camping on a second network device requests to camp on the network device, and the network device and the second network device correspond to different PLMNs; and
   a processing module, configured to determine a second message, where the second message is used to indicate the second terminal device to camp on the network device.
   The transceiver module is further configured to send the second message.
Embodiment 90: According to the network device in Embodiment 89, the transceiver module is configured to receive the third message in the following manner:
   receiving the third message from a first terminal device; or
   receiving the third message from the second network device; or
   receiving the third message from the second terminal device.
Embodiment 91: According to the network device in Embodiment 89 or Embodiment 90, the transceiver module is configured to send the second message in the following manner:
   sending the second message to the first terminal device camping on the network device; or
   sending the second message to the second network device.
Embodiment 92: According to the network device in any one of Embodiment 89 to Embodiment 91, the transceiver module is further configured to receive verification information of the second terminal device from the second network device. The verification information of the second terminal device is used to perform verification on the second terminal device.
Embodiment 93: According to the network device in Embodiment 92, the transceiver module is further configured to send a fourth message to the second network device. The fourth message is used to request to obtain the verification information of the second terminal device.
Embodiment 94: According to the network device in Embodiment 92 or Embodiment 93,
   the transceiver module is further configured to receive a fifth message from the second terminal device, where the fifth message includes verification information of the second terminal device;
   the processing module is further configured to perform verification based on the verification information of the second terminal device included in the fifth message and the verification information of the second terminal device from the second network device; and
   the processing module is further configured to: when the verification succeeds, determine that the second terminal device can access the network device.
Embodiment 95: A network device is provided. The network device includes:
   a processing module, configured to determine that a second terminal device camping on the network device needs to camp on a first network device, where the first network device and the network device correspond to different PLMNs; and
   a transceiver module, configured to send a first message to the second terminal device, where the first message is used to indicate the second terminal device to camp on the first network device.
Embodiment 96: According to the network device in Embodiment 95, the processing module is configured to determine, in the following manner, that the second terminal device camping on the network device needs to camp on the first network device:
   receiving a second message from the first network device by using the transceiver module, where the second message is used to indicate the second terminal device to camp on the first network device; or
   receiving a request message from the second terminal device by using the transceiver module, where the request message is used to request to camp on the first network device.
Embodiment 97: According to the network device in Embodiment 95 or Embodiment 96, the transceiver module is further configured to send verification information of the second terminal device to the first network device. The verification information of the second terminal device is used to perform verification on the second terminal device.
Embodiment 98: According to the network device in Embodiment 97, the transceiver module is further configured to receive a fourth message from the first network device. The fourth message is used to request to obtain the verification information of the second terminal device.
Embodiment 99: A communications apparatus is provided. The communications apparatus includes a processor and a transceiver. The processor and the transceiver are coupled, to perform the method according to any one of Embodiment 59 to Embodiment 65 or the method according to any one of Embodiment 66 to Embodiment 68.
Embodiment 100: A communications apparatus is provided. The communications apparatus includes a processor and a transceiver. The processor and the transceiver are coupled, to perform the method according to any one of Embodiment 69 to Embodiment 74 or the method according to any one of Embodiment 75 to Embodiment 78.
Embodiment 101: A chip is provided. The chip includes a processor. When the processor executes instructions, the processor is configured to perform the method according to any one of Embodiment 59 to Embodiment 65, or the method according to any one of Embodiment 66 to Embodiment 68, or the method according to any one of Embodiment 69 to Embodiment 74, or the method according to any one of Embodiment 75 to Embodiment 78. The instructions may be from a memory inside the chip, or may be from a memory outside the chip. Optionally, the chip further includes an input/output circuit.
Embodiment 102: A communications system is provided. The communications system includes the communications apparatus according to any one of Embodiment 79 to Embodiment 85, the communications apparatus according to any one of Embodiment 86 to Embodiment 88, the network device according to any one of Embodiment 89 to Embodiment 94, and the network device according to any one of Embodiment 95 to Embodiment 98.
Embodiment 103: A computer-readable storage medium is provided. The computer-readable storage medium stores a computer program, and when the computer program is run on a computer, the computer is enabled to perform the method according to any one of Embodiment 59 to Embodiment 65, or the method according to any one of Embodiment 66 to Embodiment 68, or the method according to any one of Embodiment 69 to Embodiment 74, or the method according to any one of Embodiment 75 to Embodiment 78.
Embodiment 104: A computer program product is provided. The computer program product is configured to store a computer program, and when the computer program is run on a computer, the computer is enabled to implement the method according to any one of Embodiment 59 to Embodiment 65, or the method according to any one of Embodiment 66 to Embodiment 68, or the method according to any one of Embodiment 69 to Embodiment 74, or the method according to any one of Embodiment 75 to Embodiment 78.

Although this application is described with reference to embodiments herein, a person skilled in the art may understand and implement another variation of the disclosed embodiments by viewing the accompanying drawings, disclosed content, and the appended claims. In the claims, a word "comprising" (comprising) does not exclude another component or another step, and "a" or "one" does not exclude a case of plurality. A single processor or another unit may implement several functions enumerated in the claims. Some measures are recorded in dependent claims that are different from each other, but this does not mean that these measures cannot be combined to produce a great effect.

## Claims

1. A communications method, comprising:
receiving a first message when a second terminal device camps on a second network device, wherein the first message is used to indicate the second terminal device to camp on a first network device, and the first network device and the second network device correspond to different PLMNs; and
camping, by the second terminal device, on the first network device.

2. The method according to claim 1, wherein the receiving a first message comprises:
receiving the first message from the second network device; or
receiving the first message from a first terminal device, wherein the first terminal device camps on the first network device; or
receiving the first message from the first network device.

3. The method according to claim 2, wherein before the receiving the first message from the second network device, the method further comprises:
sending, by the second terminal device, a request message to the second network device, wherein the request message is used to request to camp on the first network device; or
sending, by the second terminal device, a third message to the first network device, wherein the third message is used to request to camp on the first network device.

4. The method according to any one of claims 1 to 3, wherein the camping, by the second terminal device, on the first network device comprises:
camping, by the second terminal device, on the first network device based on information about the first network device through cell reselection.

5. The method according to any one of claims 1 to 4, wherein the method further comprises:
establishing, by the second terminal device, a sidelink connection to the first terminal device in the first network device.

6. The method according to any one of claims 1 to 5, wherein the first message further comprises verification information of the second terminal device, and the verification information of the second terminal device is used to perform verification on the second terminal device.

7. The method according to claim 6, wherein the method further comprises:
sending, by the second terminal device, a fifth message to the first network device, wherein the fifth message comprises the verification information of the second terminal device.

8. A communications method, comprising:
receiving, by a first terminal device, a second message from a first network device, wherein the second message is used to indicate a second terminal device to camp on the first network device, the second terminal device currently camps on a second network device, and the first network device and the second network device correspond to different PLMNs; and
sending, by the first terminal device, a first message to the second terminal device, wherein the first message is used to indicate the second terminal device to camp on the first network device.

9. The method according to claim 8, wherein the method further comprises:
sending, by the first terminal device, a third message to the first network device, wherein the third message is used to indicate that the second terminal device camps on the second network device.

10. The method according to claim 8 or 9, wherein the method further comprises:
establishing, by the first terminal device, a sidelink connection to the second terminal device in the first network device.

11. A communications method, comprising:
receiving, by a first network device, a third message, wherein the third message is used to indicate that a second terminal device camps on a second network device, or is used to indicate that a second terminal device camping on a second network device requests to camp on the first network device, and the first network device and the second network device correspond to different PLMNs; and
sending, by the first network device, a second message, wherein the second message is used to indicate the second terminal device to camp on the first network device.

12. The method according to claim 11, wherein the receiving, by a first network device, a third message comprises:
receiving, by the first network device, the third message from a first terminal device; or
receiving, by the first network device, the third message from the second network device; or
receiving, by the first network device, the third message from the second terminal device.

13. The method according to claim 11 or 12, wherein the sending, by the first network device, a second message comprises:
sending, by the first network device, the second message to the first terminal device camping on the first network device; or
sending, by the first network device, the second message to the second network device.

14. The method according to any one of claims 11 to 13, wherein the method further comprises:
receiving, by the first network device, verification information of the second terminal device from the second network device, wherein the verification information of the second terminal device is used to perform verification on the second terminal device.

15. The method according to claim 14, wherein the method further comprises:
sending, by the first network device, a fourth message to the second network device, wherein the fourth message is used to request to obtain the verification information of the second terminal device.

16. The method according to claim 14 or 15, wherein the method further comprises:
receiving, by the first network device, a fifth message from the second terminal device, wherein the fifth message comprises verification information of the second terminal device;
performing, by the first network device, verification based on the verification information of the second terminal device comprised in the fifth message and the verification information of the second terminal device from the second network device; and
when the verification succeeds, determining, by the first network device, that the second terminal device can access the first network device.

17. A communications method, comprising:
determining, by a second network device, that a second terminal device camping on the second network device needs to camp on a first network device, wherein the first network device and the second network device correspond to different PLMNs; and
sending, by the second network device, a first message to the second terminal device, wherein the first message is used to indicate the second terminal device to camp on the first network device.

18. The method according to claim 17, wherein the determining, by a second network device, that a second terminal device camping on the second network device needs to camp on a first network device comprises:
receiving, by the second network device, a second message from the first network device, wherein the second message is used to indicate the second terminal device to camp on the first network device; or
receiving, by the second network device, a request message from the second terminal device, wherein the request message is used to request to camp on the first network device.

19. The method according to claim 17 or 18, wherein the method further comprises:
sending, by the second network device, verification information of the second terminal device to the first network device, wherein the verification information of the second terminal device is used to perform verification on the second terminal device.

20. The method according to claim 19, wherein the method further comprises:
receiving, by the second network device, a fourth message from the first network device, wherein the fourth message is used to request to obtain the verification information of the second terminal device.

21. A communications apparatus, comprising a transceiver module and a processing module, wherein the transceiver module is coupled to the processing module, to perform the method according to any one of claims 1 to 7 or the method according to any one of claims 8 to 10.

22. A network device, comprising a transceiver module and a processing module, wherein the transceiver module is coupled to the processing module, to perform the method according to any one of claims 11 to 16 or the method according to any one of claims 17 to 20.

23. A computer-readable storage medium, wherein the computer-readable storage medium stores a computer program, and when the computer program is run on a computer, the computer is enabled to perform the method according to any one of claims 1 to 7, or the method according to any one of claims 8 to 10, or the method according to any one of claims 11 to 16, or the method according to any one of claims 17 to 20.
